# EUROPEAN PATENT APPLICATION

(11) **EP 3 825 868 A1**
(43) Date of publication of application: **26.05.2021**
(21) Application number: 20208362.2
(22) Date of filing: 18.11.2020
(51) Int. Cl.: G06F 16/33

(54) **DISPLAY APPARATUS, DISPLAY METHOD, AND PROGRAM**

(30) Priority: 20.11.2019 JP 2019209913; 11.11.2020 JP 2020188229
(71) Applicant: Ricoh Company, Ltd., Tokyo 143-8555 (JP)
(72) Inventor: NAKANO, Chika, Tokyo, 143-8555 (JP)
(74) Representative: SSM Sandmair

(57) **Abstract**

A display apparatus is provided. The display apparatus includes a reception unit (21) configured to receive an input of handwritten data, a conversion unit (26) configured to convert the handwritten data received by the reception unit into one or more character strings, a display unit (22) configured to display, in a case where the character strings converted by the conversion unit include a specific character, one or more font sets corresponding to the specific character string. One of the font sets includes a plurality of font styles, and the display apparatus further includes a display control unit (23) configured to display a character using a font style included in a font set of the font sets displayed by the display unit, the font set being selected according to an operation of a user via the reception unit.

## Description

### [Technical Field]

The present invention relates to a display apparatus, a display method, and a program.

### [Background Art]

In some cases, a user can select a font on a display apparatus that can enter characters, such as a word processor. A font is a set of characters with a uniform design.

Further, some display apparatuses display data that is handwritten on a touch panel with a pen or finger. A display apparatus with a relatively large touch panel is disposed in a conference room and used as an electronic blackboard by a plurality of users (see, for example, Patent Document 1). Patent Document 1 discloses a technique for improving the accuracy of retrieving icons by handwritten strokes.

### [Citation List]

### [Patent Document]

[Patent Document 1] Japanese Unexamined Patent Application Publication No. 2010-134876

### [Summary of Invention]

### [Technical Problem]

However, conventional display apparatuses have a problem of being unable to change fonts according to a specific character of handwritten data handwritten by a user. For example, when selecting a font name of a character string based on the handwritten data, the user must have an image of what the font is, so if the user does not have such an image, it is difficult to select a desired font.

It is an object of the present invention to provide a display apparatus that makes it easy to select a character font according to a specific character of handwritten data in view of the above-described problems.

### [Solution to Problem]

In view of the above-described problems, the present invention provides a display apparatus that includes a reception unit configured to receive an input of handwritten data; a conversion unit configured to convert the handwritten data received by the reception unit into one or more character strings; and a display unit configured to display, in a case where the one or more character strings converted by the conversion unit include a specific character string, one or more font sets corresponding to the specific character string. One of the font sets includes a plurality of font styles, and, the display apparatus further includes a display control unit configured to display a character using a font style included in a font set of the font sets displayed by the display unit, the font set being selected according to an operation of a user via the reception unit.

### [Advantageous Effects of Invention]

The present invention provides a display apparatus that makes it easy to select a character font according to a specific character of handwritten data.

### [Brief Description of the Drawings]

Fig. 1 is a drawing illustrating an operation or process of switching fonts of a display apparatus.
Fig. 2 is a drawing illustrating an example of a handwritten signboard (display apparatus) in which characters are entered in a font set that is set according to a work (job).
Fig. 3 is a drawing illustrating an example of a perspective view of a pen.
Fig. 4 is a drawing illustrating an overall configuration diagram of a display apparatus.
Fig. 5 is a drawing illustrating an example of a hardware structure of a display apparatus.
Fig. 6A is a drawing illustrating functions of a display apparatus and a pen.
Fig. 6B is a drawing illustrating functions of a display apparatus and a pen.
Fig. 7A is a drawing illustrating an example of defined control data.
FIG. 7B is a drawing illustrating an example of defined control data for each use scene.
FIG. 7C is a drawing illustrating an example of defined control data for each use scene.
Fig. 8 is a drawing illustrating an example of dictionary data of a handwriting recognition dictionary unit.
Fig. 9 is a drawing illustrating an example of dictionary data of a character string conversion dictionary unit.
Fig. 10 is a drawing illustrating an example of dictionary data of a predictive conversion dictionary unit.
Figure 11A is a drawing illustrating an example of operation command definition data.
Fig. 11B is a drawing illustrating an example of system definition data.
Fig. 12 is a drawing illustrating an example of file list display data displayed in a display unit.
Fig. 13 is a drawing illustrating an example of operation command definition data when there is a selected object selected by a handwritten object.
Fig. 14 is a drawing illustrating an example of user defined data retained by an operation command definition unit.
Fig. 15 is a drawing illustrating an example of handwritten signature data retained by a handwritten signature data storage unit.
Fig. 16 is a drawing illustrating an example of handwritten input storage data stored in a handwritten input storage unit.
Fig. 17A is a drawing illustrating pen ID control data stored in a pen ID control data storage unit.
Fig. 17B is a drawing illustrating positions of users.
Fig. 18 is a drawing illustrating an example of color definition data.
Fig. 19A is a drawing illustrating examples of data, in which black and white emphasis is displayed, and data, in which a color display method is used for displaying the data using the color definition data in Fig. 18.
Fig. 19B is a drawing illustrating examples of data, in which black and white emphasis is displayed, and data, in which a color display method is used for displaying the data using the color definition data in Fig. 18.
Fig. 20 is an example of pen color selection button definition data.
Fig. 21A is a drawing illustrating an example of a pen color selection button displayed on a display.
Fig. 21B is a drawing illustrating an example of a pen color selection button displayed on a display.
Fig. 22 is a drawing illustrating an example of work-specific font selection button definition data.
Fig. 23A is a drawing illustrating an example of work-specific font selection button definition data displayed on a display.
Fig. 23B is a drawing illustrating an example of work-specific font selection button definition data displayed on a display.
Fig. 23C is a drawing illustrating an example of work-specific font selection button definition data displayed on a display.
Fig. 23D is a drawing illustrating an example of work-specific font selection button definition data displayed on a display.
Fig. 24 is a drawing illustrating examples of an operation guide and selectable candidates displayed by the operation guide.
Fig. 25A is an example of a drawing illustrating a specification example of a selected object.
Fig. 25B is an example of a drawing illustrating a specification example of a selected object.
Fig. 25C is an example of a drawing illustrating a specification example of a selected object.
Fig. 25D is an example of a drawing illustrating a specification example of a selected object.
Fig. 26A is a drawing illustrating an example of displaying operation command candidates based on the operation command definition data when there is a handwritten object.
Fig. 26B is a drawing illustrating an example of displaying operation command candidates based on the operation command definition data when there is a handwritten object.
Fig. 27A is a drawing illustrating an example of displaying operation command candidates based on the operation command definition data when there is a handwritten object.
Fig. 27B is a drawing illustrating an example of displaying operation command candidates based on the operation command definition data when there is a handwritten object.
Fig. 28A is an example of a drawing illustrating an input method of angle information.
Fig. 28B is an example of a drawing illustrating an input method of angle information.
Fig. 28C is an example of a drawing illustrating an input method of angle information.
Fig. 29A is a drawing illustrating a method of registering handwritten signature data.
Fig. 29B is a drawing illustrating a method of registering handwritten signature data.
Fig. 29C is a drawing illustrating a method of registering handwritten signature data.
Fig. 30 is a drawing illustrating an example of an operation guide displayed when a user handwrites "suzuki" in Japanese which is handwritten signature data registered by the user.
Fig. 31A is a drawing illustrating a method of changing user defined data.
Fig. 31B is a drawing illustrating a method of changing user defined data.
Fig. 32 is an example of a process of displaying a character string candidate and an operation command candidate by the display apparatus (Part 1).
Fig. 33 is an example of a process of displaying a character string candidate and an operation command candidate by the display apparatus (Part 2).
Fig. 34 is an example of a process of displaying a character string candidate and an operation command candidate by the display apparatus (Part 3).
Fig. 35 is an example of a process of displaying a character string candidate and an operation command candidate by the display apparatus (Part 4).
Fig. 36 is an example of a process of displaying a character string candidate and an operation command candidate by the display apparatus (Part 5).
Fig. 37 is an example of a process of displaying a character string candidate and an operation command candidate by the display apparatus (Part 6).
Fig. 38 is an example of a process of displaying a character string candidate and an operation command candidate by the display apparatus (Part 7).
Fig. 39 is an example of a process of displaying a character string candidate and an operation command candidate by the display apparatus (Part 8).
Fig. 40 is a drawing illustrating an example of an operation guide displayed when a user handwrites "food" in Japanese "katakana" character.
Fig. 41 is an example of a flowchart illustrating a procedure for storing pen ID control data according to an execution of an operation command.
Fig. 42 is an example of a transition diagram of pen ID control data.
Fig. 43 is a drawing illustrating an example of an operation guide when handwritten input is performed in a state in which a font set "FoodMenu" is set in the pen ID control data.
Fig. 44 is an example of a flowchart illustrating a procedure in which a handwritten input display control unit displays a character string object.
Fig. 45 is a drawing illustrating an example of an operation guide displayed when "construction" is handwritten in Japanese.
Fig. 46 is an example of a flowchart illustrating a procedure for storing pen ID control data according to an execution of an operation command.
Fig. 47 is an example of a transition diagram of pen ID control data.
Fig. 48 is a drawing illustrating an example of an operation guide when handwritten input is performed in a state in which a font set "Construction1" is set in the pen ID control data.
Fig. 49 is an example of a flowchart illustrating a procedure in which a handwritten input display control unit displays a character string object.
Fig. 50A is a drawing illustrating an example of displaying a character string object using a business-specific font set.
Fig. 50B is a drawing illustrating an example of displaying a character string object using a business-specific font set.
Fig. 51 is an example of a flowchart illustrating a procedure for storing pen ID control data by pressing a work-specific font set selection button.
Fig. 52 is a drawing illustrating an example of an operation guide in which a list of fonts is displayed as an operation command from a handwritten object, "Font" in Japanese.
Fig. 53A is a drawing illustrating an example of an operation guide in which a list of fonts is displayed as an operation command from a handwritten object, "Meilio" or "Ming" in Japanese. Fig. 53B is a drawing illustrating an example of an operation guide in which a list of fonts is displayed as an operation command from a handwritten object, "Meilio" or "Ming" in Japanese.
Fig. 54A is a drawing illustrating an example of an operation guide in which a list of fonts is displayed as an operation command from a handwritten object, "cafe" in Japanese.
Fig. 54B is a drawing illustrating an example of an operation guide in which a list of fonts is displayed as an operation command from a handwritten object, "cafe" in Japanese.
Fig. 55 is a drawing illustrating an example of an operation guide in which a list of fonts is displayed as an operation command from a handwritten object, "heading" in Japanese.
Fig. 56 is a drawing illustrating an example of an operation guide in which a list of fonts is displayed as an operation command from a handwritten object, "cute" in Japanese.
Fig. 57A is a drawing illustrating an example of an operation guide in which a list of fonts is displayed as an operation command from a handwritten object, "highlight (emphasis)" in Japanese.
Fig. 57B is a drawing illustrating an example of an operation guide in which a list of fonts is displayed as an operation command from a handwritten object, "highlight (emphasis)" in Japanese.
Fig. 58 is a drawing illustrating an example of an operation guide in which a list of fonts is displayed as an operation command from a handwritten object, "cafe".
Fig. 59 is a drawing illustrating an example of an operation guide in which a list of fonts is displayed as an operation command from a handwritten object, "Font" in Japanese.
Fig. 60 is a drawing illustrating an operation or a process of switching fonts by a display apparatus in a case of English conversion;
Fig. 61 is a drawing illustrating an example of a handwritten signboard (display apparatus) in which characters are entered in a font set set according to work in a case of English conversion.
Fig. 62 is a drawing illustrating an example of defined control data in English conversion.
Fig. 63 is a drawing illustrating an example of defined control data for each use scene in English conversion.
Fig. 64 is a drawing illustrating an example of defined control data for each use scene in English conversion.
Fig. 65 is a drawing illustrating an example of dictionary data of a handwriting recognition dictionary unit in English conversion.
Fig. 66 is a drawing illustrating an example of dictionary data of a character string conversion dictionary unit in English conversion.
Fig. 67 is a drawing illustrating an example of dictionary data of a predictive conversion dictionary unit in English conversion.
Fig. 68A is a drawing illustrating an example of operation command definition data when there is no selected object in case of English conversion.
Fig. 68B is a drawing illustrating an example of system definition data in English conversion.
Fig. 69A is a drawing illustrating data, in which black and white emphasis is displayed, and data, in which a color display method is used for displaying the data, using the color definition data in Fig. 18 in case of English conversion.
Fig. 69B is a drawing illustrating data, in which black and white emphasis is displayed, and data, in which a color display method is used for displaying the data, using the color definition data in Fig. 18 in case of English conversion.
Fig. 70 is an example of pen color selection button definition data for English conversion.
Fig. 71A is a drawing illustrating an example of a pen color selection button displayed on a display in English conversion.
Fig. 71B is a drawing illustrating an example of a pen color selection button displayed on a display in English conversion.
Fig. 72 is a drawing illustrating an example of a selectable candidate displayed by an operation guide and an operation guide in the case of English conversion.
Fig. 73 is a drawing illustrating an example of an operation guide displayed when a user handwrites "food" in English conversion.
Fig. 74 is an example of a transition diagram of pen ID control data in English conversion.
Fig. 75 is a drawing illustrating an example of an operation guide when handwritten input is performed in a state in which a font set "FoodMenu" is set in the pen ID control data, in English conversion.
Fig. 76 is a drawing illustrating an example of an operation guide displayed when a user handwrites "construction" in English conversion.
Fig. 77 is an example of a transition diagram of pen ID control data in English conversion.
Fig. 78 is a drawing illustrating an example of an operation guide when handwritten input is performed in a state in which a font set "Construction1" is set in the pen ID control data, in English conversion.
Fig. 79A is a drawing illustrating an example of displaying a character string object using a business-specific font set.
Fig. 79B is a drawing illustrating an example of displaying a character string object using a business-specific font set.
Fig. 80 is a drawing illustrating an example of an operation guide in which a list of fonts is displayed as an operation command from a handwritten object, "font" in English conversion.
Fig. 81A is a drawing illustrating an example of an operation guide in which a list of fonts is displayed as an operation command from a handwritten object such as "Meiryo" or "Serif" in English conversion.
Fig. 81B is a drawing illustrating an example of an operation guide in which a list of fonts is displayed as an operation command from a handwritten object such as "Meiryo" or "Serif" in English conversion.
Fig. 82A is a drawing illustrating an example of an operation guide in which a list of fonts is displayed as an operation command from a handwritten object, "cafe" in English conversion.
Fig. 82B is a drawing illustrating an example of an operation guide in which a list of fonts is displayed as an operation command from a handwritten object, "cafe" in English conversion.
Fig. 83 is a drawing illustrating an example of an operation guide in which a list of fonts is displayed as an operation command from a handwritten object, "Heading" in English conversion.
Fig. 84 is a drawing illustrating an example of an operation guide in which a list of fonts is displayed as an operation command from a handwritten object, "cute" in English conversion.
Fig. 85A is a drawing illustrating an example of an operation guide in which a list of fonts is displayed as an operation command from a handwritten object, "emphasis" in English conversion. Fig. 85B is a drawing illustrating an example of an operation guide in which a list of fonts is displayed as an operation command from a handwritten object, "emphasis" in English conversion.
Fig. 86 is a drawing illustrating an example of an operation guide in which a list of fonts is displayed as an operation command from a handwritten object, "cafe" in English conversion.
Fig. 87 is a drawing illustrating an example of an operation guide in which a list of fonts is displayed as an operation command from a handwritten object, "font" in English conversion.
Fig. 88 is a drawing illustrating another configuration example of a display apparatus.
Fig. 89 is a drawing illustrating another configuration example of a display apparatus.
Fig. 90 is a drawing illustrating another configuration example of a display apparatus.
Fig. 91 is a drawing illustrating another configuration example of a display apparatus.

### [Description of Embodiments]

Hereinafter, as an example of an embodiment of the present invention, a display apparatus and a display method performed by the display apparatus will be described with reference to the drawings.

### [Embodiment 1]

### <Example of font selection of display apparatus in this embodiment>

For example, there may be a handwritten menu in a shop. The handwritten menu is a handwritten version of a recommended menu for the day, and it is preferable for the handwritten menu to be written by those with some degree of skill, such as a design sense. In other words, a handwritten menu is not something that can be written by anybody. With respect to the above, because it is possible for the display apparatus according to an embodiment of the present invention to perform character recognition on handwritten data, anyone can enter and display clean text. However, because such menus are related to the shop's brand image, it is preferable to display letters etc., in fonts suitable for the shop's atmosphere, restaurant genre, etc.

However, there is a problem that the shop clerk does not know which fonts to choose as fonts suitable for the shop's brand image. Typical word processing software displays a font name in the font style, allowing users to select the font, but the font style does not necessarily allow users to select the font that is suitable for the shop's brand image. In addition, it is not easy to choose a font that matches the shop's brand image because he or she does not know which font is suitable for the shop's brand image in the first place.

Accordingly, a display apparatus of an embodiment of the present invention enables a user to select a work or business type so that a font set suitable for the image of the work or the business type is automatically selected. A font set is a set of multiple fonts. Further, the font in the font set can be switched according to the size of characters that are handwritten by the user.

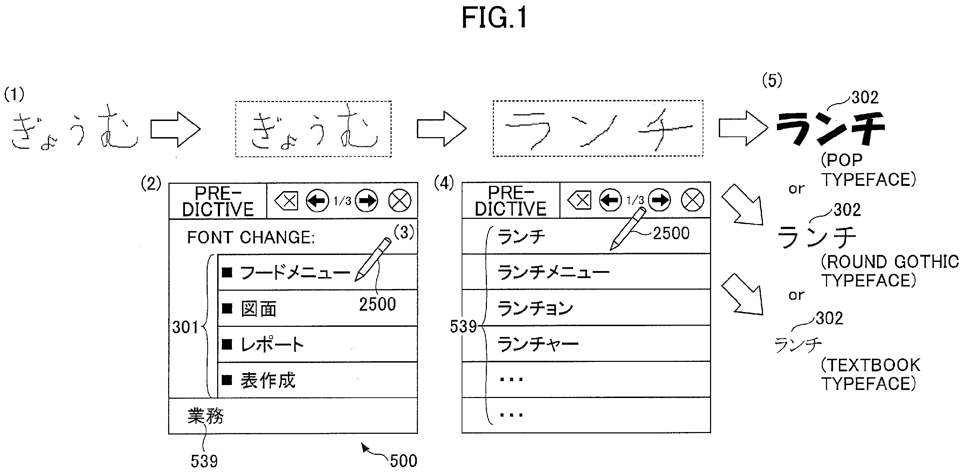

Fig. 1 is a drawing illustrating an operation or a process of switching the font of the display apparatus according to an embodiment of the present invention.
(1) A user handwrites a predefined keyword. In Fig. 1, "work" is handwritten in Japanese ("hiragana" character).
(2) The display apparatus determines that "work" in Japanese is an operation command to be described below, and displays choices 301 of work (the "food menu," "drawing," "report," and "table creation," which are operation commands), for which fonts are prepared, and character string candidates 539. An operation command is a command executed by the display apparatus. The display apparatus performs a process according to the command.
(3) The user selects a work in which handwritten data is used from the choices 301. In Fig. 1, "food menu" is selected. According to the above operation, a font set called food menu it set to pen ID control data (described later) associated with a pen 2500 retained by the user. The font set contains multiple fonts, and a font contains a font style (a font style is a font design) (multiple font styles are included in the font set).
(4) An operation guide 500 is deleted temporarily due to selection of the work, and a character string candidate 539 is displayed when the user enters handwritten data. In Fig. 1, the word " 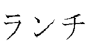 " ("lunch") is handwritten, and the string candidates 539 including " 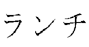 " ("lunch"), " 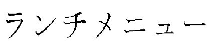 " ("lunch menu"), " 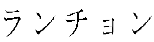 " ("luncheon"), and " 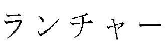 " ("launcher") are displayed.
(5) When a user selects " 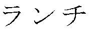 " ("lunch"), the display apparatus displays the text data " 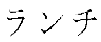 " ("lunch") (character string object 302, which will be described later) with one of the fonts of the font set available for the work selected in (3). The display apparatus, for example, switches fonts for the character string object 302 (text data) of " 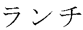 " ("lunch") depending on the character size of the handwritten " 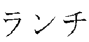 " ("lunch"). This is only an example, but the display apparatus switches fonts as follows.

Small: textbook typeface
Medium: round Gothic typeface
Large: pop typeface

As described above, it is possible for the display apparatus to perform displaying by automatically switching fonts from the font set depending on the size of the characters that are handwritten by the user.

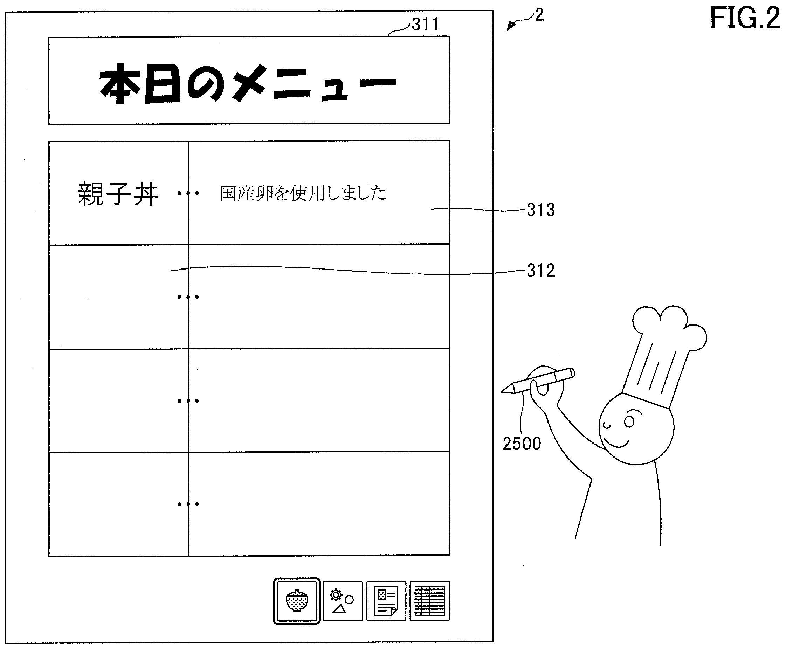

Fig. 2 illustrates an example of a display of characters displayed in a font set that is set according to the work (job) when the display apparatus is used as a handwritten signboard. The handwritten signboard has three areas: a heading field 311, a menu field 312, and a description field 313. Boundaries that divide areas are also handwritten by the user, but it is not necessary to be divided into areas. The user writes a large character in the heading field 311, a medium character in the menu field 312, and a small character in the description field 313 in a state in which a font set of "food menu" is set to the pen ID control data that is associated with the pen 2500. Accordingly, the characters in the heading field 311 are displayed in pop typeface, the characters in the menu field 312 are displayed in round Gothic typeface, and the characters in the description field 313 are displayed in textbook typeface.

As described above, it is possible for a user to display characters by selecting a work of the user to switch the font set to a font set (a set of fonts including a plurality of fonts) suitable for the image of the work. Further, it is possible to display characters with a font suitable for the character size from the font set suitable for the work, by adjusting the size of characters when the user handwrites the characters. It is not necessary for a user to choose fonts directly, and it is not necessary for a user to study what fonts fit the shop's brand image. As described above, it is possible for a display apparatus according to an embodiment of the present invention to improve operability when selecting a font.

It is noted that, the display apparatus can be used not only in the shop (store) but also in a hospital and other facilities for displaying information, at a construction site for displaying legal information, at a factory for displaying cautions and work contents, by being used in a way in which the display apparatus plays a bulletin board type of a role. The display apparatus can be used not only as a bulletin board but also as an electronic blackboard in which the user enters characters. Further, the display apparatus is useful in a case in which the font is switched to a font suitable for the work (job, task) of a department where the drawing is to be displayed.

### <Terminology>

Handwritten data is data that shows, as a trajectory, a sequence of coordinate points on a display on which a user has continuously moved an input unit. Further, a series of operations in which the user presses the input unit on the display, moves it continuously, and then moves it away from the display is called a stroke, and the data handwritten by the stroke is called stroke data. The handwritten data includes one or more stroke data items.

An input unit may be a unit that allows handwriting by specifying the coordinates on a touch panel. For example, a pen, a human finger, a hand, a rod-like member, or the like, is included. Further, a sight input device may be included. Handwritten data is data that shows, as a trajectory, a sequence of coordinate points on a touch panel in which the user has continuously moved the input unit. Further, a stroke is a series of operations in which the user presses the input unit on the touch panel, moves it continuously, and then releases it from the touch panel. Data handwritten by the stroke is referred to as stroke data. Handwritten data includes one or more stroke data items. Handwritten input indicates that handwritten data is entered by the user.

The handwritten data may refer to not only the handwritten data itself, but also the text data converted from the handwritten data by a character recognition, the stamp displayed as a predetermined character or mark such as " 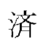 "("finished"), the shape of a circle or a star, the data displayed based on the user's operation such as a straight line, etc.

A font set refers to a set of fonts including multiple fonts. A font is a typeface of a character design (design is an outer appearance, or the like) used by a computer. A font style refers to this design. Each font has a font style.

Characters displayed in fonts include not only Japanese but also alphabetic characters. In addition, symbols such as %, &, and numbers may also be displayed in the set font. In addition, triangles, circles, and other shapes may be displayed in the set font.

Handwritten input originated data refers to data entered through handwriting on a touch panel. The handwritten input originated data includes the data that remains as handwritten data after it is entered, and includes the data that is converted to text data. In addition, when data is obtained from an external apparatus, information indicating that the data is handwritten input originated data is not lost. The handwritten input originated data may include text data converted by character recognition, as well as data converted based on user operations such as stamps displayed as fixed characters or marks such as "completed" or "confidential", shapes such as circles and stars, straight lines, etc.

### <Example of an appearance of a pen>

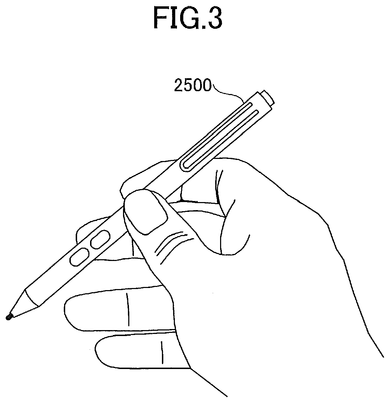

Fig. 3 is a drawing illustrating an example of a perspective view of a pen 2500. Figure 3 illustrates an example of a multi-functional pen 2500. The pen 2500, which has a built-in power supply and can send instructions to a display apparatus 2, is called an active pen (a pen without a built-in power supply is called a passive pen). The pen 2500 of FIG. 3 has one physical switch on the tip of the pen, one physical switch on the bottom of the pen, and two physical switches on the side of the pen. The switch on the tip of the pen is for writing, the switch on the bottom of the pen is for erasing, and the switches on the side of the pen are for assigning user functions. In an embodiment of the present invention, the pen 2500 further includes a non-volatile memory that stores a PenId that is unique to the other pens. The PenId is identification information of a pen 2500.

The operation procedure of the display apparatus 2 by the user can be reduced by using a pen with a switch. The pen with a switch mainly refers to an active pen. However, a passive pen with electromagnetic induction, which does not have a built-in power supply but generates power using LC circuit, may also be included as the pen with a switch. An optical pen with a switch, an infrared pen with a switch, and a capacitance pen with a switch, are active pens.

It should be noted that it is assumed that the hardware configuration of the pen 2500 is the same as that of a general control method including a communication function and a microcomputer. The pen 2500 may be an electromagnetic induction type, an active electrostatic coupling type, or the like. In addition, the pen 2500 may have functions such as pen pressure detection, tilt detection, and a hover function (indicating the cursor before the pen touches a touch panel).

It is noted that it is assumed in an embodiment of the present invention that four pens 2500 are provided. When the four pens 2500 are indicated separately, they are referred to as "pen 1, pen 2, pen 3, pen 4." It is noted, however, that the number of pens is not limited to four and may be one to three or five or more.

### <Overall configuration of apparatus>

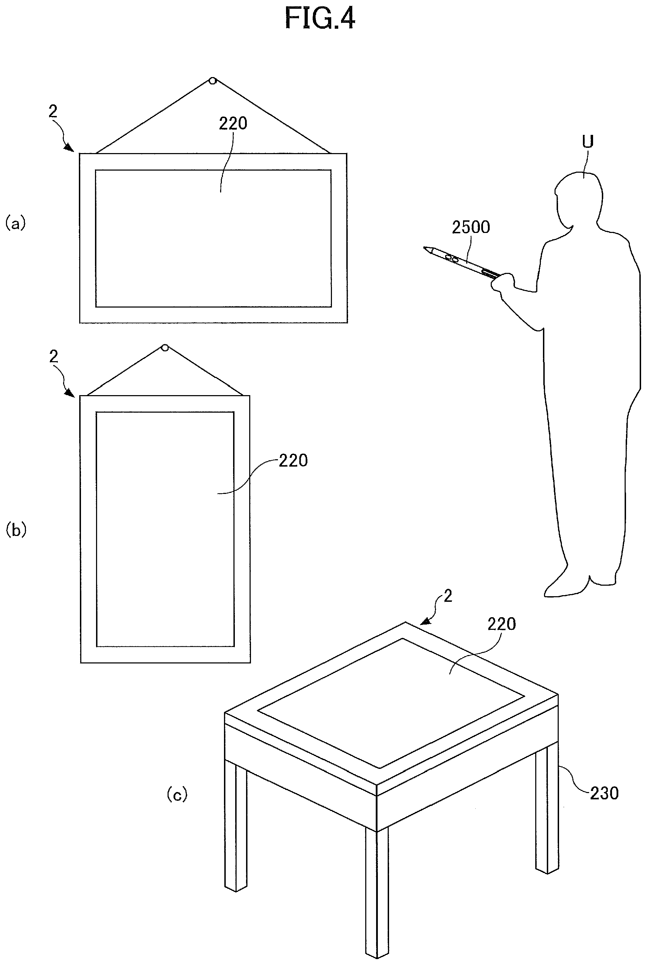

An overall configuration of the display apparatus 2 according to an embodiment of the present invention will be described with reference to Fig. 4. Fig. 4 is a drawing illustrating an overall configuration diagram of a display apparatus 2. Fig. 4(a) illustrates a display apparatus 2 used as a horizontal electronic blackboard suspended on a wall as an example of a display apparatus 2.

As illustrated in Fig. 4(a), a display 220 as an example of a display apparatus is provided on top of the display apparatus 2. A user U can handwrite (also referred to as input or draw) a character, or the like, on the display 220 using the pen 2500.

Fig. 4(a) illustrates a display apparatus 2 used as a horizontal electronic blackboard suspended on a wall.

Fig. 4(c) shows a display apparatus 2 positioned (placed) flat on a table 230. Because the thickness of the display apparatus 2 is about 1 cm, it is not necessary to adjust the height of the desk even if it is placed flat on an ordinary desk. Also, the user can easily move the display apparatus 2.

It should be noted that the display apparatus 2 can automatically detect which position the display apparatus 2 is used.

### <Hardware configuration of apparatus>

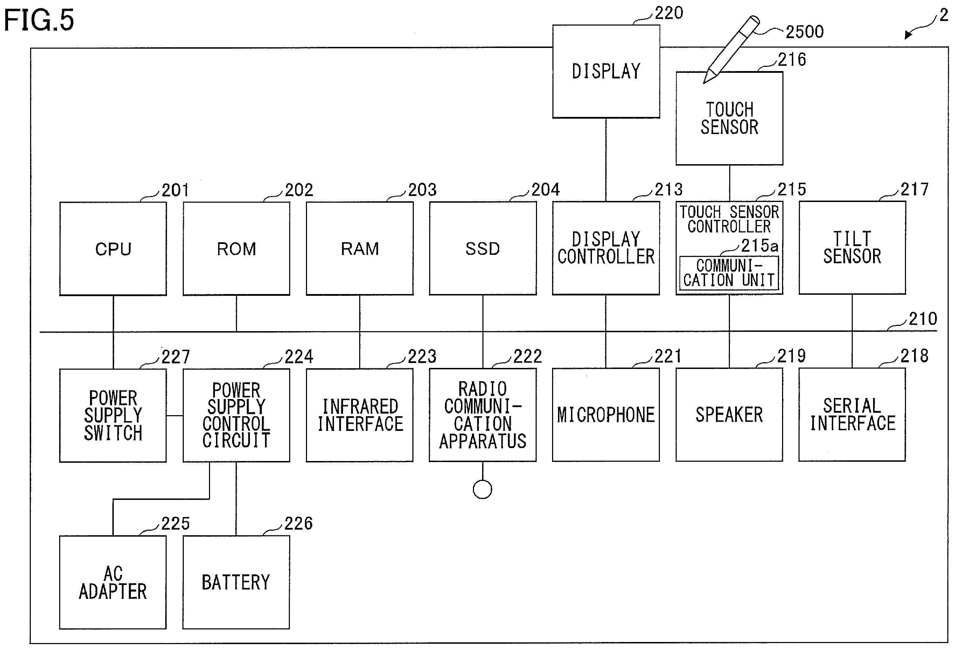

Next, the hardware configuration of the display apparatus 2 will be described with reference to Fig. 5. The display apparatus 2 has a configuration of an information processing apparatus or a computer as illustrated in the figure. Fig. 5 is a drawing illustrating an example of a hardware configuration of a display apparatus 2. As illustrated in Fig. 5, the display apparatus 2 includes a CPU 201 (Central Processing Unit), a ROM 202 (Read Only Memory), a RAM 203 (Random Access Memory), and an SSD 204 (Solid State Drive).

The CPU 201 controls overall operations of the display apparatus 2. The ROM 202 stores programs used to drive the CPU 201, such as the CPU 201 and the IPL (Initial Program Loader). The RAM 203 is used as a work area of the CPU 201. The SSD 204 stores various data items such as a program for the display apparatus 2.

Further, the display apparatus 2 includes a display controller 213, a touch sensor controller 215, a touch sensor 216, a display 220, a power switch 227, a tilt sensor 217, a serial interface 218, a speaker 219, a microphone 221, a wireless communication apparatus 222, an infrared I/F 223, a power control circuit 224, an AC adapter 225, and a battery 226.

The display controller 213 controls and manages the screen display to output an output image to the display 220, etc. The touch sensor 216 detects that a pen 2500, a hand of a user, or the like (the pen or the hand of a user serves as an input unit) is in contact with the display 220. Further, the touch sensor 216 receives a PenId.

The touch sensor controller 215 controls the processing of the touch sensor 216. The touch sensor 216 inputs and detects coordinates. The method of inputting and detecting coordinates is, for example, optically, a method in which two light emitting and receiving apparatuses, which are located at both ends on an upper side of the display 220, emit a plurality of infrared rays in parallel to the display 220. The infrared rays are reflected by a reflection member provided around the display 220 so that the light emitting apparatuses receive the light that is returned on the same optical path as the light emitted by the light receiving element.

The touch sensor 216 outputs position information of the infrared rays emitted by the two light emitting and receiving apparatuses blocked by an object to the touch sensor controller 215, and the touch sensor controller 215 identifies a coordinate position that is a contact position of the object. Further, the touch sensor controller 215 includes a communication unit 215a, and is capable of communicating with the pen 2500 via radio (wirelessly). For example, a commercial pen may be used when communicating in a standard such as Bluetooth (registered trademark). When one or more pens 2500 are registered in the communication unit 215a in advance, the user can communicate without performing the connection setting that causes the pen 2500 to communicate with the display apparatus 2.

The power switch 227 is a switch for switching ON/OFF of the power of the display apparatus 2. The tilt sensor 217 is a sensor that detects a tilt angle of the display apparatus 2. The tilt sensor 217 is mainly used to detect whether the display apparatus 2 is used in which installation state of Fig. 4(a), Fig. 4(b), and Fig. 4(c), and thus, the thickness of characters, etc., can be automatically changed depending on the installation state.

The serial interface 218 is a communication interface with external apparatuses, such as a USB interface, a LAN interface, or the like. The serial interface 218 is used, for example, to input information from an external source. The speaker 219 is used for audio output, and the microphone 221 is used for audio input. The wireless communication apparatus 222 communicates with a terminal carried by a user and relays, for example, a connection to the Internet. The wireless communication apparatus 222 communicates via Wi-Fi, Bluetooth (registered trademark), or the like, but the communication standard may be any standard. The wireless communication apparatus 222 forms an access point. The terminal carried by the user can be connected to the access point when the user sets the SSID (Service Set Identifier) and password, which are obtained by the user, to the terminal.

It should be noted that it is preferable that the wireless communication apparatus 222 is provided with two access points.
(a) access point -> Internet
(b) access point -> internal network -> Internet
The access point (a) is for external users, and the external users cannot access the internal network but can use the Internet. The access point (b) is for internal users, and the internal users can use the internal network the Internet.

The infrared I/F 223 detects an adjacent display apparatus 2. The infrared I/F 223 is capable of detecting only the adjacent display apparatus 2 by taking advantage of the straightness of the infrared rays. Preferably, the infrared I/F 223 is provided on each side of the display apparatus 2, and it is possible to detect in which direction of the display apparatus 2 the other display apparatus 2 is located. The adjacent display apparatus 2 can display handwritten information that has been handwritten in the past (handwritten information on another page, assuming that the size of the display 220 corresponds to one page).

The power control circuit 224 controls the AC adapter 225 and the battery 226 that are power sources for the display apparatus 2. The AC adapter 225 converts the alternating current shared by the commercial power supply to DC.

In the case where the display 220 is a so-called electronic paper, the display 220 consumes little or no power to maintain the image after it has been rendered, and thus, the display 220 can be driven by the battery 226. As a result, it is possible to use the display apparatus 2 for an application such as a digital signage even in a place where it is difficult to connect a power source, such as in an outdoor place.

Further, the display apparatus 2 includes a bus line 210. The bus line 210 is an address bus, a data bus, or the like for electrically connecting components such as the CPU 201 illustrated in FIG. 5.

It should be noted that the touch sensor 216 may be not limited to an optical type, but may be a touch panel having an electrostatic capacitance method in which a contact position is identified by detecting a change in capacitance. The touch sensor 216 may be a resistive film type touch panel that identifies a contact position by a voltage change of two resistive films facing each other. The touch sensor 216 may be an electromagnetic induction type touch panel that detects an electromagnetic induction caused by the contact of a contact object to the display unit, and that identifies a contact position. The touch sensor 216 can identify a contact position with a variety of detection means. The touch sensor 216 may be of a method that does not require an electronic pen to detect the presence or absence of a touch by the tip of the pen. In this case, a fingertip or a pen-shaped bar can be used for touch operations. It should be noted that it is not required that the pen 2500 is a thin and long pen.

### < Function of apparatus>

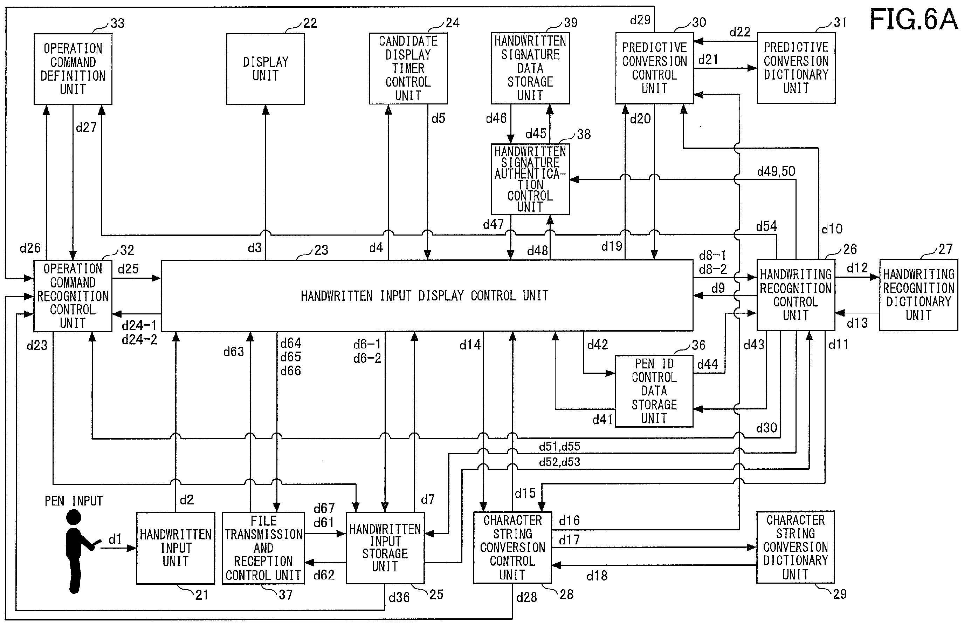

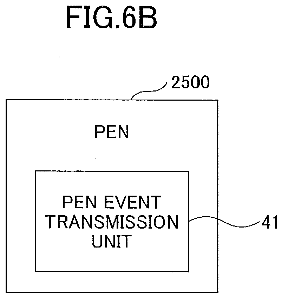

Next, functions of the display apparatus 2 and the pen 2500 will be described with reference to Figs. 6A and 6B. Fig. 6A is an example of a functional block diagram illustrating functions of the display apparatus 2 in a block shape. The display apparatus 2 includes a handwritten input unit 21, a display unit 22, a handwritten input display control unit 23, a candidate display timer control unit 24, a handwritten input storage unit 25, a handwriting recognition control unit 26, a handwriting recognition dictionary unit 27, a character string conversion control unit 28, a character string conversion dictionary unit 29, a predictive conversion control unit 30, a predictive conversion dictionary unit 31, an operation command recognition control unit 32, an operation command definition unit 33, a pen ID control data storage unit 36, a file transmission and reception control unit 37, a handwritten signature authentication control unit 38, and a handwritten signature data storage unit 39. Each function of the display apparatus 2 is a function or means implemented in which one of the components illustrated in FIG. 5 is operated by instructions from the CPU 201 according to a program read from the SSD 204 to the RAM 203.

The handwritten input unit 21 is implemented by a touch sensor 216 or the like and receives handwriting input from a user and receives a PenId. The handwritten input unit 21 converts a pen input d1 of the user into pen operation data d2 (pen-up, pen-down, or pen-coordinate data) with the PenId, and transmits the converted data to the handwritten input display control unit 23. The pen coordinate data is transmitted periodically as discrete values, and coordinates between discrete values are calculated by complementary calculation.

The display unit 22 is implemented by a display 220 or the like to display a handwritten object or an operation menu. The display unit 22 converts drawing data d3, which is written in the video memory by the handwritten input display control unit 23, into data corresponding to the characteristics of the display 220 and transmits the converted data to the display 220.

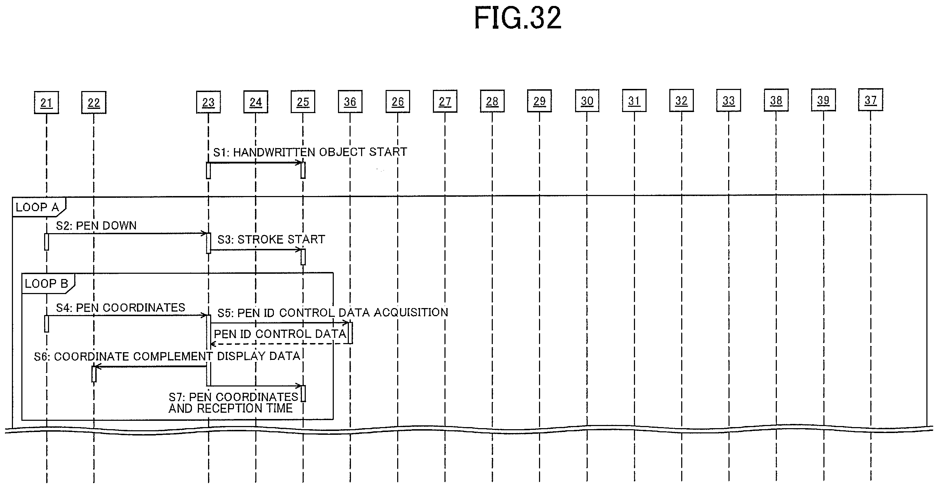

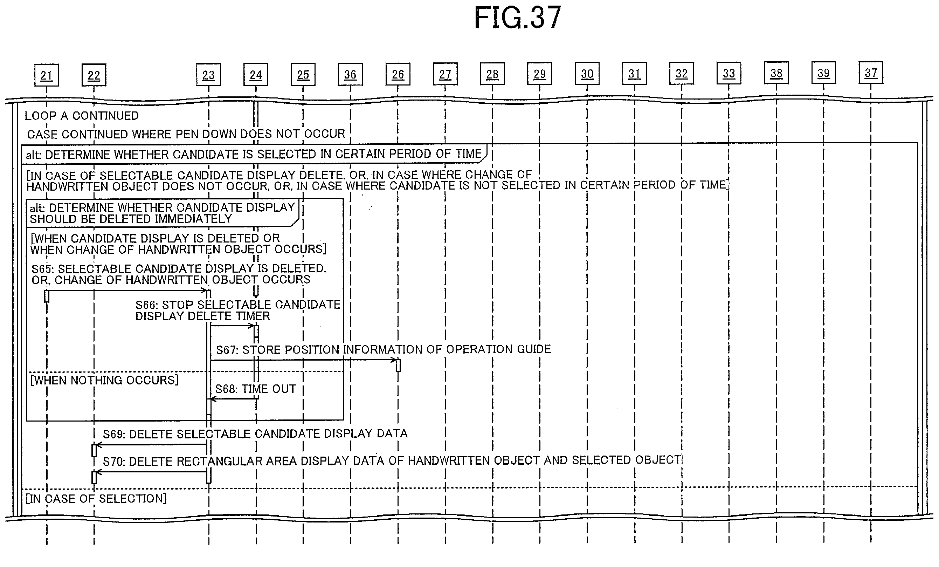

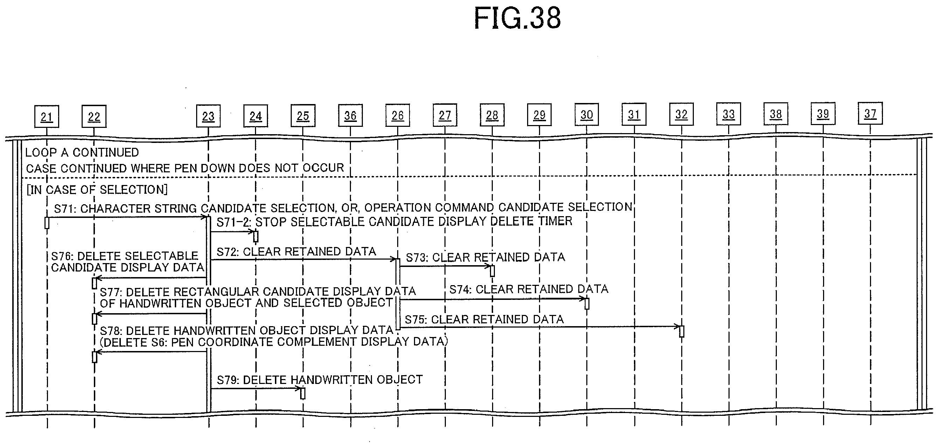

The handwritten input display control unit 23 performs overall control of handwritten input and display. The handwritten input display control unit 23 processes pen operation data d2 from the handwritten input unit 21 and displays the processed data by transmitting it to the display unit 22. Further, the handwritten input display control unit 23 switches the font based on the font set stored in the pen ID control data storage unit 36 and displays the character string object in the font style of the font included in the font set. The processing of the pen operation data d2 and the display of strokes will be described in detail with reference to Fig. 32 to Fig. 39 below.

The candidate display timer control unit 24 is a display control timer of selectable candidates. The candidate display timer control unit 24 generates a timing for starting or stopping the timer to start the display of the selectable candidates and to erase the display. The selectable candidates are handwriting recognition character string/language-wise character string candidates, converted character string candidates, character string/predictive conversion candidates, and operation command candidates, which are selectably displayed in an operation guide that will be described later. The candidate display timer control unit 24 receives a timer start request d4 (or a timer stop request) from the handwritten input display control unit 23 and transmits a timeout event d5 to the handwritten input display control unit 23.

The handwritten input storage unit 25 has a storage function for storing user data (handwritten object/character string object). A handwritten object is an object such as a character before recognition composed of strokes, and a character string object is an object such as a character after recognition. The handwritten input storage unit 25 receives the user data d6-1 from the handwritten input display control unit 23, stores the data in the handwritten input storage unit 25, receives the acquisition request d6-2 from the handwritten input display control unit 23, and transmits the user data d7 stored in the handwritten input storage unit 25. The handwritten input storage unit 25 transmits position information d36 of a determined object to the operation command recognition control unit 32.

The handwriting recognition control unit 26 is a recognition engine for performing on-line handwriting recognition. Unlike a typical OCR (Optical Character Reader), in parallel with pen operations by the user, characters (not only in Japanese but also in English and in other languages), numbers, symbols (%, $, &, etc.), and graphics (lines, circles, triangles, etc.) are recognized. Various algorithms have been devised for recognizing methods, but in an embodiment of the present invention, details are omitted as well-known techniques are available.

The handwriting recognition control unit 26 receives pen operation data d8-1 from the handwritten input display control unit 23 and performs handwriting recognition to retain handwriting recognition character string candidates. Further, the handwriting recognition control unit 26 retains language-wise character string candidates converted from handwriting recognition character string candidates d12 using the handwriting recognition dictionary unit 27. Separately, when an acquisition request d8-2 is received from the handwritten input display control unit 23, the handwriting recognition control unit 26 transmits the retained handwriting recognition character string candidates and the language-wise character string candidates d9 to the handwritten input display control unit 23.

The handwriting recognition dictionary unit 27 is dictionary data for the language conversion of the handwriting recognition. The handwriting recognition dictionary unit 27 receives handwriting recognition character string candidates d12 from the handwriting recognition control unit 26, converts the handwriting recognition character string candidates into language character string candidates d13 that are linguistically appropriate, and transmits the converted candidates to the handwriting recognition control unit 26. For example, in the case of Japanese, a "hiragana" character is converted into a "kanji" character or a "katakana" character.

The character string conversion control unit 28 controls the conversion of the converted character string candidates into character strings. The converted character strings are character strings that are likely to be generated including handwriting recognition character strings or language-wise character strings. The character string conversion control unit 28 receives the handwriting recognition character strings and the language-wise character string candidates d11 from the handwriting recognition control unit 26, converts them into converted character string candidates using the character string conversion dictionary unit 29, and retains the converted candidates. When the acquisition request d14 is received from the handwritten input display control unit 23, the character string conversion control unit 28 transmits the retained converted character string candidate d15 to the handwritten input display control unit 23.

The character string conversion dictionary unit 29 is dictionary data for character string conversion. The character string conversion dictionary unit 29 receives the handwriting recognition character strings and the language-wise character string candidates d17 from the character string conversion control unit 28 and transmits the converted character string candidates d18 to the character string conversion control unit 28.

The predictive conversion control unit 30 receives the handwriting recognition character string and the language-wise character string candidate d10 from the handwriting recognition control unit 26, receives the converted character string candidate d16 from the character string conversion control unit 28, and converts them to the prediction character string candidates using the predictive conversion dictionary unit 31 for each. The predictive converted character strings are character strings that are likely to be generated including the handwriting recognition character strings, the language-wise character strings or converted character strings. When an acquisition request d19 is separately received from the handwritten input display control unit 23, the predictive conversion control unit 30 transmits the predictive character string candidates d20 to the handwritten input display control unit 23.

The predictive conversion dictionary unit 31 is dictionary data for the predictive conversion. The predictive conversion dictionary unit 31 receives the handwriting recognition character strings, the language-wise character string candidates, and the converted character string candidates d21 from the predictive conversion control unit 30, and transmits the predictive character string candidates d22 to the predictive conversion control unit 30.

The operation command recognition control unit 32 receives the handwriting recognition character string and the language-wise character string candidate d30 from the handwriting recognition control unit 26, receives the converted character string candidate d28 from the character string conversion control unit 28, and receives the predictive character string candidate d29 from the predictive conversion control unit 30. Further, the operation command recognition control unit 32 transmits the operation command conversion request d26 for each of them to the operation command definition unit 33 and receives the candidate of the operation command d27 from the operation command definition unit 33. The operation command recognition and control unit 32 retains the operation command candidates d27.

When the operation command conversion request d26 is partially matched with operation command definitions, the operation command definition unit 33 transmits the operation command candidates d27 to the operation command recognition control unit 32.

Further, the operation command recognition control unit 32 receives the pen operation data d24-1 from the handwritten input display control unit 23 and transmits the position information acquisition request d23 of the determined object that is input in the past and is determined to the handwritten input storage unit 25. The handwritten input storage unit 25 retains the determined object specified by the pen operation data as a selected object (including position information). The operation command recognition control unit 32 identifies: a position of the pen operation data d24-1; and a selected object that satisfies predetermined criteria. When the acquisition request d24-2 is received from the handwritten input display control unit 23, the operation command recognition control unit 32 transmits the retained operation command candidate and the identified selected object d25 to the handwritten input display control unit 23.

The pen ID control data storage unit 36 retains the pen ID control data (may be referred to as a storage unit). Before the handwritten input display control unit 23 transmits the display data to the display unit 22, the pen ID control data storage unit 36 transmits the pen ID control data d41 to the handwritten input display control unit 23. The handwritten input display control unit 23 draws display data under the operating conditions stored in association with the PenId. Further, before the handwriting recognition control unit 26 executes the handwriting recognition, the pen ID control data storage unit 36 transmits the angle information d44 of the pen ID control data to the handwriting recognition control unit 26. The handwriting recognition control unit 26 rotates the stroke by using the angle information stored corresponding to PenId, and executes the handwriting recognition.

After recognizing a straight line for setting the angle information that is used in a case where the user handwrites a character or the like, the handwriting recognition control unit 26 transmits the angle information d43 of the pen ID control data to the pen ID control data storage unit 36 and stores the angle information d43 associated with the PenId. Further, after the operation command for setting the angle information is executed by the handwritten input display control unit 23, the handwritten input display control unit 23 transmits the pen ID control data d42 to the pen ID control data storage unit 36. The pen ID control data storage unit 36 stores the execution result (the angle information set by the user) of the operation command by associating it with PenId. Thereafter, the stroke of the PenId is rotated with the set angle information, and handwriting recognition is performed.

Further, the handwriting recognition control unit 26 transmits stroke data d49, which is rotated clockwise with the angle information of the pen ID control data, to the handwritten signature authentication control unit 38. According to the above, it becomes possible to perform authentication of handwritten signature regardless of the user's position (from which direction the signature is handwritten with reference to the display apparatus 2).

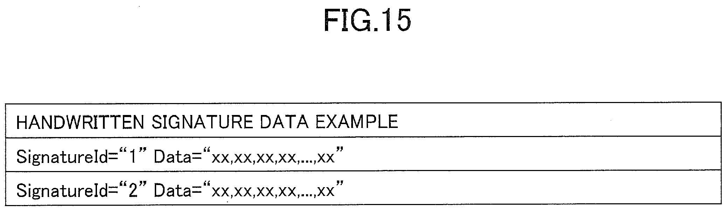

The handwritten signature data storage unit 39 retains handwritten signature data. When the handwritten signature data storage unit 39 receives a handwritten signature data acquisition request d45 from the handwritten signature authentication control unit 38, the handwritten signature data storage unit 39 transmits the handwritten signature data d46 to the handwritten signature authentication control unit 38. It is assumed that the format of the handwritten signature data depends on the algorithm for handwritten signature authentication of the handwritten signature authentication control unit 38. Data of the handwritten signature data storage unit 39 will be described with reference to FIG. 15.

In response to receiving stroke data d49, which is rotated clockwise, from the handwriting recognition control unit 26, the handwritten signature authentication control unit 38 transmits a handwritten signature data acquisition request d45 to the handwritten signature data storage unit 39 and the handwritten signature data storage unit 39 transmits the handwriting signature data d46 to the handwritten signature authentication control unit 38.

The handwritten signature authentication control unit 38 authenticates the user based on the handwritten signature data. Various algorithms have been devised for user authentication based on handwritten signature data, but in an embodiment of the present invention, techniques, which can achieve a recognition rate that does not hinder practical use, are used. For example, the handwritten signature authentication control unit 38 generates a feature vector comprising coordinates constituting the handwritten signature data, writing pressure, time for writing strokes, and the like. The handwritten signature authentication control unit 38 compares a feature vector of the registered handwritten signature data with a feature vector of a user name or the like handwritten by a user at signin, with appropriate weighting of the elements. When the matching degree is equal to or more than the threshold value, the handwritten signature authentication control unit 38 determines that the authentication is successful, and when the matching degree is less than the threshold value, the handwritten signature authentication control unit 38 determines that the authentication is failed.

The handwritten signature authentication control unit 38 retains the authentication result of the handwritten signature which is the comparison result of the stroke data d49 and the handwritten signature data d46. When receiving the acquisition request d48 from the handwritten input display control unit 23, the handwritten signature authentication control unit 38 transmits the retained authentication result d47 of the handwritten signature to the handwritten input display control unit 23. The authentication result of the handwritten signature includes: whether or not the stroke data d49 and the handwritten signature data d46 are considered to be matched; and if they appear to be matched, a SignatureId described later, which is associated with the matched handwritten signature data d46.

When the result of the handwriting recognition of the handwriting recognition control unit 26 conforms to the operation command indicating the execution of the handwritten signature registration, the handwriting recognition control unit 26 acquires the data d52 input to the handwritten signature registration form (a frame in which the handwritten signature data is input, as described below) from the handwritten input storage unit 25. The handwriting recognition control unit 26 transmits the handwritten signature data d50 among the data d52 to the handwritten signature authentication control unit 38. The handwritten signature authentication control unit 38 transmits the received handwritten signature data d50 to the handwritten signature data storage unit 39 to register.

When the handwriting recognition result of the handwriting recognition control unit 26 is an instruction to cancel the handwritten signature, the handwriting recognition control unit 26 transmits a deletion request d51 of the handwritten signature registration form to the handwritten input storage unit 25 and deletes the handwritten signature registration form from the handwritten input storage unit 25.

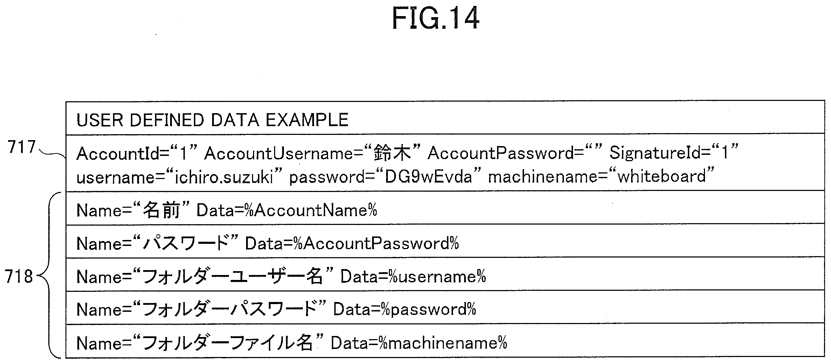

When the handwriting recognition result of the handwriting recognition control unit 26 is an instruction to execute the user-defined data change, the handwriting recognition control unit 26 acquires the data d53, which is input to the user-defined data change form, from the handwritten input storage unit 25. The handwriting recognition control unit 26 transmits a change value d54 of the data d53 to the operation command definition unit 33 to change the user-defined data. The user-defined data will be described in Fig. 14.

When the handwriting recognition result of the handwriting recognition control unit 26 an instruction to cancel the user-defined data change form, the handwriting recognition control unit 26 transmits a deletion request d55 of the user-defined data change form to the handwritten input storage unit 25 and deletes the user-defined data change form from the handwritten input storage unit 25.

The file transmission and reception control unit 37 stores in a storage medium and acquires: handwritten input originated data; or data that is not the handwritten input originated data, and communicates with external apparatuses (print request, display request, etc.). The file transmission and reception control unit 37 receives an execution request d64 for transmitting and receiving a file, from the handwritten input display control unit 23. At the time of storing or printing of a file, the handwritten input display control unit 23 transmits a file transmission request to the file transmission and reception control unit 37, and the file transmission and reception control unit 37 transmits an acquisition request of the handwritten input storage data d61 to the handwritten input storage unit 25.
- In the case where the data is not handwritten input originated data, the handwritten input storage unit 25 transmits the color information retained by the data as it is.
- In the case where the data is handwritten input originated data, the handwritten input storage unit 25 transmits the handwritten input storage data d62, which is converted to color data, to the file transmission and reception control unit 37 when the transmission destination is a color supporting apparatus (for example, a color printer).
- In the case where the data is handwritten input originated data, the handwritten input storage unit 25 transmits the handwritten input storage data d62, which is converted to black-and-white data, to the file transmission and reception control unit 37 when the transmission destination is a black-and-white supporting apparatus (for example, a monochrome printer). In some cases, the black-and-white supporting apparatus is capable of converting color data into gray-scale data, and thus, the data may be converted to color data to be transmitted.
- In the case where the transmission destination is a black-and-white highlighting supporting apparatus, the handwritten input storage data, which will be described later, is transmitted to the file transmission and reception control unit 37.
- Further, in the case where the handwritten input storage unit 25 stores the handwritten input originated data in a file, the handwritten input storage unit 25 converts the handwritten input storage data d62 to color data according to the file format and attaches the handwritten input storage data as meta-data of the file. When storing data that is not handwritten input originated data in a file, the handwritten input storage data d62 is converted to color data according to the file format.

Information indicating the color supporting apparatus or the black-and-white supporting apparatus is stored in, for example, a MIB (Management Information Base) retained by a network apparatus, and the file transmission and reception control unit 37 can perform determination by acquiring the MIB. Similarly, it is possible to determine whether the apparatus is a black-and-white highlighting supporting apparatus based on the model name disclosed by the MIB.

At the time of reading a file, the handwritten input display control unit 23 transmits a file list acquisition request d65 to the file transmission and reception control unit 37, the file transmission and reception control unit 37 transmits the file list acquisition request to an external apparatus and acquires the file list d63, and the file transmission and reception control unit 37 transmits the acquired file list d63 to the handwritten input display control unit 23. The handwritten input display control unit 23 displays a file list on the display unit 22, the handwritten input unit 21 transmits a display position of a selected file to the handwritten input display control unit 23, and the handwritten input display control unit 23 transmits a file reception request d66 to the file transmission and reception control unit 37. The file transmission and reception control unit 37 acquires a file from an external apparatus and transmits the file d67 to the handwritten input storage unit 25. The handwritten input storage unit 25 analyzes meta-data of the file to determine whether or not the data is handwritten input originated data. If the data is handwritten input originated data, the handwritten input storage unit 25 retrieves the handwritten input storage data (black-and-white highlighting/color conversion enabled data, which will be described below). The file transmission and reception control unit 37 converts the handwritten input originated data into a black-and-white highlighting display and transmits the data to the handwritten input display control unit 23, and transmits data to the handwritten input display control unit 23 without converting the data when the data is not handwritten input originated data (which is displayed in gray scale). The handwritten input display control unit 23 transmits the display data of a handwritten object to the display unit 22.

Fig. 6B is a functional block diagram illustrating a function of the pen 2500 in a block shape. The pen 2500 includes a pen event transmission unit 41. The pen event transmission unit 41 transmits event data items of pen-up, pen-down, and pen-coordinate, with a PenId, to the display apparatus 2.

### <Defined control data>

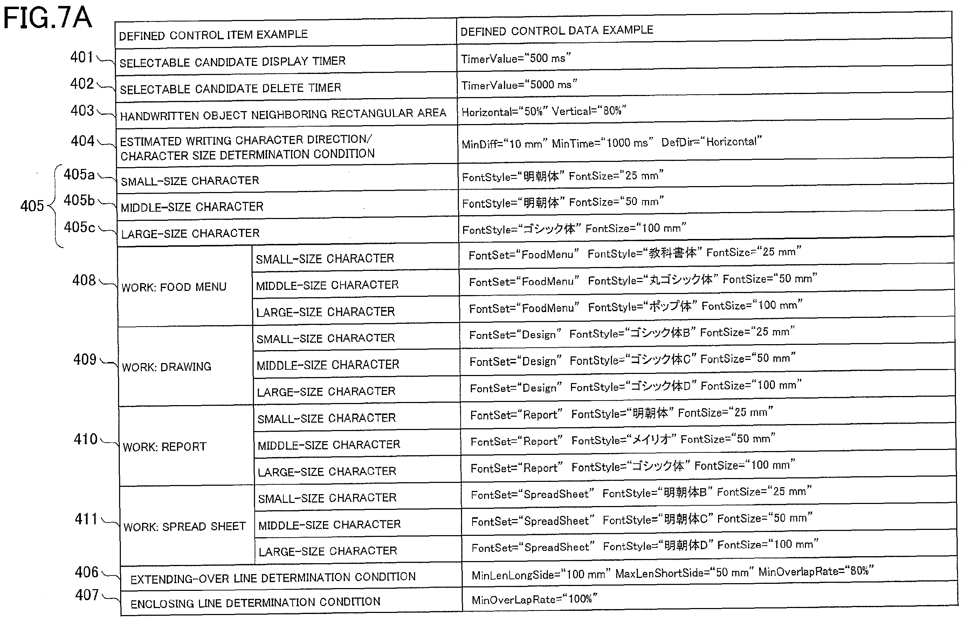

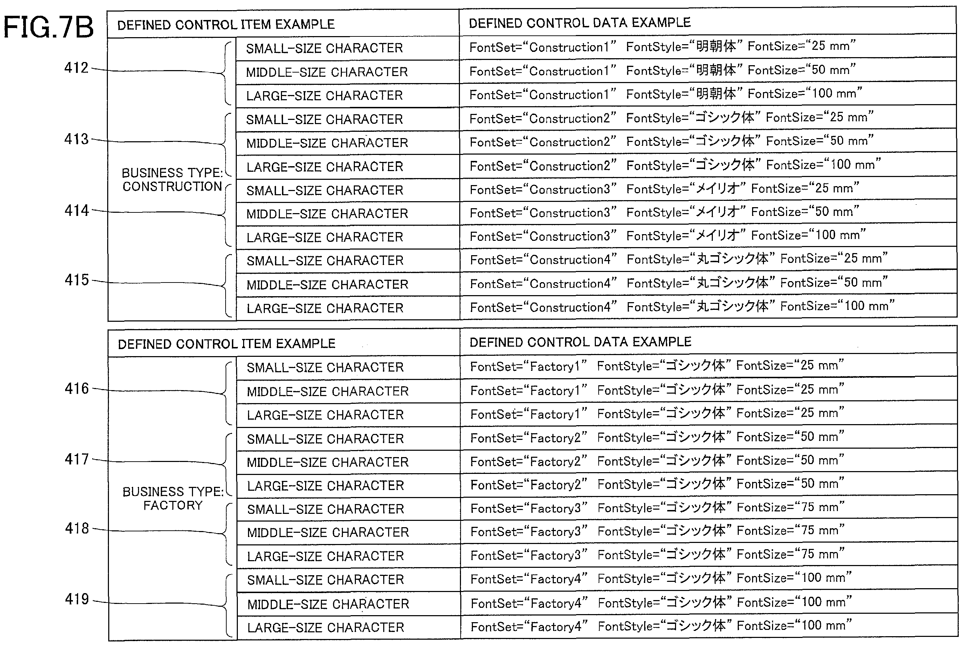

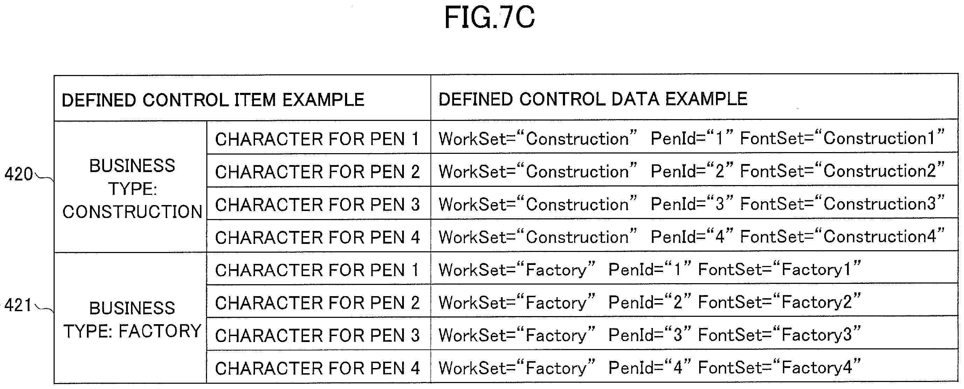

Next, defined control data used for various processes of the display apparatus 2 will be described with reference to Figs. 7A to 7C. Figs. 7A to 7C illustrate examples of defined control data. The examples of Figs. 7A-7C illustrate the defined control data for each defined control item. Further, Figs. 7B and 7C illustrate the defined control data for each use scene.

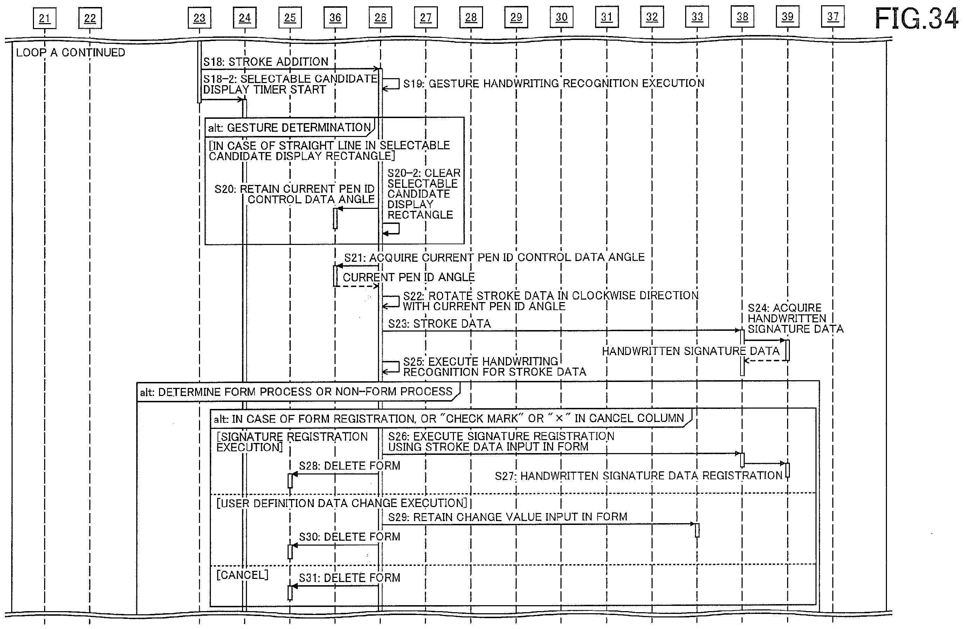

The selectable candidate display timer 401 defines the time until the selectable candidates are displayed. This is because selectable candidates are not displayed during handwriting. In Fig. 7A, it is meant that the selectable candidates are displayed if a pen-down event does not occur within a TimerValue of 500 ms from a pen-up event. The selectable candidate display timer 401 is retained by the candidate display timer control unit 24. The selectable candidate display timer 401 is used at the start of the selectable candidate display timer in step S18-2 of FIG. 34 below.

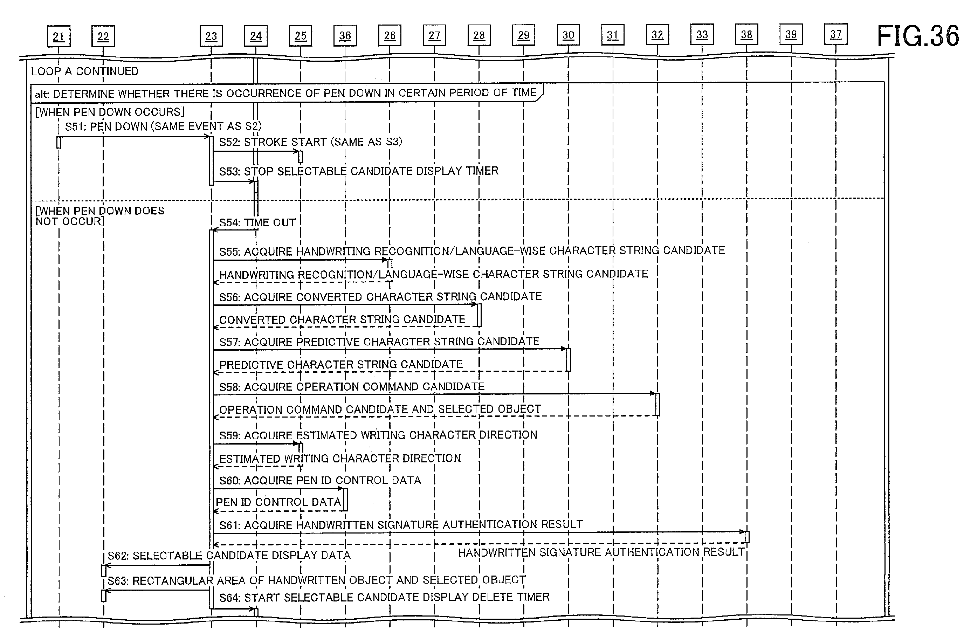

The selectable candidate erase timer 402 defines the time until the displayed selectable candidates are erased. This is used for erasing the selectable candidates in the case where the user does not select the selectable candidates. In Fig. 7A, it is meant that the selectable candidate display data is deleted if the selectable candidates are not selected within a TimerValue of 5000 ms from the display of the selectable candidates. The selectable candidate erase timer 402 is retained by the candidate display timer control unit 24. The selectable candidate erase timer 402 is used at the start of the selectable candidate erase timer in step S64 of FIG. 36.

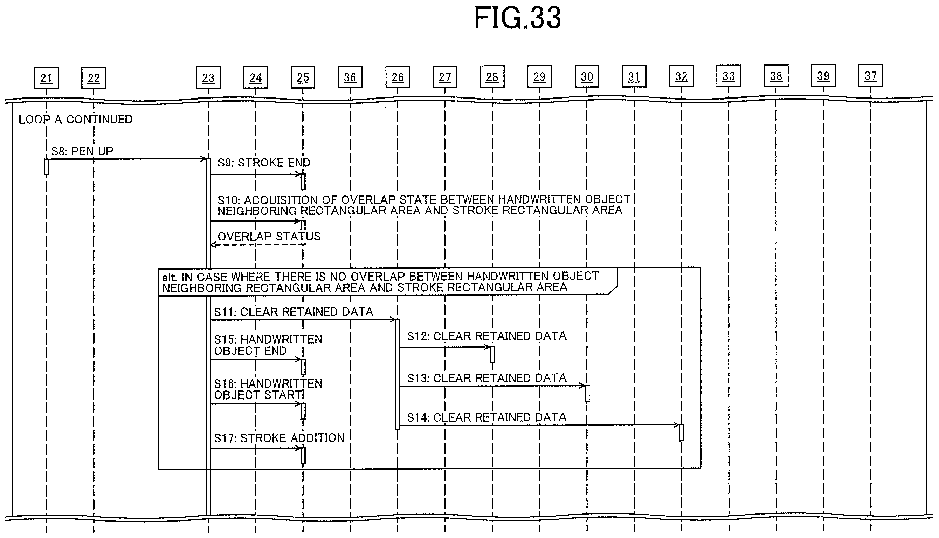

A handwritten object neighboring rectangular area 403 defines a rectangular area considered to be near the handwritten object. In an example of Fig. 7A, the handwritten object neighboring rectangular area 403 is a rectangular area in which the rectangular area of the handwritten object is expanded horizontally by 50% of the estimated character size, and is expanded vertically by 80% of the estimated character size. In an example illustrated in Fig. 7A, ratios with respect to the estimated character size are defined (in %). However, if the unit of "mm", or the like, is used, fixed lengths may be defined. The handwritten object neighboring rectangular area 403 is retained by the handwritten input storage unit 25. The handwritten object neighboring rectangular area 403 is used in step S10 of Fig. 33 to determine the overlap status of the handwritten object neighboring rectangular area and the stroke rectangular area.

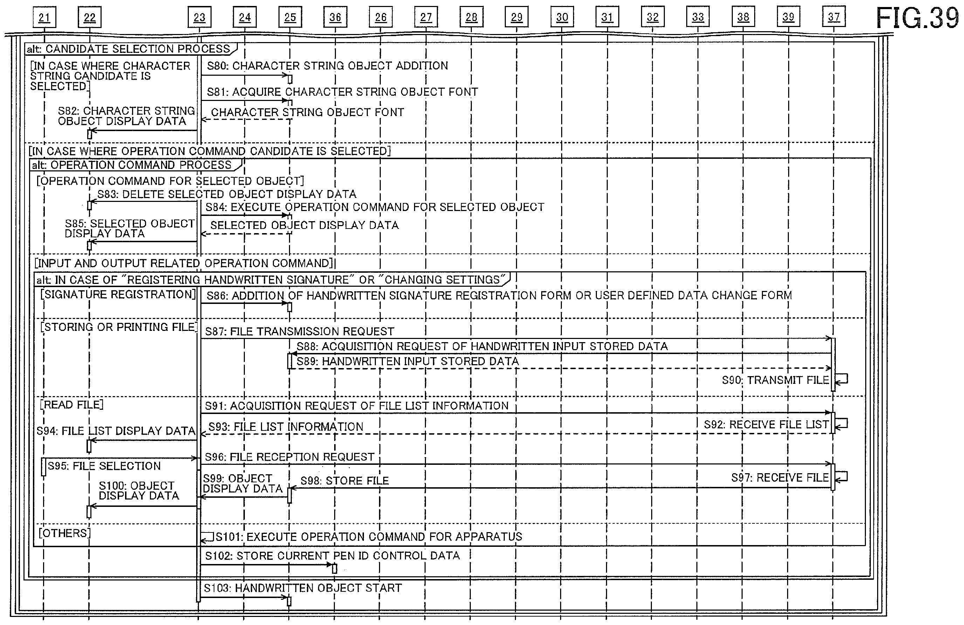

Estimated writing character direction;/character size determination condition 404 defines constants for determining a writing character direction and a character size measurement direction. In an example of Fig. 7A, when the difference between the time when the first stroke is added in the handwritten object rectangular area and the time when the last stroke is added, is equal to or greater than MinTime = 1000 [ms], and the difference between the horizontal distance (width) and the vertical distance (height) of the handwritten object rectangular area, is equal to or greater than MinDiff = 10 [mm], and the horizontal distance is longer than the vertical distance, the estimated writing character direction is determined to be "horizontal" and the estimated character size is determined to be the vertical distance. If the horizontal distance is shorter than the vertical distance, the estimated writing character direction is determined to be "vertical" and the estimated character size is determined to be the horizontal distance. If the above-described conditions are not met, the estimated writing character direction is determined to be "horizontal" (DefaultDir="Horizontal") and the estimated character size is determined to be the vertical distance. The estimated writing character direction/character size determination condition 404 is retained by the handwritten input storage unit 25. The estimated writing character direction/character size determination condition 404 is used in the estimated writing character direction acquisition in step S59 of FIG. 36 and in the character string object font acquisition in step S81 of FIG. 39.

An Estimated character size 405 defines data for estimating the size of a character or the like. In an example of FIG. 7A, it is meant that the estimated character size determined by the estimated writing character direction/character size determination condition 404 is compared with a smaller character 405a (hereinafter referred to as the minimum font size) of the estimated character size 405 and a larger character 405c (hereinafter referred to as the maximum font size). If the estimated character size is smaller than the minimum font size, the estimated character size is determined to be the minimum font size. If the estimated character size is larger than the maximum font size, the estimated character size is determined to be the maximum font size. Otherwise, the estimated character size is determined to be a character size of the medium character 405b. The estimated character size 405 is retained by the handwritten input storage unit 25. The estimated character size 405 is used when the font set is not selected and is used in the string object font acquisition in step S81 of Fig. 39. It is noted that, in an embodiment of the present invention, it is assumed that when FontSet or FontName is added to the pen ID control data to be described later, the handwritten input display control unit 23 deletes the other.

Specifically, the handwritten input storage unit 25 uses the font of the closest size by comparing the estimated character size determined by the estimated writing character direction/character size determination condition 404 with the FontSize of the estimated character size 405. For example, when the estimated character size is 25 [mm] (FontSize of the small-size character) or less, the handwritten input storage unit 25 uses the "small-size character." The handwritten input storage unit 25 uses "middle-size character" when the estimated character size is more than 25 mm but not more than 50 mm (FontSize of the middle-size character). When the estimated character size exceeds 100 mm (FontSize of the large-size character), the handwritten input storage unit 25 uses the "large-size character." The Mincho typeface 25 mm font is used for "smaller character" 405a (FontStyle=" 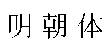 " FontSize="25mm"), Mincho typeface 50 mm font is used for "medium character" 405b (FontStyle=" 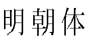 " FontSize="50mm"), and Gothic type 100 mm font is used for "larger character"405c (FontStyle=" 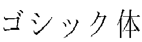 " FontSize=" 100mm"). If it is needed to increase font sizes or style types, types of the estimated character size 405 may be increased.

Work-specific (job-specific) font sets 408-411 define font sets corresponding to respective works (jobs). In an example of Fig. 7A, a work-specific font set 408 defines a font set to be used in the work of a food menu and a work-specific font set 409 defines a font set to be used in the work of drawings. A work-specific font set 410 defines a font set to be used in the work of reporting, and a work-specific font set 411 defines a font set to be used in the work of spreadsheet. Further, similar to the estimated character size 405, each of the work-specific font sets 408-411 defines a font with a small-size character, a middle-size character, and a large-size character according to the estimated character size determined by the estimated writing character direction/character size determination condition 404. Therefore, font parameters (FontSet, FontStyle, and FontSize) are defined for each character size. For example, in a work-specific font set 408, with respect to the small-size character for the work of food menu, FontSet is "FoodMenu", FontStyle is " 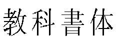 "("textbook typeface"), and FontSize is "25 mm." The FontSet is information used for identifying a font set when the operation command described later is executed. The FontStyle defines a font style (font shape), and the FontSize defines the size of the character string object. Similarly, with respect to the middle-size character for the work of food menu, FontSet is "FoodMenu," FontStyle is " 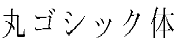 "("round Gothic typeface"), and FontSize is "50 mm". With respect to the large-size character for the work of food menu, FontSet is "FoodMenu", FoodStyle is " 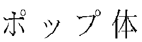 "("pop typeface"), and FontSize is 100 mm. The FontSet is common to the work (job) (e.g., the hood menu), and the execution of the operation command identifies all of font sets for large-size character, middle-size character, and small-size character. Work-specific font sets 409-411 are defined in the similar manner. The work-specific font sets 408-411 are used in the character string object font acquisition in step S81 of Fig. 39.

Business-specific (industry-specific) font sets 412-415 illustrated in Fig. 7B define font sets that correspond to businesses (not work (not job)). Further, the business-specific font sets 412-415 define font sets for each pen 2500 (each input unit). In other words, business-specific font sets 412-415 define large, medium, and small character size font sets for pens 1, 2, 3, and 4, respectively. It is noted that the pens 1 to 4 have corresponding identification information items of PenIds 1 to 4. For example, with respect to the small-size character for pen 1 of the business of construction, FontSet is "Construction1", FontStyle is " 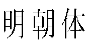 "("Mincho typeface") and FontSize is "25 mm". FontSet and FontStyle are common in the pen 1, and FontSize is different. It is noted that it is not necessary for FontStyle to be common. FontSet is common in the pen 1 because FontSet is information used for identifying the font when the operation command is executed. In the case of pen 2, FontSet is "Construction2," FontStyle is " 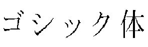 "("Gothic typeface"), and FontSize is "25 mm," "50 mm," or "100 mm." In the case of pen 3, FontSet is "Construction3," FontStyle is " 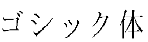 "("Gothic typeface"), and FontSize is "25 mm," "50 mm," or "100 mm." In the case of pen 4, FontSet is "Construction4," FontStyle is " 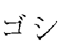 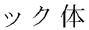 "("Gothic typeface"), and FontSize is "25 mm," "50 mm," or "100 mm." The business-specific (industry-specific) font sets 412-415 are used in the character string object font acquisition in step S81 of Fig. 39.

It is noted that the user may use different fonts according to criteria other than the character size. For example, different fonts may be used depending on whether handwriting is performed with a pen top or a pen bottom. In this case, different fonts are associated with the pen top and the pen bottom in the defined control data. It is also possible to switch fonts by using a button on the pen. A font to be used may be explicitly selected from, for example, a menu displayed by the user. In addition, there is no need to have three font sets associated with one pen. Two or more font sets may be enough.

With respect to the above-described work-specific font sets 408-411, a font set is selected one by one individually. On the other hand, with respect to the business-specific font sets 412-415, font sets are set in the pens 1-4 at the same time according to an execution of a single operation command. Therefore, a set of fonts of pens 1-4 can be changed by using business-specific font sets 412-415. Such use is employed in a case where multiple vendors (or multiple persons in different positions) handwrite to a single display apparatus 2 and where it is desired to distinguish which handwriting is performed by which vendor. Each vendor performs handwriting by using corresponding fixed pens 1-4.

Business-specific font sets 416-419 define font sets corresponding to the "factory" (business) industry. In other words, business-specific font sets 416-419 define font sets suitable for use in "factories". FontSets of pens 1-4 are "Factory1" to "Factory4," respectively. In the business-specific font sets 416 to 419, the FontStyles of pens 1 to 4 are all " 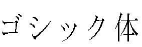 "("Gothic typeface"), the FontSizes are the same regardless of the small-size letters (characters), middle-size letters, and large-size letters, but the FontSizes of pens 1 to 4 are different from each other.

Accordingly, with respect to "FACTORY", the character size can be changed according to each pen. In other words, one user can change pens 1-4 in order to handwrite with various character sizes. For example, a user can handwrite detailed descriptions in the table of product production data in a factory with a small size, and handwrite action items with a large size. Of course, it is also possible that multiple users perform handwriting by using pens 1-4, respectively. In addition, because it is difficult to read if the character size changes within one pen (one of pens 1 to 4), the character size is common for all of "small-size characters/middle-size characters/large-size characters" within one pen.

A business-specific work-set 420 shown in Fig. 7C is control data linking the business-specific font sets 412-415 with the operation command definition data described below. When a predetermined operation command is executed, the business-specific work-set 420 is identified and business-specific font sets 412-415 and pens 1-4 are associated with each other via pen ID control data. The business-specific work-set 420 is a work-set for the business type "construction" and defines WorkSet, PenId, and FontSet for each of the pens 1-4. The "Construction" of WorkSet is associated with the operation command. PenId is the identification of the pens 1-4 and FontSet is associated with business-specific font sets 412-415. Therefore, when an operation command of WorkSet="Construction" is executed, the pen 1 and the business-specific font set 412 are associated with each other via pen ID control data, and the pen 2 and business-specific font set 413 are associated with each other via pen ID control data. In addition, the pen 3 and the business-specific font set 414 are associated with each other using the pen ID control data, and the pen 4 and business-specific font set 415 are associated with each other using the pen ID control data.

The business-specific work-set 421 is similar to the business-specific work-set 420, and is control data linking the business-specific font sets 416-419 and the operation command definition data described below. When an operation command of WorkSet="Factory" is executed, the pen 1 and the business-specific font set 416 are associated with each other via the pen ID control data, and the pen 2 and business-specific font set 417 are associated with each other via the pen ID control data. In addition, the pen 3 and the business-specific font set 418 are associated with each other using the pen ID control data, and the pen 4 and business-specific font set 419 are associated with each other using the pen ID control data.

The work-specific font sets 408 to 411 and the business-specific font sets 412 to 415 and 416 to 419 are retained by the handwritten input storage unit 25.

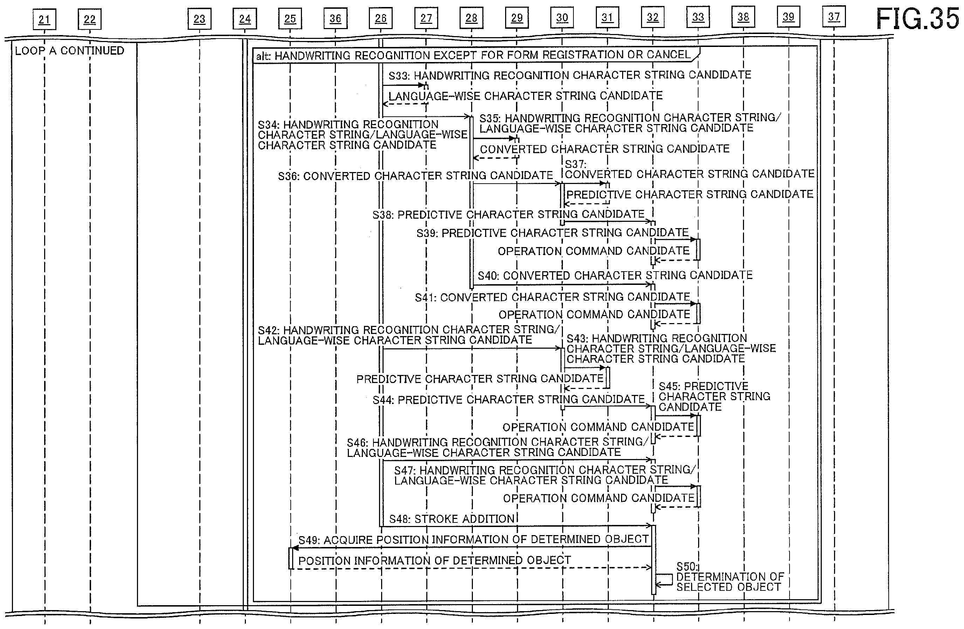

Referring back to Fig. 7A, descriptions will be provided. An extending-over line determination condition 406 defines the data used to determine whether multiple objects have been selected. In an example of Fig. 7A, in the case where the handwritten object is a single stroke, where the length of the long side of the handwritten object is equal to or greater than 100 [mm] (MinLenLongSide=" 100mm"), where the length of the short side is equal to or less than 50 [mm] (MaxLenShortSide="50mm"), and where there are objects whose overlap rates with the handwritten object in the long side direction and in the short side direction are equal to or greater than 80 [%] (MinOverLapRate="80%"), a plurality of objects are determined to be selected (selected objects). The extending-over line determination condition 406 is retained by the operation command recognition control unit 32. The extending-over line determination condition 406 is used in the determination of the selected object in step S50 of Fig. 35.

An enclosing line determination condition 407 defines the data used to determine whether an object is an enclosing line. In an example of Fig. 7A, the operation command recognition control unit 32 determines, as a selected object, a determined object whose overlap rates with the handwritten object in the long side direction and the short side direction are equal to or greater than 100% (MinOverLapRate="100%"). The enclosing line determination condition 407 is retained by the operation command recognition control unit 32. The enclosing line determination condition 407 is used in the enclosing line determination of the determination of the selected object in step S50 of Fig. 35.

It should be noted that any one of the determination using the extending-over line determination condition 406 and the determination using the enclosing line determination condition 407 may be performed with priority. For example, when the extending-over line determination condition 406 is relaxed (when it is made easier to select the extending-over line) and the enclosing line determination condition 407 is strictly made (when condition values are set in such a way that only enclosing lines can be selected), the operation command recognition control unit 32 may give priority to the determination using the enclosing line determination condition 407.

### <Example of dictionary data>

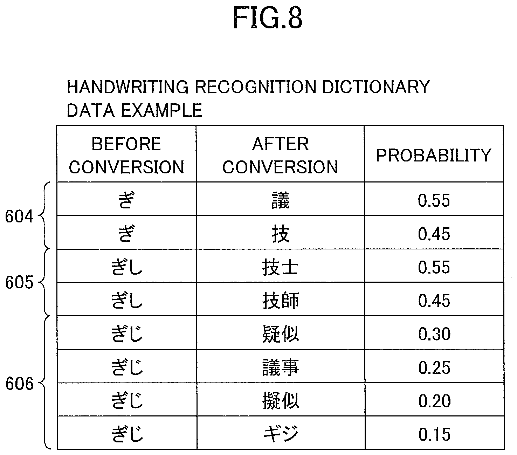

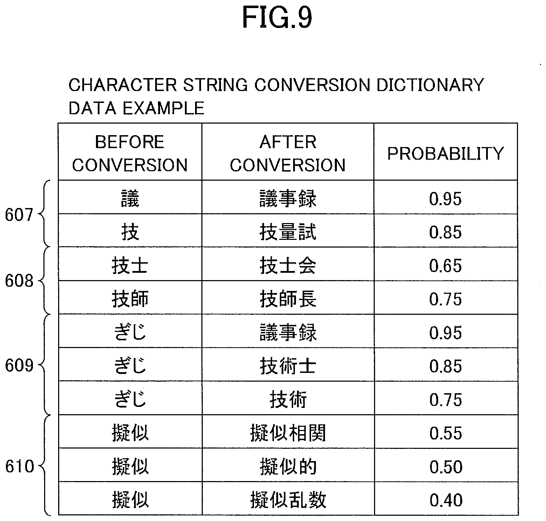

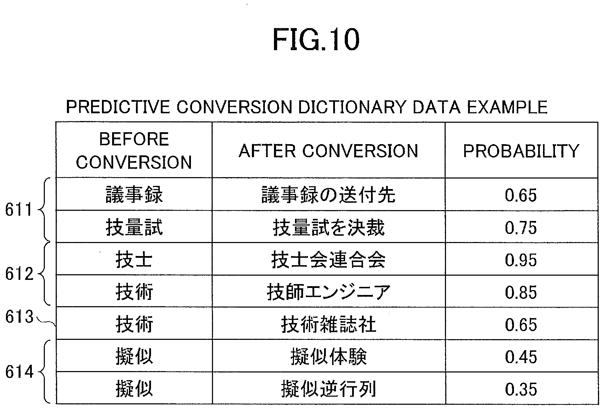

Dictionary data will be described with reference to Figs. 8 to 10. Fig. 8 is an example of dictionary data of the handwriting recognition dictionary unit 27, Fig. 9 is an example of dictionary data of the character string conversion dictionary unit 29, and Fig. 10 is an example of dictionary data of the predictive conversion dictionary unit 31. It should be noted that each of these dictionary data sets is used in steps S33 to S41 of Fig. 35.

In an embodiment of the present invention, a conversion result of the dictionary data of the handwriting recognition dictionary unit 27 of Fig. 8 is called language-wise character string candidates, a conversion result of the dictionary data of the character string conversion dictionary unit 29 of Fig. 9 is called converted character string candidates, and a conversion result of the dictionary data of the predictive conversion dictionary unit 31 of Fig. 10 is called predictive character string candidates. "Before conversion" of each dictionary data indicates the character string to be searched for in the dictionary data, "after conversion" indicates the character string after conversion corresponding to the character string to be searched for, and "probability" indicates the probability with which the converted character string is selected by the user. The probability is calculated from the result of the user selecting each character string in the past. Therefore, the probability may be calculated for each user. Various algorithms have been devised to calculate the probability, but the probability may be calculated in an appropriate way, and the details will be omitted. According to an embodiment of the present invention, character string candidates are displayed in the descending order of the selection probability according to the estimated writing character direction.

In the dictionary data illustrated in the handwriting recognition dictionary unit 27 of Fig. 8, the handwritten " 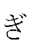 " is converted to " 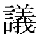 " with a probability of 0.55 and converted to " 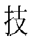 " with a probability of 0.4. The handwritten " 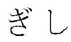 " is converted to " 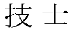 " with a probability of 0.5 and converted to " 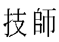 "a probability of 0.45. The same applies to other character strings of "before conversion". In Fig. 8, the character strings of "before conversion" are handwritten "hiragana" characters. However, it is permissible to register a string other than "hiragana" characters as "before conversion".

In the dictionary data of the character string conversion dictionary unit 29 of Fig. 9, the character string " 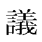 " is converted to " 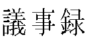 " with a probability of 0.95, and the character string " 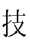 " is converted to " 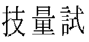 " with a probability of 0.85. The same applies to other character strings of "before conversion".

In the dictionary data of the predictive conversion dictionary unit 31 of Fig. 10, the character string " 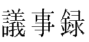 "is converted to " 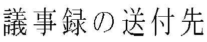 " with a probability of 0.65, and the character string " 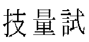 " is converted to " 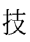 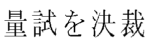 " with a probability of 0.75. In an example of Fig. 10, all of the character strings before conversion are "kanji" characters (Chinese characters), but a character other than the "kanji" characters may be registered.

It should be noted that the dictionary data is language independent, and any character string may be registered as "before conversion" and "after conversion".

### <Operation command definition data retained by operation command definition unit>

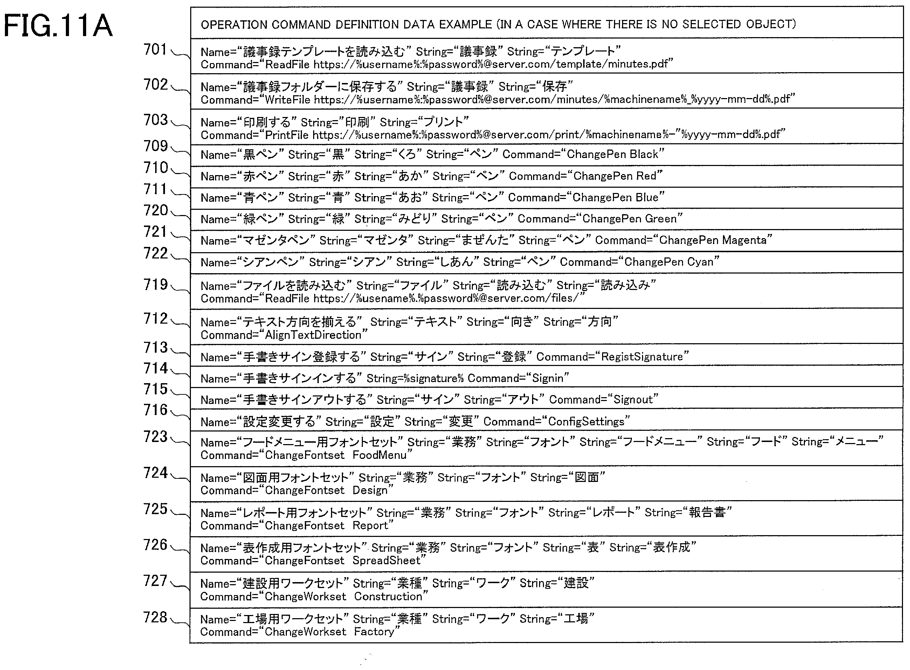

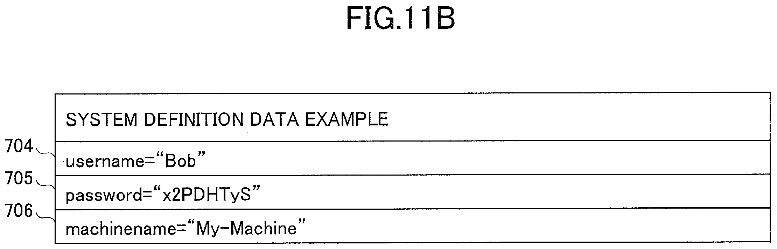

Next, the operation command definition data used by the operation command recognition control unit 32 will be described with reference to Figs. 11A and 11B. Fig. 11A and Fig. 11B show an example of operation command definition data and system definition data retained by the operation command definition unit 33.

Fig. 11A shows an example of operation command definition data. The operation command definition data illustrated in Fig. 11A is an example of operation command definition data when there is no selected object selected by the handwritten object, and all operation commands that operate the display apparatus 2 are targeted (included). The operation commands of Fig. 11A include operation command names (Name), character strings that partially match character string candidates (String), and operation command character strings (Command) to be executed. "%∼%" in the operation command character strings is a variable and is associated with the system definition data as illustrated in Fig. 11A. In other words, "%-%" is replaced by the system definition data illustrated in Fig. 11B.

First, the operation command definition data 701 indicates that the name of the operation command is " 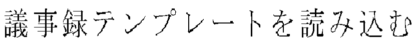 "(Read the minutes template), the character string that partially matches the character string candidates is " 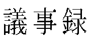 "(Meeting minutes) or " 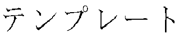 "(Template), and the operation command character string to be executed is "ReadFile https://%username%: %password%@server.com/templates/minutes.pdf". In this example, system definition data "%∼%"is included in the operation command character string to be executed, and "%username%" and "%password%" are replaced by system definition data items 704 and 705, respectively. Therefore, the final operation command character string is "ReadFile https://taro.tokkyo: x2PDHTyS@server.com/template/minutes.pdf", indicating that the file "https://taro.tokkyo: x2PDHTyS@server.com/minutes.pdf" is read (ReadFile).

The operation command definition data 702 indicates that the name of the operation command is " 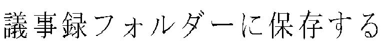 "(save in the minutes folder), that the character string that partially matches the character string candidates is " 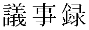 "(minutes) or " 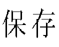 "(save), and that the operation command character string to be executed is "WriteFile https:/%username%:%password%@server.com/minutes/%machinename%_%yyy yy-mm-dd.pdf". Similar to the operation command definition data 701, "%username%", %password%", and "%machinename%" in the operation command character string are replaced by system definition data items 704-706, respectively. It should be noted that "%yyyy-mm-dd%" is to be replaced by the current date. For example, if the current date is September 26, 2018, it will be replaced by "2018-09-26". The final operating command to be executed is "WriteFile https://taro.tokkyo: x2PDHTyS@server.com /minutes/%My-Machine_2018-09-26.pdf" and indicates that the minutes are to be saved in the file "https://taro.tokkyo: x2PDHTyS@server.com /%Minutes/%My-Machine_2018-09-26.pdf" (WriteFile).

The operation command definition data 703 indicates that the name of the operation command is " 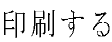 "(print), the character string that partially matches the character string candidates is " 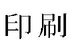 " (print) or " 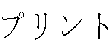 "(print), and that the operation command character string to be executed is "PrintFile https:/%username%:%password%@server.com/print/%machiname%-%yyyy-mm -dd%.pdf". When the operation command character strings are replaced as in operation command definition data 702, the final operation command to be executed is "PrintFile https://taro.tokkyo: x2PDHTyS@server.com/print/%My-Machine_2018-09-26.pdf", indicating that the file "https://taro.tokkyo: x2PDHTyS@server.com/print/%My-Machine_2018-09-26.pdf" is printed (PrintFile). That is, the file is transmitted to the server. The user allows the printer to communicate with the server, and the printer prints the contents of the file on the paper when the file is specified.

As described above, because the operation command definition data items 701 to 703 can be identified from the character string candidates, the operation command can be displayed based on the handwriting of the user. Further, in the case where the user authentication is successful, "%username%", %password%", etc., in the operation command definition data, are replaced by the user information, and thus, the input and output of the file can be performed in association with the user.

In the case where the user's authentication is not performed (including the case of authentication failure if the user can still use the display apparatus 2 after the authentication failure), the display apparatus 2 uses preset "%username%", %password%", etc., data of the display apparatus 2. Accordingly, even without user authentication, the input and output of the file can be performed in association with the display apparatus 2.

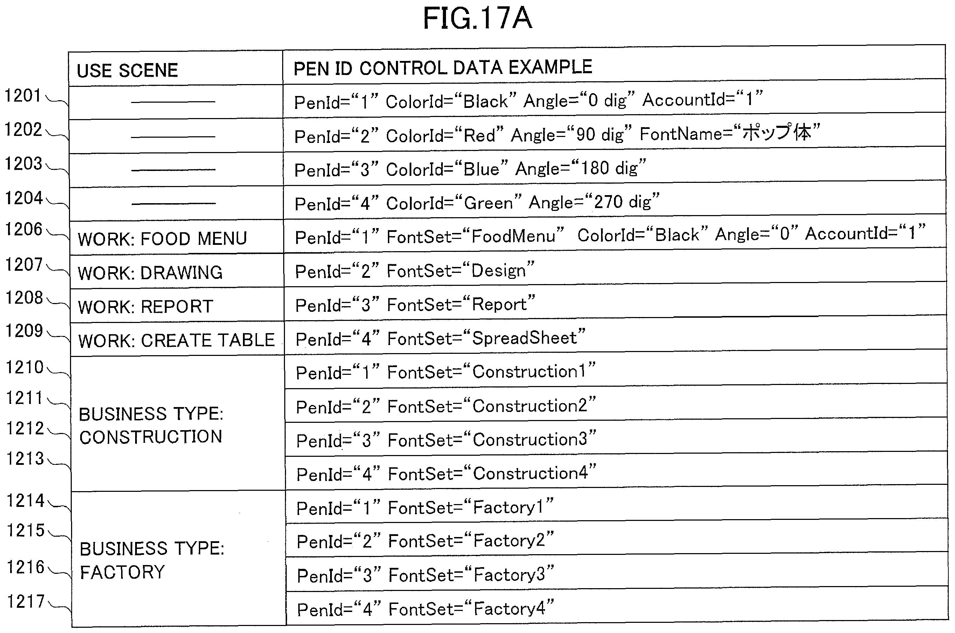

Operation command definition data items 709, 710, 711, 720, 721, 722 are operation commands to change the pen color. The pen color is the color of handwritten data entered with the pen used by the user. The operation command names of the operation command definition data items 709, 710, 711, 720, 721, and 722 are " 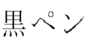 "(black pen), " 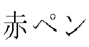 "(red pen), " 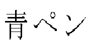 "(blue pen), " 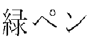 "(green pen), " 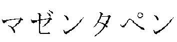 "(magenta pen), and " 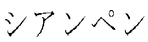 "(cyan pen). For example, in the case of the " 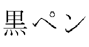 "(black pen), the character string that is partially matched to the character string candidates is " 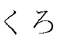 "(kuro) or " 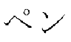 "(pen), and if the user writes " 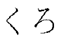 "(kuro), only the " 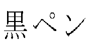 "(black pen) is displayed in the operation command candidates. On the other hand, because the" 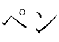 "(pen) corresponds to a character string (String) that partially matches the character string candidates in " 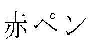 "(red pen), etc., if the user writes " 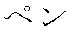 "(pen), the " 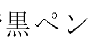 "(black pen) to " 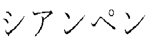 "(cyan pen) are displayed in the operation command candidates. When these operation commands are executed, as shown in Fig. 17A, the pen ID control data associated with the PenId of the pen 2500 used by the user is updated, and the color of the pen 2500 of the PenId (ColorId of the pen ID control data) is changed.

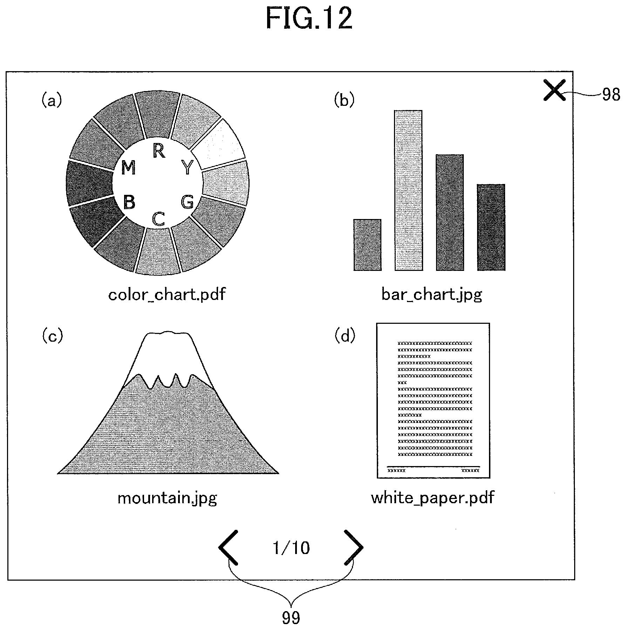

The operation command definition data 719 indicates that the name of the operation command is " 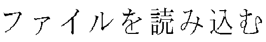 "(Read a file); the character string (String) that matches the character string candidates is " 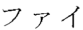 "(File), " 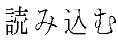 "(Read), " 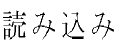 "(Read), and the operation command to be executed is "ReadFile https:/%username%:%password%@server.com/files/". Similar to the operation command definition data 702, replacing the system definition data items results in "ReadFile https://taro.tokkyo: x2PDHTyS@server.com/files/" and it is indicated that the file at this address (folder) is read (ReadFile). When this operation command is executed, the file selection window as illustrated in Fig. 12 is displayed by the display apparatus 2. The file selection window of Fig. 12 displays the first page of the files stored in this address (folder) using thumbnails.

Fig. 12 is an example of a file list display data displayed in the display unit 22 in step S94 (file list display data) of Fig. 39. Fig. 12(a) is created from the file list information obtained by the file list information acquisition in step S91 of Fig. 39. The file list information has a list of file addresses, and the display unit 22 extracts a file name and a thumbnail from each file address and displays them in ascending order of the file name. The file list display data in Fig. 12 displays the four thumbnails and file names, and the preceding and subsequent thumbnails and file names are displayed by using the left and right arrow icons 99. When the displayed thumbnail or file name is pressed by the pen, the display unit 22 deletes the screen of FIG. 12, and the file transmission and reception control unit 37 receives the file from the file address at which the pen is pressed.

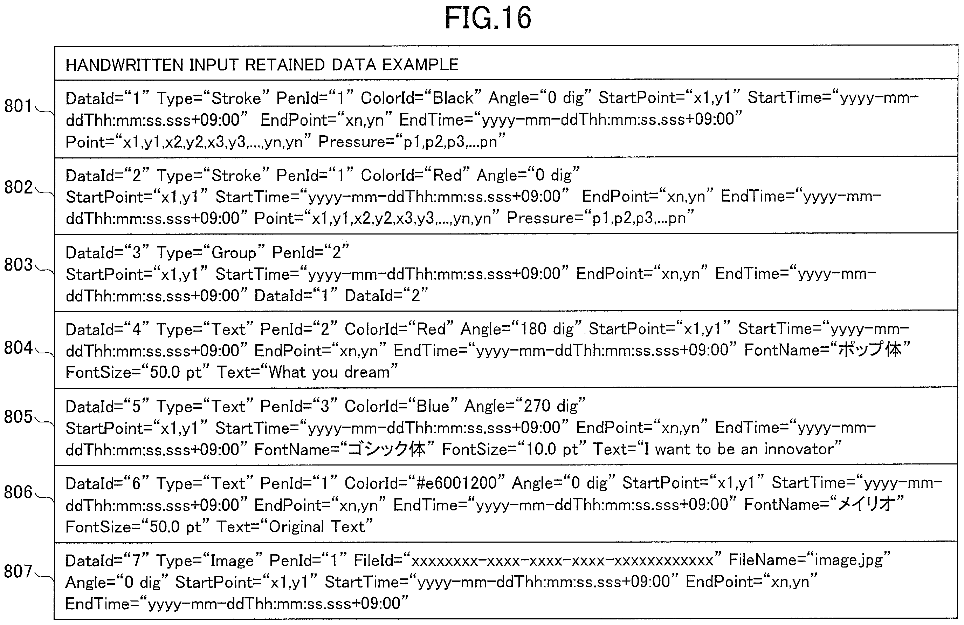

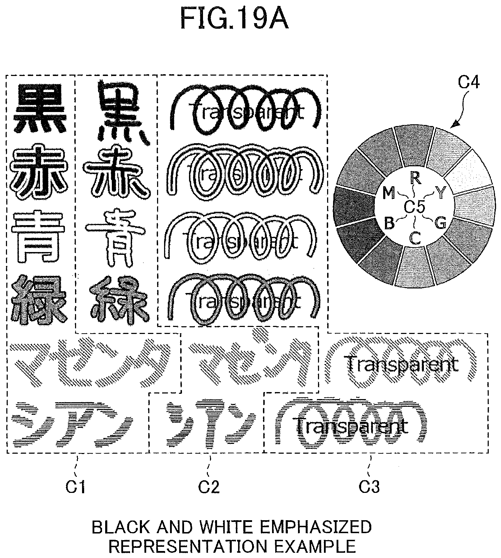

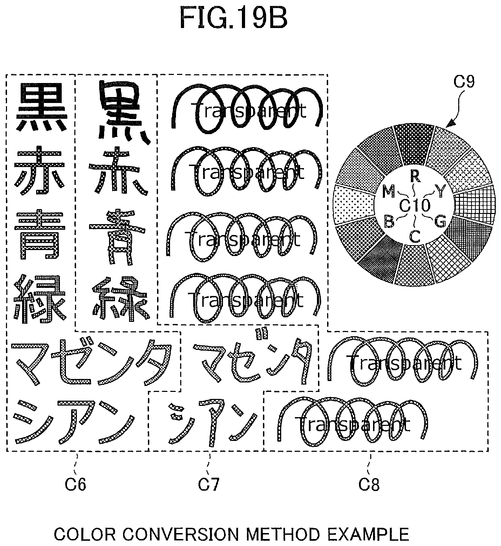

When the closing button 98 in the upper right corner is pressed down with the pen, the display unit 22 deletes the screen of FIG. 12 and the execution of the operation command definition data 719 is canceled. When a PDF file of Fig. 12(a)(d) is selected, the file transmission and reception control unit 37 receives the PDF file and stores it in the handwritten input storage unit 25 for analysis. The file transmission and reception control unit 37 stores the handwriting originated text data (with meta-data) as the handwritten input storage data (black and white emphasis and color conversion available data) such as the handwritten input storage data items 801 to 805 of Fig. 16. Black-and-white highlighting and color conversion available data are data (primarily handwritten input originated data) that correspond to both black-and-white highlighting and conversion to color. The black-and-white highlighting will be described with reference to Figs. 19A and 19B, and color conversion is defined as converting the color to brightness (shading). Text data that is not handwriting originated data is converted into handwritten input storage data such as handwritten input storage data 806 of Fig. 16 for storage and is displayed on the display 220.

When a JPG file of FIG. 12(b)(c) is selected, the file transmission and reception control unit 37 receives an image file and stores the file as the handwritten input storage data such as the handwritten input storage data 807 of FIG. 16 in the handwritten input storage unit 25 and displays the file on the display 220.

Referring back to Fig. 11A, descriptions will be provided. The operation command definition data 712 is an operation command for aligning the orientation of the text data in a constant direction. The operation command name of the operation command definition data 712 is " 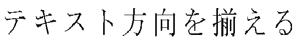 "(align the text direction), the character string that partially matches the character string candidates is " 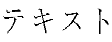 "(Text), " 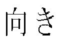 "(Direction), or " 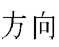 "(Direction), and the operation command character string is "AlignTextDirection". Directions of the text data items written by a user in a direction other than vertical direction are various directions so that it is difficult to read everything from one direction. When the user executes the operation command definition data 712, the display apparatus 2 aligns the handwriting recognized character strings in the same direction (for example, in a vertical direction). In this case, aligning means rotating the text data with angular information.

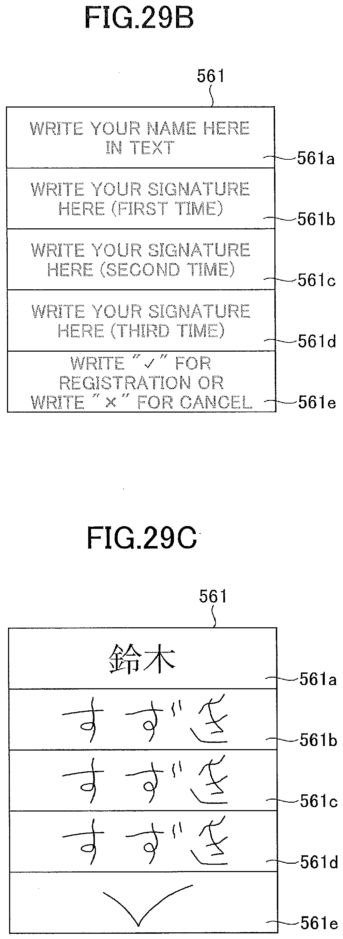

The operation command definition data 713 indicates that the name of the operation command is " 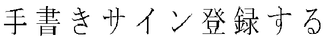 "(register a handwritten signature)," that the character strings that partially match the character string candidates are " 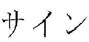 "(signature) and " 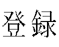 "(register), and that the operation command character string is "RegisterSignature." When the RegisterSignature command is executed, a handwritten signature registration form is added to the handwritten input storage unit 25 and the handwritten signature registration form is displayed on an operation screen 101. An example of the handwritten signature registration form will be described later (see Fig. 29B).

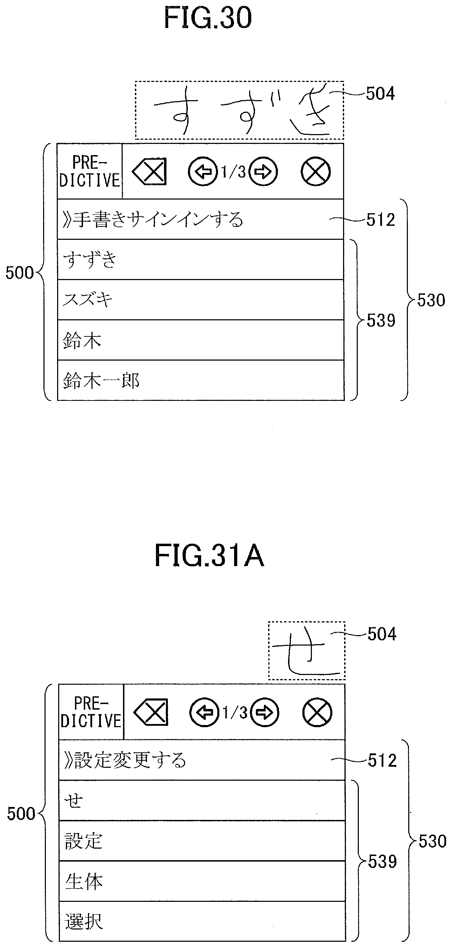

The operation command definition data 714 indicates that the operation command name is " 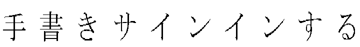 "(sign-in with handwriting), that the character string that partially matches the character string candidates is "%signature%", and that the operation command is "Signin". Here, "%signature%" is a reserved word of system definition data and represents the fact that the registered handwritten signature data and the stroke data such as the user name are conformed (matched). In other words, when conformed (matched), the operation command 512 based on the operation command definition data 714 is displayed in an operation guide 500 (see FIG. 30).

When the Signin command is executed, AccountId of the user with a SignatureID of the conformed (matched) handwritten signature data is saved in the pen ID control data of the pen 2500 that is used for handwriting the stroke data, such as the user name. According to the above, the PenId is associated with the AccountId, and the user defined data identified by the AccountId can be used by the display apparatus 2 (see Fig. 17A).

The operation command definition data 715 indicates that the operation command name is " 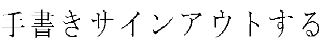 "(handwritten signing out), that the character string that partially matches the character string candidate is " 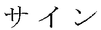 "(signature) or " 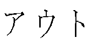 "(out), and that the operation command is "Signout". When the Signout command is executed, the AccountId is deleted from the pen ID control data of the pen 2500 that is operated for the handwritten signout. According to the above, the association between the PenId and the AccountId is released, and the pen 2500 can be used by any user.

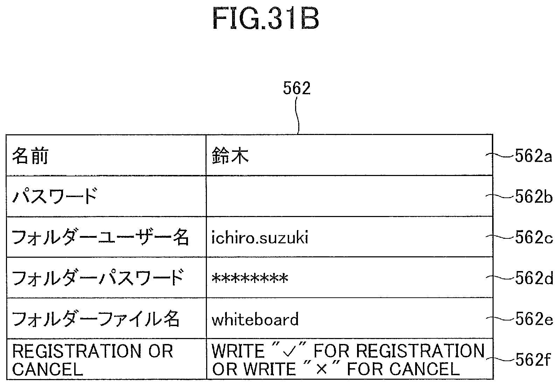

The operation command definition data 716 indicates that the name of the operation command is " 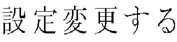 "(changes the setting), that the character string that partially matches the character string candidate is " 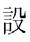 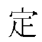 "(set) or " 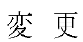 "(change), and that the operation command is "ConfigSettings". When the ConfigSettings command is executed, the user defined data change form is added to the handwritten input storage unit 25 and the user defined data change form is displayed on the operation screen 101. The user defined data change form will be described later (see Figure 31).

Operation command definition data 723-726 each define an operation command to associate work-specific font sets 408-411 with a pen 2500 (set so that the display apparatus 2 uses work-specific font sets 408-411 to display a character string object). Name is a name of the operation command, and character strings for the user to invoke this operation command are defined in some Strings. Further, the contents to be executed by the operation command are defined in Command. For example, the operation command definition data 723 defines that when " 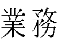 "("work"), " 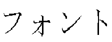 "("font"), " 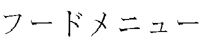 "("food menu"), " 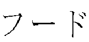 "("food"), or " 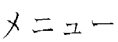 "("menu") is handwritten, the "Change Foodset FoodMenu" is executed by the display apparatus 2, and the work-specific font set 408, whose FontSet is "FoodMenu", is set to the display apparatus 2 (more precisely, set to the pen ID control data). The pen 2500, which is used for executing the operation command, and the work-specific font set 408 are associated with each other using the pen ID control data. It is noted that the display apparatus 2 may simply have the work-specific font set 408 set without associating the work-specific font set with the pen.

Similarly, the operation command definition data 724 defines a work-specific font set 409 to be associated with a pen 2500, the operation command definition data 725 defines a work-specific font set 410 to be associated with a pen 2500, and the operation command definition data 726 defines a work-specific font set 411 to be associated with a pen 2500. The pens 2500 may be pens used by the user.

Operation command definition data 727 or 728 invoke business-specific (industry-specific) work-set 420 or 421, to define an operation command to associate business-specific font sets 412-415 or 416-419 with pens 1-4 respectively (set so that the display apparatus 2 uses the business-specific font sets 412-415 or 416-419 to display a character string object). For example, the operation command definition data 727 defines that when " 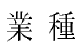 "("business/industry"), " 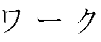 "("work") and " 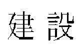 "("construction") are handwritten, the "Change Workset Construction" is executed by the display apparatus 2, and the business-specific work-set 420, whose WorkSet is "Construction", is invoked to associate the pens 1-4 with the business-specific font sets 412-415. Similarly, the operation command definition data 728 defines that pens 1-4 are associated with business-specific font sets 416-419.

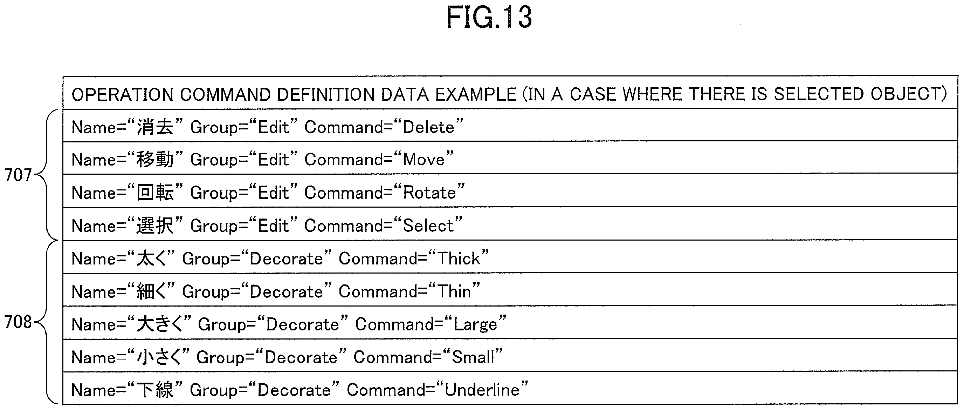

Next, the operation command definition data with a selected object, that is, the operation command definition data related to editing and modification will be described. Fig. 13 illustrates an example of the operation command definition data when there is a selected object selected by a handwritten object. The operation command definition data illustrated in FIG. 13 has an operation command name (Name), a group name (Group) of the operation command candidates, and an operation command character string (Command) to be executed.

The operation command definition data 707 defines the operation commands related to editing (Group="Edit"), and is an example of the definition data of the operation command names related to editing, " 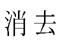 "(Erase), " 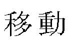 "(Move), " 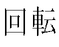 "(Rotate), and" 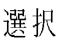 "(Select). In other words, these operation commands are displayed for the selected object, allowing the user to select a desired operation command.

The operation command definition data 708 defines the operation commands related to modification (Group="Decorate"), and is an example of definition data of the operation command names related to modification, " 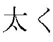 "(thick), " 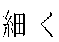 "(thin), " 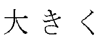 "(large), " 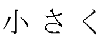 "(small), and " 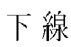 " (underline). These operation commands are displayed for the selected object, allowing the user to select a desired operation command. In addition, color operation commands may be displayed.

Accordingly, in response to the user selecting a selected object by a handwritten object, the operation command definition data 707 and 708 are identified. Therefore, it is possible to display operation commands by handwriting by the user.

### <User defined data>

Next, user defined data will be described with reference to Fig. 14. Fig. 14 illustrates an example of the user defined data retained by the operation command definition unit 33. The user defined data of FIG. 14 is an example of the defined data for a single user. "AccountId" in user defined data 717 is user identification information that is automatically assigned to each user; "AccountUsername" and "AccountPassword" are a user name and a password; "SignatureId" is identification information of handwritten signature data that is automatically assigned at the time of handwritten signature data registration; and "username," "password" and "machinename" are character strings that are set to replace system definition data items 704 to 706, respectively, in operation command definition data items 701 to 703. According to the above, it becomes possible to execute an operation command using user defined data.

If a user handwrites a username or the like to sign in, a character string of user-defined data, whose AccountId is associated with PenId of a pen 2500 used by the user, is used when executing the operation command, taking advantage of the fact that PenId and AccountId are associated with the pen ID control data (see Fig. 17A). After the user has signed out, the character string of the system defined data is used when executing the operation command, even if the pen 2500, which the user has used for signing in, is used.

User defined data 718 is the data used in the user defined data change form. "Name" is the item names of "AccountUsername", "AccountPassword", "username", "password", or "machinename" of user defined data 717, and "data" is the change values of "AccountUsername", "AccountPassword", "username", "password", or "machinename". In this example, the data for " 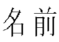 "("name") is "%AccountName%", the data for " 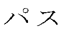 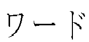 "("password") is "%AccountPassword%", the data for " 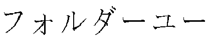 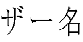 "("folder user name") is "%username%", the data for " 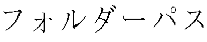 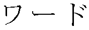 "("folder password") is "%password", and the data for " 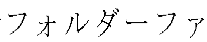 "("folder file name") is "%machinename", which corresponds to the user-defined data 717. These items entered in the user defined data change form are reflected in the user defined data 717.

It is also possible for the user to register the color definition data described below in the user defined data 717, allowing the user to enter with the color definition data as defined by the user.

### <Handwritten signature data>

Next, handwritten signature data will be described with reference to Fig. 15. FIG. 15 illustrates an example of handwritten signature data retained by the handwritten signature data storage unit 39. The handwritten signature data has data representing the handwritten signature associated with SignatureId. The SignatureId is identification information automatically assigned at the time of handwritten signature data registration, and the Data is data calculated by the handwritten signature authentication algorithm of the handwritten signature authentication control unit 38 from the stroke data received from the handwritten signature authentication control unit 38.

### <Handwritten input storage data saved by handwritten input storage unit>

Next, the handwritten input storage data will be described with reference to Fig. 16. FIG. 16 illustrates an example of the handwritten input storage data stored in the handwritten input storage unit 25. A line in Figure 16 represents a stroke, a sentence (text), or an image.

In the case where Type is "stroke", one handwritten input storage data has items of DataId, Type, PenId, ColorId, Angle, StartPoint, StartTime, EndPoint, EndTime, Point, and Pressure. DataId is identification of a stroke. Type is a type of handwritten input storage data. Type includes stroke (Stroke), group (Group), test (Text), and image (Image). The type of handwritten input storage data 801 and 802 is Stroke, the type of handwritten input storage data 803 is Group, the type of handwritten input storage data 804, 805 and 806 is Text, and the type of handwritten input storage data 807 is Image.

"Group" means to group other strokes, and the handwritten input storage data with "Group" type specifies a stroke to be grouped with DataId. PenId, ColorId, and Angle are copied from the pen ID control data described below. StartPoint is the starting coordinate of the stroke and StartTime is the starting time of the stroke. EndPoint is the end coordinate of the stroke and EndTime is the end time of the stroke. Point is a sequence of coordinates from the start point to the end point, and Pressure is pen pressures from the start point to the end point. As shown in Angle, it is indicated that the handwritten input storage data items 804 and 805 are rotated clockwise by 180 degrees and 270 degrees, respectively, before being handwriting-recognized.

Further, Handwritten input storage data items 804, 805, and 806, whose type is "Text", have Text, FontName, FontSize. FontName is a font name of the text, FontSize is a character size, and Text is a content (character code) of the text. A unit of the character size is not only "mm" but also includes point (pt), pixel (px), per cent (%), em, or the like, and any unit may be used.

If there is no FontName in the pen ID control data, the handwritten input storage unit 25 copies the FontStyle of the estimated character size 405 of the defined control data shown in Fig. 7A to the handwritten input storage data. In this case, the FontStyle of the defined control data is changed to FontName. With respect to FontSize, when there is no FontSet in the pen ID control data, the FontSize is copied from the estimated character size 405 of the defined control data of Fig. 7A. In this case, a unit of FontSize is converted from mm to pt. When the pen ID control data has FontSet, FontStyle and FontSize selected from the work-specific font sets 408-411 and the business-specific font sets 412-419 of the defined control data of Fig. 7A and Fig. 7B are copied. In this case, the FontStyle of the defined control data is changed to FontName, and a unit of the FontSize is converted from mm to pt.

Handwritten input storage data 801-805 may be attached as meta-data as handwritten input originated data when storing the file. Accordingly, the display apparatus 2 can obtain the handwritten input storage data 801 to 805 when the file is read. When the display apparatus 2 transmits the handwritten input storage data to an external apparatus, the display apparatus 2 may convert the handwritten input storage data to color data when the external apparatus is a color supporting apparatus, and may either convert or not convert the handwritten input storage data to color data when the external apparatus is a black-and-white supporting apparatus. When transmitting to the black and white highlighting supporting apparatus, the display apparatus 2 only needs to transmit the handwritten input storage data. As described above, the handwritten input storage data items 801-805 correspond to both black-and-white highlighting and color conversion.

Handwritten input storage data items 801-805 are handwritten input originated data, whereas handwritten input storage data items 806-807 are not handwritten input originated data. These are files read by the file reading command. What is described above is determined according to whether or not a color value defined by the color definition data described below is registered or not in ColorId. For example, ColorId of the handwritten input storage data 801 is "Black", while ColorId of the handwritten input storage data 806 is "#e6001200". "#e6001200"is represented by "#"and hexadecimal 8 digits. R (red), G (green), B (blue), and A (transparency) are represented in each of the two digits.

As described above, for handwriting originated text data, ColorId contains a character string that represents color information, but for non-handwriting originated text data, ColorId is "# color value." In this way, it is possible for the handwritten input storage unit 25 to determine whether or not the handwriting originated text data by paying attention to ColorId.

The handwritten input storage unit 25 stores the color of the text data of the file read by the file transmission and reception control unit 37 as ColorId="#e6001200". Therefore, the handwritten input storage data 806 does not correspond to black-and-white highlighting, but only corresponds to color conversion.

The handwritten input display control unit 23 determines whether or not the data is handwritten input originated data based on ColorId, and when the data is not originated from the handwriting, calculates and displays the gray scale value from the RGBA. If the display apparatus 2 is a color supporting apparatus, the RGBA is displayed as it is.

The handwritten input storage data 807 is also an image file read from a storage medium by a file reading command. If Type is "Image", the handwritten input storage data 807 has FileId and FileName. FileId is a control number in the handwritten input storage data, and FileName is an original file name. For example, when the file transmission and reception control unit 37 reads the file "color_chart.pdf" of Fig. 12(a), the text of the central RGBCMY is stored in the handwritten input storage unit 25 in the form of the handwritten input storage data 806. Further, the ring-shaped color portion is stored in the handwritten input storage unit 25 in the form of the handwritten input storage data 807. It should be noted that handwritten input storage data with Type="Image" is naturally not handwriting originated data. Accordingly, the handwritten input display control unit 23 may determine whether the data is derived from handwriting by the Type.

In Fig. 16, the handwritten input display control unit 23 determines whether or not the data is handwritten input originated data based on a value of ColorId. However, whether or not the data is originated from handwriting may be recorded by a dedicated flag or the like. Further, it is limited to handwritten data whose Type is "stroke", but whether or not the data is originated from handwriting may be determined from the shape. In this case, the learning device learns the correspondence between teacher data, which indicates handwriting originated data or non-handwriting originated data, and character shapes, such as in deep learning, and outputs whether the input character shape is handwriting originated data.

In addition, the handwritten input originated data may include not only text data converted from the handwritten data based on the character recognition, but also data converted based on the user's operations, such as a stamp displayed as a fixed character or mark such as " 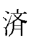 " (completed) or " 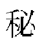 "(secret), a shape such as a circle or a star, and a straight line.

The handwritten input storage data is used in step S7 (pen coordinates and reception time) of FIG. 32, step S88 (acquisition of handwritten input storage data) of FIG. 39, step S96 (file storage) of FIG. 39, and the like.

### <Pen ID control data stored in pen ID control data storage unit>

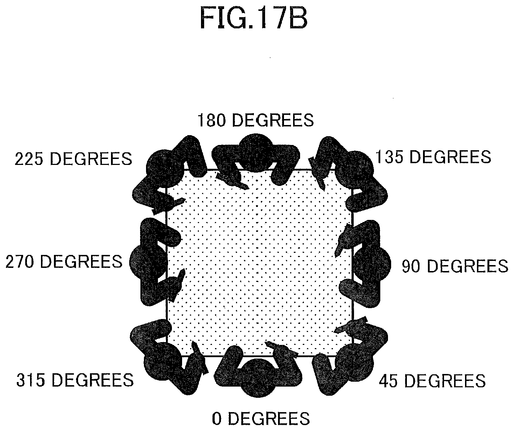

Next, the pen ID control data will be described with reference to Fig. 17A. Fig. 17A is a diagram illustrating pen ID control data stored in a pen ID control data storage unit 36. The pen ID control data controls the font set, angle, color, user, etc. for each pen 1-4. Fig. 17 illustrates a case where there are four pens 2500. A single row of Fig. 17A indicates the pen ID control data of a single pen. Further, Fig. 17B is a diagram illustrating angle information when a user performs handwriting with respect to the display apparatus 2. Angle information may be an angle of direction in which the user resides, may be an angle of direction in which the pen is used, or may be an angle related to the rotation of the character handwritten by the user. With the predetermined direction of the display apparatus 2 (e.g., vertical direction) as 0 degrees (reference), the angular information of each user is 45 degrees, 90 degrees, 135 degrees, 180 degrees, 225 degrees, 270 degrees, and 315 degrees counterclockwise.

It should be noted that the angle information is not automatically determined by the user's position. Each user enters (specifies) the angle information. The resolution of the angular information that can be specified (45 degrees in Fig. 17B) is only an example and may be smaller, such as 5 degrees to 30 degrees. It should be noted that it is understood that, if the characters are rotated at about 45 degrees, the user will be able to read them.

Pen ID control data includes PenId, FontName (font specification), FontSet (font set specification), ColorId, Angle, and AccountId.

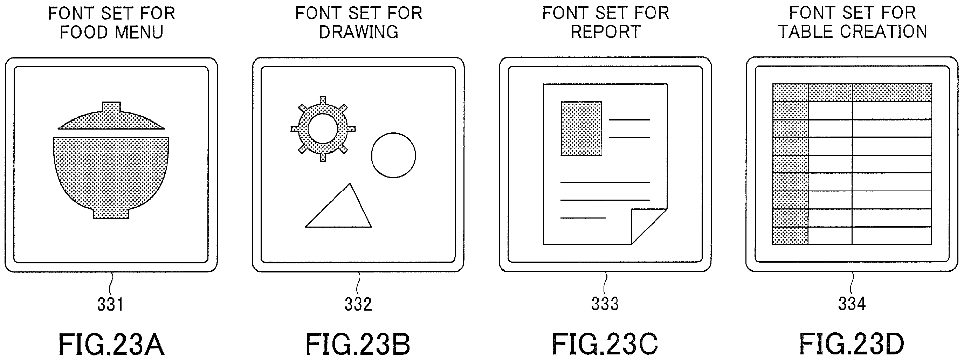

FontSet is added when the user presses a button in an example of selection buttons shown in Figs. 23A to 23D. FontSet is defined by the work-specific font sets 408-411 and by the business-specific font sets 412-419 of the defined control data in Fig. 7A and Fig. 7B. In the case of a character string object displayed using a pen with a Fontset set, instead of FontStyle and FontSize of the estimated character size 405 of the defined control data shown in Fig. 7A, FontStyle and FontSize corresponding to the work-specific font sets 408-411 of the defined control data in Fig. 7A and Fig. 7B or FontSet corresponding to the business-specific font sets 412-419 are acquired. This process is performed by acquiring the character string object font in step S81 of the control sequence diagram of Fig. 39.

For example, if FontSet="FoodMenu" is added to the pen ID control data, the small-size font of FontStyle=" 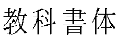 "("textbook typeface") of the work-specific font set 408 of the defined control data is used (is displayed). Similarly, FontSize="25mm" and the middle-size character FontStyle=" 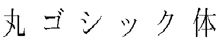 "("round Gothic") are used (is displayed). FontSize="50mm", large-size character FontStyle= " 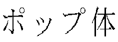 "("pop typeface") and FontSize="100mm" are used (displayed).

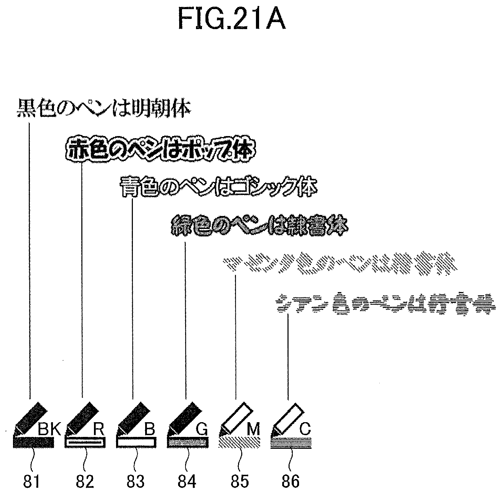

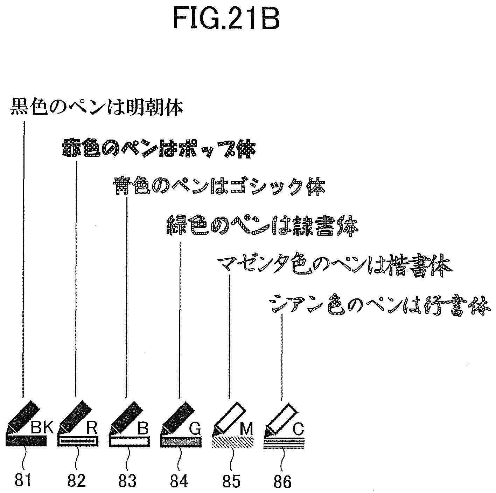

On the other hand, FontName is added when the user presses pen color selection buttons 81-86 of Figs. 21A and 21B. When FontName is added, in the character string object displayed by PenId, FontName is acquired instead of FontStyle of the estimated character size 405 of the defined control data shown in Fig. 7A. This process is performed by acquiring the character string object font in step S81 of the control sequence diagram of Fig. 39.

Both FontSet and FontName are the same in terms of specifying fonts. However, with respect to FontSet, fonts and sizes of small-size characters, middle-size characters, and large-size characters are changed at the same time. With respect to FontName, fonts of small-size characters, middle-size characters, and large-size characters are all changed to a same font. Because FontSet and FontName are not compatible, in the present embodiment, in a case where one of FontSet and FontName is added, the handwritten input display control unit 23 deletes the other of FontSet and FontName.

ColorId, Angle, and AccountId are not essential items. If they are not set, the default value is assumed to be set. PenId is identification information stored in the pen 2500. ColorId indicates the color selected by the user using the pen 2500 (can be changed by the user). A color ID of the color definition data described later is set to ColorId. Details and thickness of each color are defined in the color definition data.

Angle is angle information of stroke that is set to the pen 2500 (the user can change it arbitrarily). In an example of Fig. 17A, the angle information of the pen 1 is clockwise 0 degrees. AccountId is identification information of a user of a pen used by the user to sign in. By associating the PenId with the AccountId, it is possible to identify the AccountId associated with the PenId of a pen 2500 used by the user, and an operation command is executed using the user-defined data.

Pen ID control data items 1206-1209 are pen ID control data items when work-specific font sets 408-411 are set, and Fig. 17A shows a case where a specific font set is selected in each of four pens 1-4. The pen ID control data 1206 is pen ID control data, whose PenID is 1, whose font set is "FoodMenu", whose color is black, whose angle information is 0 degrees, and AccountId = 1. The user of AccountId=1 is the user of user defined data 717 of Fig. 14. It is indicated that the user has handwritten the user name, signed in, and selected the font set of "FoodMenu" and black. Pen ID control data without AccountId indicates a signed out state (not associated with the user).

The pen ID control data 1207 indicates that the character string objects entered with a pen 2 are displayed in the font set of "Design". The pen ID control data 1208 indicates that the character string objects entered with a pen 3 are displayed in the font set of "Report". The pen ID control data 1209 indicates that the character string objects entered with a pen 4 are displayed in the "Spread Sheet" font set. The above-described association between pens and fonts is an example. Font sets selected by the user using pens 1-4 are set.

Pen ID control data items 1210-1213 are pen ID control data items in a case where business-specific font sets 412-415 are set. Accordingly, the pen ID control data items 1210 to 1213 indicate that the character string objects entered with pens 1 to 4 are displayed using font sets of "Construction1," "Construction2," "Construction3," and "Construction4," respectively.

Pen ID control data items 1214-1217 are pen ID control data items in a case where business-specific font sets 416-419 are set. Accordingly, the pen ID control data items 1214 to 1217 indicate that the character string objects entered with the pens 1 to 4 are displayed using font sets of "Factory1," "Factory2," "Factory3," and "Factory4," respectively.

The pen ID control data is used in step S5 (acquiring the pen ID control data) of Fig. 32, step S20 (storing the angle information of the pen ID control data) of Fig. 34, step S21 (acquiring the angle information of the pen ID control data) of Fig. 34, and step S60 (acquiring the pen ID control data) of Fig. 36.

### <Color Definition Data>

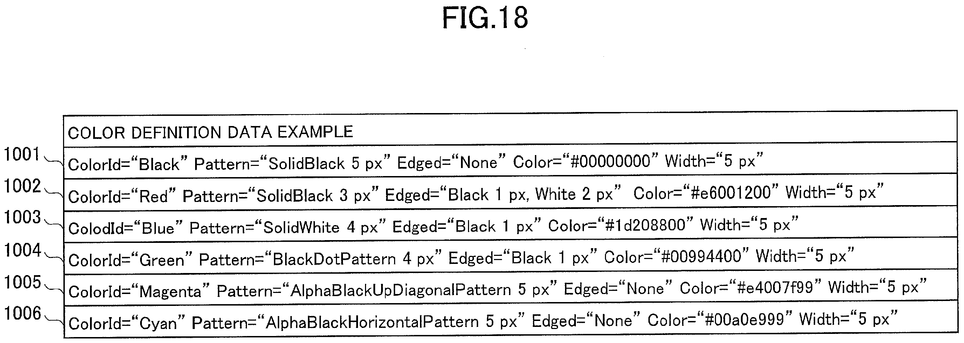

Fig. 18 illustrates an example of color definition data. A single row of color definition data defines a single color. The color definition data defines the black-and-white highlighting display (the display method of the black-and-white pattern and width (pattern) and border (Edged)) on the black-and-white supporting apparatus with respect to ColorId, and the color conversion method (the display method of the color information (Color) and the width (Width) on the color supporting apparatus). Color information is represented by # and hexadecimal 8 digits indicating #R (red) with 2 digits, G (green) with 2 digits, B (blue) with 2 digits, and A (transparency) with 2 digits. "px" represents a pixel width. It should be noted that the color definition data is applied only to handwritten input originated data.

Color definition data 1001 is a definition example of ColorId being "Black". "Pattern" represents contents of a stroke or a text edge, "Edged" represents presence or absence of the edge, "Color" represents RGBA color information, and "Width" represents a line width. The color definition data 1001 indicates that the black-and-white highlighting supporting apparatus displays the handwritten input storage data with a solid black 5 pixel width + no edge, and that the color supporting apparatus displays with the black 0% transparency + 5 pixel width. Similarly, the color definition data 1002 indicates that the black-and-white supporting apparatus displays with the solid black 3 pixel width + the black edge 1 pixel width from the outside to the black edge 1 pixel width + the white edge 2 pixel width, and that the color supporting apparatus displays with the red transparency 0% + 5 pixel width of the color chart. The color definition data 1003 indicates that the black-and white highlighting supporting apparatus displays with a solid white 4 pixel width + black edge 1 pixel width, and that the color supporting apparatus displays with a blue 0% transparency + 5 pixel width of the color chart. Color definition data 1004 indicates that the black-and-white highlighting supporting apparatus displays with black dot pattern 4 pixel width + black edge 1 pixel width, and that the color supporting apparatus displays with green transparency 0% + 5 pixel width of the color chart. Color definition data 1005 indicates that the black-and-white highlighting supporting apparatus displays with a black upper right oblique pattern with white transparent 5 pixel width + no border, and that the color supporting apparatus displays with magenta with 60% transparency of the color chart. Color definition data 1006 indicates that the black-and-white highlighting supporting apparatus displays with the black horizontal line pattern with white transparent 5 pixel width, and that the color supporting apparatus displays with cyan transparency 60% of the color chart.

As described above, the color definition data includes black-and-white highlighting and color conversion enabled data. The color definition data is retained by the handwritten input storage unit 25 and is used to convert the handwritten input storage data.

By defining the color definition data in system definition data and in user defined data, and providing a user defined data change form for changing the color definition data to the user defined data, the user can change the color definition to a personalized color definition after signing in.

Figs. 19A and 19B illustrate data highlighted in black and white and data displayed in a color display method using the color definition data of Fig. 18. Fig. 19A is a representation in which black and white highlighting is displayed by a black-and-white highlighting supporting apparatus, and Fig. 19B is a representation in which a color supporting apparatus displays with conversion to color. Figure 19B also illustrates black and white (hatching) for the sake of drawing convenience.

A symbol C1 indicates handwriting originated texts of " 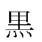 "("Black"), " 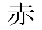 "("Red"), " 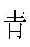 "("Blue"), " 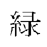 "Green")," 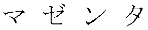 "("Magenta"), and " 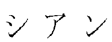 "("Cyan"). A symbol C2 indicates strokes (handwritings) of " 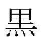 "("Black"), " 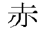 "("Red")," 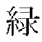 "("Green"), " 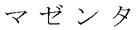 "("Magenta"), and " 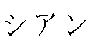 "("Cyan"). A symbol C3 indicates spring-shaped strokes (handwritings). A symbol C4 indicates a donut-shaped color chart (image). A symbol C5 indicates RGBCMY (text that is not handwriting originated) inside the color chart. Under the symbol C3, there are handwriting originated texts of "Transparent" in black.

It is assumed that the color chart of the symbol C4 and the text RGBCMY of the symbol C5 are data read from PDF files, etc., and are not handwriting originated. Accordingly, when it is described as the handwritten input storage data stored by the handwritten input storage unit 25 illustrated in FIG. 16, the strokes (handwritings) of the symbol C2 are stored as the handwritten input storage data such as the handwritten input storage data items 801 and 802 of FIG. 16. The handwriting originated texts of the symbol C1 are stored as handwritten input storage data such as handwritten input storage data items 804 and 805 of FIG. 16. The texts of the symbol C5, which are not handwriting originated, are stored as handwritten input storage data such as handwritten input storage data 806 of FIG. 16. The image of the symbol C4 is stored as the handwritten input storage data, such as the handwritten input storage data 807 of FIG. 16. Color information for each handwritten input storage data is defined by ColorId.

As can be seen from the comparison between Fig. 19A and Fig. 19B, the red text "R" inside the color chart of the symbol C10 of Fig. 19B is displayed in gray-scale in Fig. 19A because the text "R" is not handwriting originated. On the other hand, because the text "red" of the symbol C6 is handwriting originated, the text "red" is displayed with black-and-white highlighting in Fig. 19A.

Further, magenta and cyan are translucent, and in Fig. 19B, the "Transparent" is visible, and in Fig. 19A, magenta and cyan are translucent because the white pattern is transparent. As described above, the black-and-white highlighting supporting apparatus can indicate the color used for emphasis using black-and-white highlighting display, while the color device can convert the data into color and displays it.

The color definition data is used in step S6 (coordinate complement display data) of FIG. 32, step S82 (character string object display data) of FIG. 39, and step S100 (object display data) of FIG. 39.

### <Pen color selection button definition data>

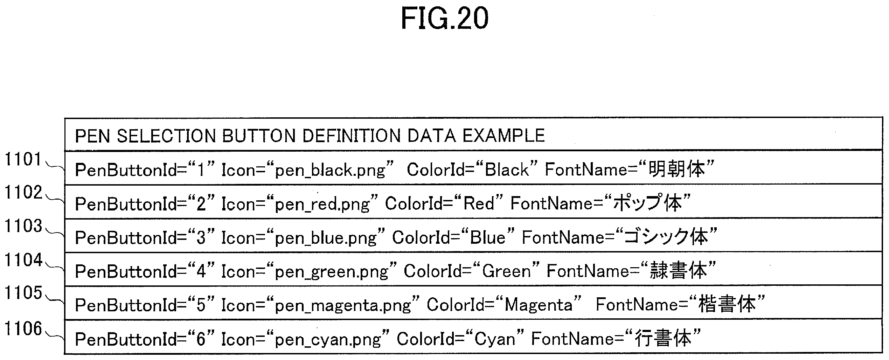

Next, a method for selecting a pen color by a user will be described with reference to Fig. 20 and Figs. 21A and 21B. Fig. 20 is an example of a pen color selection button definition data. The pen color selection button definition data is data that associates the pen color selection button displayed on the display 220 with ColorId. The pen color selection button definition data has a Pen button ID (PenButtonId), an icon file (Icon), a color ID (ColorId), and a font name (FontName).

Figs. 21A and 21B are examples of pen color selection buttons 81-86 displayed on a display. Pen color selection buttons 81-86 are displayed using the above-described icon files. It is assumed that the pen color selection buttons 81-86 are displayed from left to right in the ascending order of the pen button ID.

When the user presses the pen color selection buttons 81-86 with a pen 2500, ColorId and FontName are added to the pen ID control data, and, thereafter, the handwritten objects or character string objects entered with the pen 2500 are displayed using the ColorId and the FontName.

The pen color selection button definition data 1101 is definition data of the pen color selection button 81 displayed at the left-most. When the user presses the pen color selection button 81 with the pen 2500, ColorId of stroke data, which is handwritten with the pen 2500, is "Black", and a font of a text after handwriting recognition is " 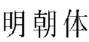 "("Ming typeface"). The pen color selection button data 1102 corresponds to a pen color selection button 82, which is displayed at second from the left. ColorId of the stroke data is "Red" and a font of a text after handwriting recognition is " 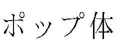 "("pop typeface"). Similarly, pen color selection button definition data items 1103-1106 define display positions, ColorIds, and fonts of text, of the pen color selection buttons 83-86.

Fig. 21A illustrates an example of a text font display highlighted in black and white based on the pen color selection button definition data. A text font display example is a descriptive display, but may be displayed when the user hovers the pen 2500. Fig. 21B illustrates an example of a text font displayed in color by a color supporting apparatus based on the pen color selection button definition data (should be displayed in color, but is shown in black and white for the sake of drawing convenience).

As illustrated in Fig. 21A, not only by using black-and-white highlighting but also by using the change of font, the black-and-white highlighting display can be more effective.

By defining the pen color selection button definition data in system definition data and in user defined data, and providing a user defined data change form for changing the pen color selection button definition data to the user defined data, the user can change to a personalized color selection button after handwritten sign-in authentication. Therefore, the correspondence between ColorId and fonts is only an example.

Setting contents of the pen color selection button are used in step S6 (coordinate complement display data) of Fig. 32, step S82 (character string object display data) of Fig. 39, and step S100 (object display data) of Fig. 39.

### <Work-specific font set selection button definition data>

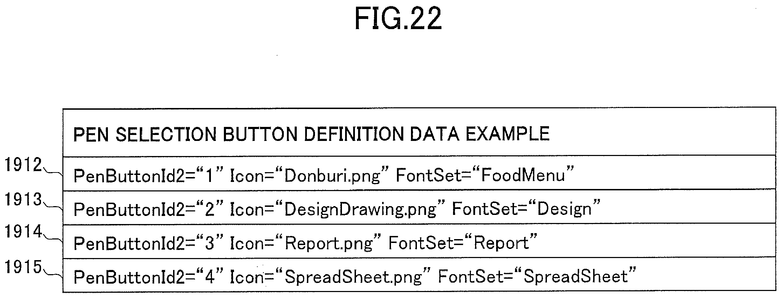

Next, a method for selecting a font set using buttons will be described with reference to Fig. 22 and Figs. 23A to 23D. Fig. 22 is an example of work-specific font selection button definition data. The work-specific font set selection button definition data items 1912-1915 are definition data items that associate work-specific font set selection buttons 331-334, which are displayed on the display 220, with FontSets. The work-specific font set selection button definition data items 1912-1915 include a pen button ID2 (PenButtonId2), an icon file (Icons), and a font set (FontSet).

Figs. 23A-23D are an example of work-specific font set selection buttons 331-334 displayed on a display 220. Fig. 23A is a work-specific font set selection button 331 for a font set for a food menu. Fig. 23B is a work-specific font set selection button 332 for a font set for drawings. Fig. 23C is a work-specific font set selection button 333 for a font set for a report. Fig. 23D is a work-specific font set selection button 334 for a font set for table creation. The work-specific font set selection buttons 331-334 are displayed by the icon files of Fig. 22. It is assumed that the work-specific font set selection buttons 331 to 334 are displayed from left to right in the ascending order of pen button ID2.

A business-specific font set selection button definition data 1912 is definition data of a business-specific font set that is displayed at left-most. When the user presses the work-specific font set selection button 331 with the pen 2500, PenId of the pen 2500 and a FontSet of "FoodMenu" are set in the pen ID control data. When the user presses the work-specific font set selection button 332 with the pen 2500, PenId of the pen 2500 and a FontSet of "Design" are set in the pen ID control data. When the user presses the work-specific font set selection button 333 with the pen 2500, PenId of the pen 2500 and a FontSet of "Report" are set in the pen ID control data. When the user presses the work-specific font set selection button 334 with the pen 2500, PenId of the pen 2500 and a FontSet of "Spreadsheet" are set in the pen ID control data.

As described above, the user can freely select color of the pen 2500 and a font set. It is noted that the display unit 22 may display selection buttons for the business-specific font set.

Setting contents of the work-specific font set selection buttons are used in step S82 (character string object display data) of Fig. 39.

### <Display example of selectable candidates>

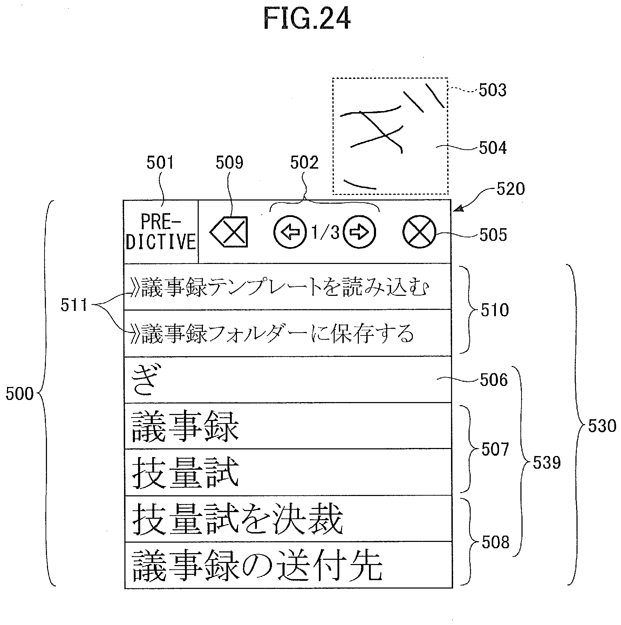

FIG. 24 is an example of an operation guide and a selectable candidate 530 displayed by the operation guide. The user handwrites the handwritten object 504 (due to the timeout of the selectable candidate display timer) so that the operation guide 500 is displayed. The operation guide 500 includes an operation header 520, an operation command candidate 510, a handwriting recognition character string candidate 506, a converted character string candidate 507, a character string/predictive conversion candidate 508, and a handwritten object rectangular area display 503. The selectable candidate 530 includes the operation command candidate 510, the handwriting recognition character string candidate 506, the character string/predictive conversion candidate 508. In this example, no language-wise converted character string is displayed. However, there is a case in which a language-wise converted character string is displayed. The selectable candidate 530, excluding the operation command candidate 510, is called the character string candidate 539.

The operation header 520 has buttons 501, 509, 502, and 505. The button 501 receives a switching operation between the predictive conversion and "kana" conversion. In an example of FIG. 24, when a user presses a button 509 indicating "prediction," the handwritten input unit 21 receives the button and notifies the handwritten input display control unit 23 thereof, and the display unit 22 changes the display to the button 509 indicating "Kana." After the change, the character string candidates 539 are arranged in descending probability order of "Kana Conversion".

The button 502 operates the candidate display page. In an example of Figure 24, the candidate display page has three pages, and currently, the first page is displayed. The button 505 receives "erase" of the operation guide 500. When the user presses the button 505, the handwritten input unit 21 receives the button and notifies the handwritten input display control unit 23 thereof, and the display unit 22 erases the display other than the handwritten object. The button 509 receives a collective display deletion. When the user presses the button 509, the handwritten input unit 21 receives and notifies the handwritten input display control unit 23 thereof, and the display unit 22 deletes all displays shown in Fig. 24, including handwritten objects, to allow the user to rewrite handwriting from the beginning.

The handwritten object 504 is a letter " 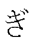 " that is handwritten by the user. A handwritten object rectangular area display 503 surrounding the handwritten object 504 is displayed. The displaying procedure will be described with reference to sequence diagrams of Fig. 32 to Fig. 39. In an example of FIG. 24, the handwritten object rectangular area display 503 is displayed in a dotted frame.

In each of the handwriting recognition character string candidate 506, the converted character string candidate 507, and the character string/predictive conversion candidate 508, character string candidates are arranged in probability descending order. The " 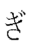 " of the handwriting recognition character string candidate 506 is a candidate of the recognition result. In this example, the display apparatus 2 correctly recognizes " 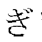 "("gi").

The converted character string candidate 507 is a converted character string candidate(s) converted from a language-wise character string candidate. In this example, " 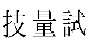 " is an abbreviation of " 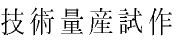 "(technical mass production trial). The character string/predictive conversion candidate 508 is a language-wise character string candidate or a predictive character string candidate converted from a converted character string candidate. In this example, " 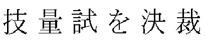 "(decision on technical mass production trial) and " 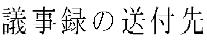 "(transmission destination of meeting minutes) are displayed.

An operation command candidate 510 is an operation command candidate selected based on the operation command definition data items 701-703, 709-716, 723-728 of Fig. 11A. In an example of Fig. 24, the initial letter of line "〉〉 "511 indicates an operation command candidate. In Fig. 24, with respect to the " 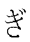 ", which is the handwritten object 504, because there is no selected object, and the " 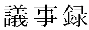 ", which is a character string candidate of the " 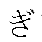 ", is partially matched with the operation command definition data items 701 and 702 illustrated in Fig. 11A, they are displayed as operation command candidates 510.

When the user selects " 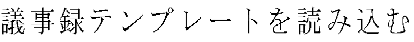 "(Read the minutes template), the operation command defined by the operation command definition data 701 is executed, and when the user selects" 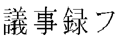 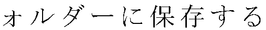 "(Save in the minutes folder), the operation command defined by the operation command definition data 702 is executed. As described above, the operation command candidates are displayed when the operation command definition data items including the converted character string are found. Therefore, they are not always displayed.

As illustrated in FIG. 24, the character string candidates and the operation command candidates are displayed at the same time (together), so that the user can select either the character string candidate or the operation command the user wishes to enter.

### <Example of specifying selected object>

In the display apparatus according to an embodiment of the present invention, it is possible for a user to specify a selected object by selecting it by handwriting. The selected object becomes a target of editing or modification.

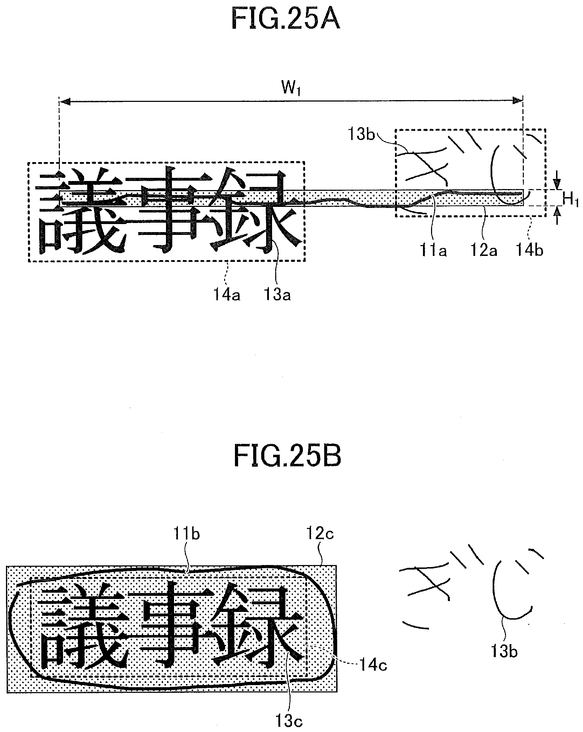

Figs. 25A to 25D are drawings illustrating an example of specifying a selected object. In Figs. 25A to 25D, a black solid line is used for displaying a handwritten object 11, gray highlighting is used for displaying a handwritten object rectangular area 12, a black line is used for displaying a determined object 13, and a dotted line is used for displaying a selected object rectangular area 14. It should be noted that a lowercase letter is appended to symbols to be further distinguished. Further, as a determination condition (whether or not a predetermined relationship exists) for determining a determined object as a selected object, the extending-over line determination condition 406 or the enclosing line determination condition 407 of the defined control data shown in Fig. 7A is used.

Fig. 25A illustrates an example in which two determined objects 13a and 13b written horizontally are specified by a user using an extending-over line (handwritten object 11a). In this example, a length HI, of the shorter side of the rectangular region 12a, and a length W1, of the longer side of the rectangular region 12a, satisfy the condition of the extending-over line determination condition 406, and an overlap rate with the determined objects 13a and 13b satisfies the condition of the extending-over line determination condition 406. Therefore, both determined objects 13a and 13b (" 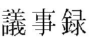 " and " 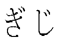 ") are specified as selected objects.

Fig. 25B is an example in which a determined object 13c written horizontally is specified by an enclosing line (handwritten object 11b). In this example, only the determined object 13c, which is " 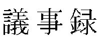 "(minutes)," in which the overlap rate of the determined object 13c and the handwritten object rectangular area 12c satisfies the condition of the enclosing line determination condition 407, is specified as the selected object.

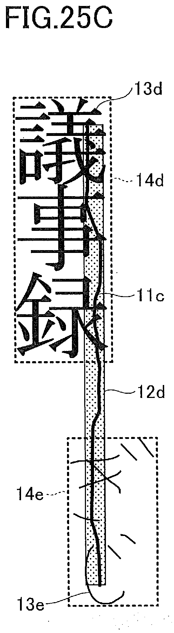

Fig. 25C is an example in which a plurality of determined objects 13d and 13e written vertically are specified by an extending-over line (handwritten object 11c). In this example, as in Fig. 25A, the length HI, of the shorter side of the handwritten object rectangular area 12d, and the length W1, of the longer side of the handwritten object rectangular area 12d, satisfy the condition of the extending-over line determination condition 406, and the overlap rates of the two determined objects 13d and 13e (" 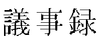 " and " 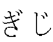 "), respectively, satisfies the condition of the extending-over line determination condition 406. Therefore, both determined objects 13d and 13e (" 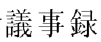 " and " 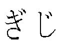 ") are specified as selected objects.

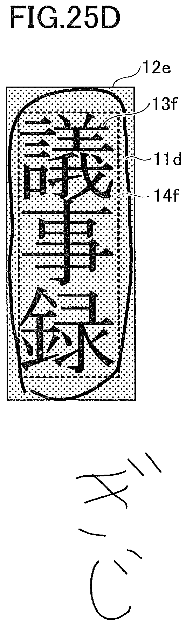

Fig. 25D is an example in which a vertically written determined object 13f is specified by an enclosing line (handwritten object 11d). In this example, as in Fig. 25B, only the determined object 13f of " 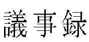 " is specified as the selected object.

### <Display example of operation command candidate>

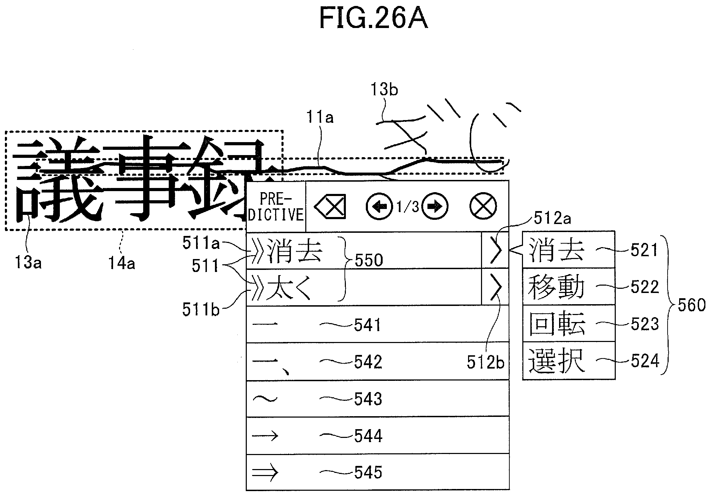

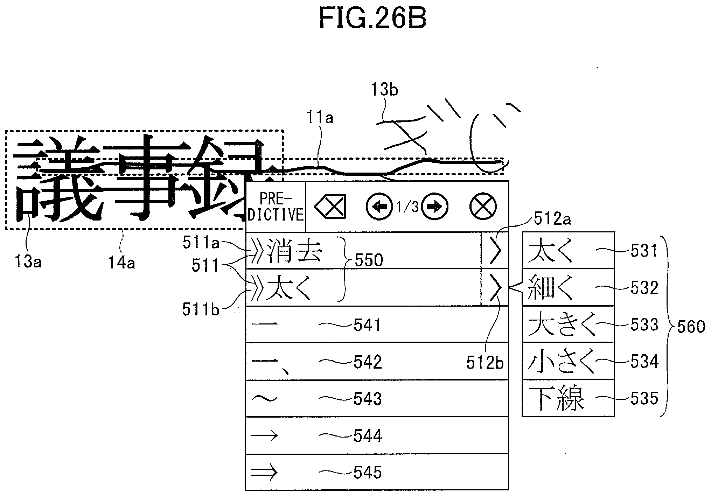

Figs. 26A and 26B illustrate display examples of operation command candidates based on the operation command definition data when the handwritten object is present, illustrated in Fig. 13. Fig. 26A is an operation command candidate related to editing, and Fig. 26B is an operation command candidate related to modification. Fig. 26A illustrates an example in which a selected object is specified using a handwritten object 11a in Fig. 25A.

As illustrated in Fig. 26A and Fig. 26B, a main menu 550 includes operation command candidates that are displayed following the initial letter of line "〉〉 "511. The main menu 550 displays the last executed operation command name or the first operation command name in the operation command definition data. The first line's initial character "〉〉 " 511a indicates an operation command candidate related to editing, and the second line's initial character "〉〉 " 511b indicates an operation command candidate related to modification.

"〉 "512 at the end of the line indicates that there is a sub-menu (an example of a sub-menu button). The first line of ">" 512a is used to display a sub-menu (last selected) of the operation command candidate related to editing, and the second line of ">" 512b is used to display the remaining sub-menu of the operation command candidate related to modification. When the user presses "〉 "512, a sub-menu 560 appears to the right. The sub-menu 560 displays all the operation commands defined in the operation command definition data. In a display example of Fig. 26A, the sub-menu 560 corresponding to the first line "〉 "512a is displayed when the main menu is displayed. The sub-menu 560 may be displayed by the pressing of the "〉 " 512a button of the first line.

When the user presses any of the operation command names with a pen, the handwritten input display control unit 23 executes the Command of the operation command definition data associated with the operation command name for the selected object. In other words, "Delete" is executed when " 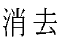 "521 is selected, "Move" is executed when " 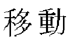 " 522 is selected, "Rotate" is executed when " 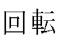 "523 is selected, and "Select" is executed when " 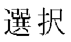 "524 is selected.

For example, if the user presses " 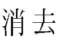 "("erase") 521 with a pen, the " 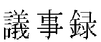 "("minutes") and " 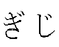 "("gi-ji") can be erased. When the user presses " 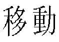 "("move") 522, " 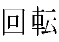 "("rotate") 523, and " 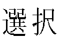 "("select") 524, a bounding box (the outer rectangle of the selected object) is displayed so that the user can move or rotate the bounding box with a pen drag action. When the user presses " 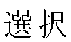 "524, other bounding box operations can be performed.

Character string candidates other than the operation command candidates "-"541, "-"542, "∼"543, "→"544 and "⇒" 545 are the recognition results of the extending-over line (handwritten object 11a). If the user intends to enter the character string instead of the operation command, the character string candidate can be selected.

In Fig. 26B, the sub-menu of Fig. 26B is displayed by pressing the second line ">" 512b. In a display example of Fig. 26B, the main menu 550 and the sub-menu 560 are displayed as in Fig. 26A. When " 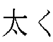 "(thick) 531 is selected, the handwritten input display control unit 23 executes "Thick" on the selected object based on the operation command definition data of FIG. 13. When " 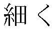 "(thin) 532 is selected, the handwritten input display control unit 23 executes "Thin" on the selected object. When " 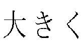 "(large) 533 is selected, the handwritten input display control unit 23 executes "Large" on the selected object. When " 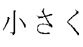 "("Small") 534 is selected, the handwritten input display control unit 23 executes "Small" on the selected object, and when " 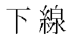 "("underline") 535 is selected, the handwritten input display control unit 23 executes "Underline" on the selected object.

Further, fixed values are defined separately for: how thicken is to be achieved when " 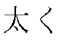 "(thick) 531 is selected; how thin is to be achieved when " 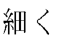 "(thin) 532 is selected; how large is to be achieved when " 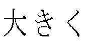 "(large) 533 is selected; how small is to be achieved when " 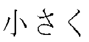 "(small) 534 is selected; line type when " 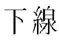 "(underline) 535 is selected, and the like. Alternatively, it is further preferable that, when the sub-menu of Fig. 26B is selected, a selection menu is opened to allow the user to perform adjustment.

When the user presses the " 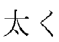 "(thick) 531 with a pen, the handwritten input display control unit 23 thickens the lines constituting the determined objects 13a and 13b (" 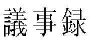 " and " 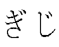 "). When the user presses the " 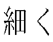 "(thin) 532 with a pen, the handwritten input display control unit 23 can narrow the lines constituting the determined objects 13a and 13b (" 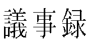 " and " 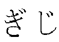 "). When the user presses the " 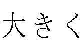 "(large) 533 with a pen, the handwritten input display control unit 23 can increase the size. When the user presses down the" 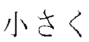 "(small) 534 with a pen, the handwritten input display control unit 23 can reduce the size. When the user presses the" 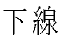 "(underline) 535 with a pen, the handwritten input display control unit 23 can add underlines.

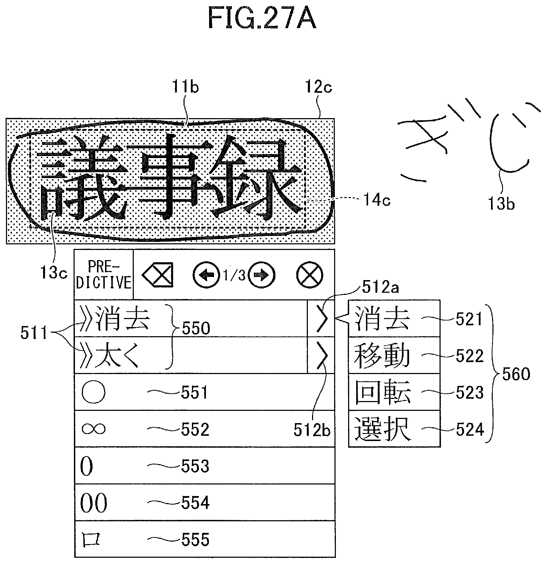

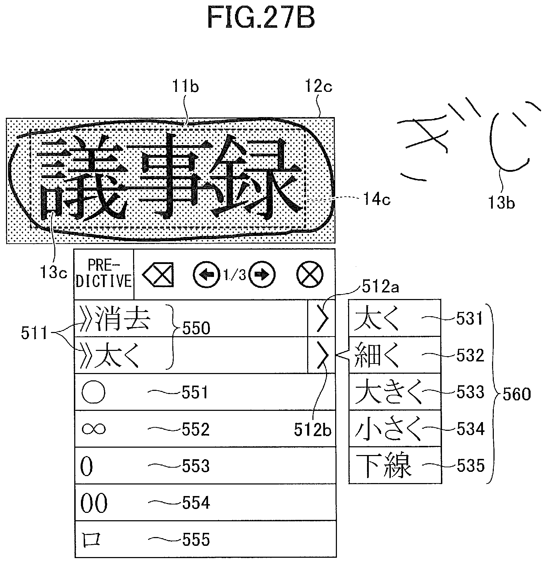

Figs. 27A and 27B illustrate display examples of operation command candidates based on the operation command definition data when the handwritten object is present, illustrated in Fig. 13. Being different from Fig. 26A and Fig. 26B, Fig. 27A and Fig. 27B illustrate an example in which a selected object is specified by the handwritten object 11b (enclosing line) of Fig. 25B. As can be seen from the comparison of Figs. 26A-26B and Figs. 27A-27B, there is no difference in the displayed candidate operation commands depending on whether the handwritten object is an extending-over line or an enclosing line. This is because, when a selected object is specified, the handwritten input display control unit 23 displays the operation command candidates on the display unit 22. However, the handwritten input display control unit 23 may change the operation command candidates in accordance with the handwriting object by recognizing the handwritten object. In this case, the recognized handwritten objects (" 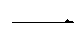 ", "○", etc.) are associated with the operation command definition data as shown in Fig. 13.

In Figs. 27A and 27B, "○" 551, "∞" 552, "0" 553, "00" 554, and " 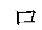 " 555, which are character string candidates other than the operation command candidates, are the recognition results of the enclosing line (handwritten object 11b), and the character string candidate can be selected if the user intends to enter the character string instead of the operation command.

### <Example of input of angle information>

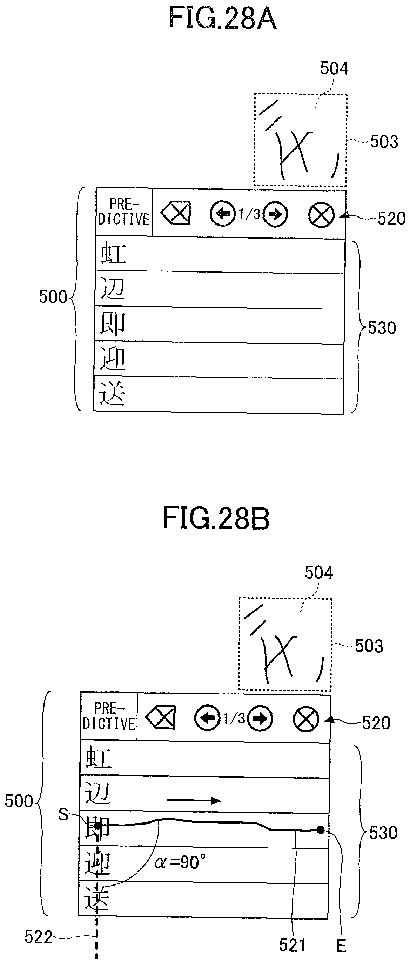

Next, a method for entering angle information will be described with reference to Figs. 28A to 28C. Figs. 28A to 28C are examples of a drawing illustrating an input method of angle information. Figs. 28A to 28C illustrate a case in which the user present in the 3 o'clock direction of the display apparatus 2 inputs the angle information. Because characters handwritten from the 3 o'clock direction are correctly recognized when they are rotated 90 degrees clockwise, it is preferable that 90 degrees angle information is entered.

Fig. 28A shows a state in which the operation guide 500 is displayed because a user present in the three o'clock direction of the display apparatus 2 handwrites " 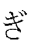 "in a state in which the angle information of the pen ID control data is 0 degrees (initial value). Because the display apparatus 2 recognizes a character " 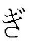 " that is handwritten from the 3 o'clock direction using angle information remaining at 0 degrees, a selectable candidate 530 that is different from the expectation is displayed.

When entering the angle information, the user handwrites a straight line from top to bottom as seen by the user in the operation guide 500. Figure 28B illustrates an example of such a straight line 521. A counterclockwise angle α of the strait line 521, which is formed with reference to the 6 o'clock direction corresponding to the angle information of 0 degrees, is the angle information. In other words, a counterclockwise angle α, which is formed between the line 522 that is drawn from a starting point S downwards in the 6 o'clock direction, and the straight line 521 entered by the user, is the angle information. In a simple expression, the direction of the end point of the line 521 is the angular information. Therefore, the angle information entered by the user in Fig. 28B is 90 degrees.

It should be noted that, with respect to a method for detecting a straight line, for example, the coordinates from the starting point S to the end point E are converted into a straight line by the least squares method, and obtained correlation coefficient is compared with a threshold value to determine whether or not the straight line is used.

Immediately after the user starts writing the straight line 521 (immediately after the pen 2500 touches the starting point S of the straight line 521), the display apparatus 2 erases the operation guide 500. Immediately after the writing of the straight line 521 is completed (immediately after the pen 2500 is separated from the end point E of the straight line 521), the display apparatus 2 searches for the closest value of the above-described angle α from 45 degrees, 90 degrees, 135 degrees, 180 degrees, 215 degrees, 270 degrees, 315 degrees, and 360 degrees, and determines the value as the angle information. The angle α itself may be the angle information. The determined angle information is set to "Angle of the pen ID control data. The pen event transmission unit 41 of the pen 2500 transmits the PenId to the display apparatus 2 when the tip of the pen is pressed for handwriting or the like. Therefore, the display apparatus 2 can associate the angle information with the pen ID control data.

It should be noted that it is only the operation guide 500 that is capable of allowing the user to handwrite a straight line to enter the angle information. Accordingly, when the user handwrites the straight line outside the operation guide 500, the straight line is recognized as " 1 " or " 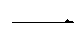 " or the like, and when the user handwrites the straight line inside the operation guide 500, the angle information can be entered. In other words, the handwriting recognition control unit 26 detects a straight line from a predetermined range and converts stroke data, which is handwritten outside the predetermined range, into text data.

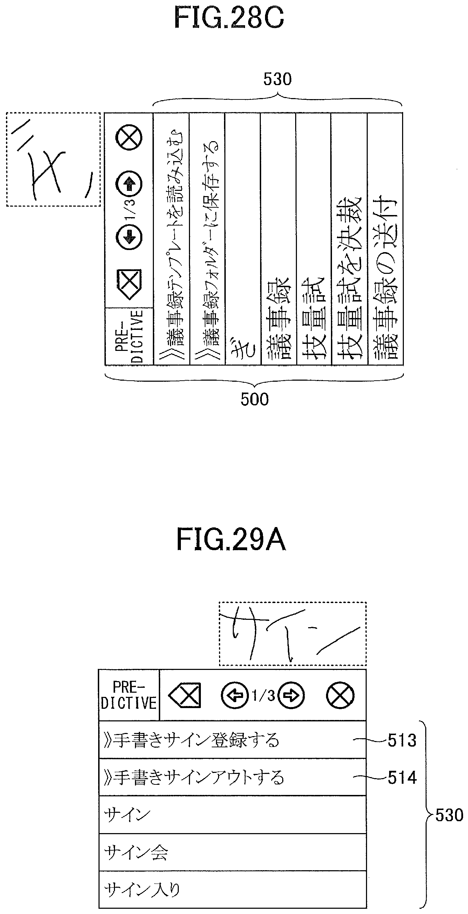

Fig. 28C illustrates the operation guide 500 immediately after the operation of Fig. 28B. Because 90 degrees are set as the angle information (Angle) in the pen ID control data, the handwritten object (stroke data) is internally rotated in a clockwise direction by 90 degrees, handwriting recognition is performed for the rotated handwritten object, and the operation guide 500 is rotated in a counterclockwise direction by 90 degrees to be displayed. It should be noted that the angle information may be entered manually by the user from a menu.

### <Example of registering handwritten signature data>

Next, an example of the registration of handwritten signature data will be described with reference to Figs. 29A to 29C. Figs. 29A to 29C are drawings illustrating a method of registering handwritten signature data. First, Fig. 29A is an example of a selectable candidate 530 displayed when the user handwrites " 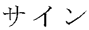 " (signature). There are two operation commands 513 and 514 of " 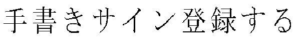 "(perform handwritten signature registration) and " 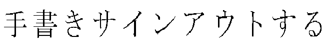 " (perform handwritten sign out), and character string candidates " 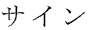 "(signature), " 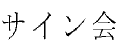 "(signature session), and " 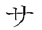 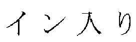 "(signed), displayed in the selectable candidate 530." The two operation commands 513 and 514 are displayed because " 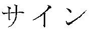 "is included in "String" of the operation command definition data 713 and 715 of FIG. 11A.

When the user presses " 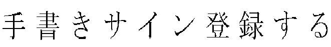 "(perform handwritten signature registration) with the pen 2500, the handwritten signature registration form 561 of Fig. 29B is added to the handwritten input storage unit 25 and is displayed on the operation screen 101. For example, the operation guide 500 of Fig. 29A is erased and the handwritten signature registration form 561 is displayed in the same location as the operation guide 500. The handwritten signature registration form 561 includes, from the top row, a name entry field 561a, a signature entry fields 561b-561d, and a registration confirmation field 561e. The user enters: a name text in the name entry field 561a; a first handwritten signature, a second handwritten signature, a third handwritten signature in the signature fields 561b-561d; and a check mark or a cancellation mark in the registration confirmation field 561e. The name text is a display name of the user, and is converted to text data. Three handwritten signatures are entered because the handwritten signature differs each time the user writes it. Each of the feature values of the handwritten signatures is registered base on the assumption that handwritten signature data items do not match perfectly.

It should be noted that, in general, the handwritten signature is a character related to the user, such as a name of the user, and may be, other than the name of the user, a number such as an employee number, a nick name, a portrait, or the like. In addition, the handwritten signature is not limited to a character related to the user, but may be some kind of handwritten object. The handwritten signature may be, for example, a circle, a triangle, a square, a symbol, or combinations thereof. With respect to the handwritten signature, characteristic data is not limited to coordinates. Therefore, even if users with the same family name (e.g. Mr. Suzuki) both register the handwritten signature " 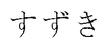 ", it is still possible to authenticate them correctly.

When the user enters handwritings in the handwritten signature registration form 561 according to the instructions, the handwritten signature registration form 561 should look as illustrated in Fig. 29C. When the user handwrites the "check mark" in the registration confirmation field 561e, the handwritten signature data is registered in the handwritten signature data storage unit 39 and the handwritten signature registration form 561 is erased. In response to the registration, a number is given to SignatureId. AccountId, to which a number is similarly given, and a name text in the name entry field 561a are associated with the SignatureID, and associated result is registered in the user defined data. When the user handwrites a user name and signs in, the SignatureId, which is associated with AccountId in the user defined data, is acquired, and is registered in the pen ID control data in association with the PenId of the pen 2500 that is used in the handwritten sign-in. Thereafter, if the user uses the pen 2500, the pen ID is transmitted to the display apparatus 2, the AccountId associated with the PenId is identified in the pen ID control data, and it is possible for the user to perform the operation command using the user defined data without intentional operation by the user.

If "×" is handwritten in the registration confirmation field 561e, the handwritten signature registration is canceled and the handwritten signature registration form 561 is erased. It should be noted that, if an error occurs in the registration, the error is displayed in the system reservation area of the operation screen 101.

As described above, the handwritten input display control unit 23 can receive the handwritten input without distinguishing between the handwritten input to the handwritten signature registration form 561 and the handwritten input other than the handwritten signature registration form 561.

### <Example of sign-in by handwriting>

Next, a method for a user to sign in after the handwritten signature data is registered will be described with reference to Fig. 30. Fig. 30 is a drawing illustrating an example of an operation guide 500 displayed when a user handwrites " 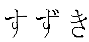 "(suzuki) which is the handwritten signature data registered by the user. Because " 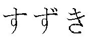 "(suzuki) is registered in the operation command definition unit 33 as handwritten signature data, the " 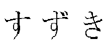 (suzuki)" matches the handwritten signature data. Accordingly, an operation command 512 of" 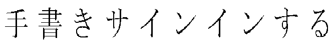 "(sign-in with handwriting) is displayed.

In addition, because the handwritten signature data is matched, SignatureId representing " 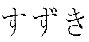 "(suzuki) is identified, and the user defined data with AccountId associated with the SignatureId is identified.

If the user selects the operation command 512," 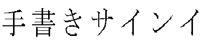 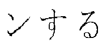 "(sign-in with handwriting), the AccountId of " 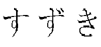 (suzuki)"is associated with the PenId of the pen 2500 used by the user, and is added to the pen ID control data so that the user defined data of " 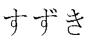 (suzuki)"can be used when the operation command is used.

Because the registration of the handwritten signature data using the handwritten signature registration form 561 of Fig. 30 is controlled as part of a normal handwritten input such as a character, the handwritten signature registration form 561 is displayed on the same operation screen as the operation screen on which characters or the like are handwritten. There is no difference in the handwritten operation inside and outside of the handwritten signature registration form 561 so that the user can complete the entry into the handwritten signature registration form 561 simply by handwriting into the areas delimited by ruled lines of the handwritten signature registration form 561.

### <Example of change operation of user defined data>

Next, a method of changing user defined data will be described with reference to Figs. 31A and 31B. Figs. 31A and 31B are drawings illustrating a method of changing user defined data. Fig. 31A is an example of the operation guide 500 displayed when a user handwrites " 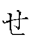 ". In the operation command definition data 716 illustrated in Fig. 11A, " 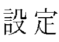 "(setting) is defined in String, and the predictive character string of " 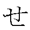 " contains " 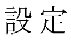 "(setting). Therefore, the operation command " 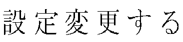 "(Change the setting) is displayed.

When the user selects " 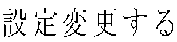 "(Change Settings) with the pen 2500 used for handwritten signin, the user's AccountId, which is associated with the PenId of the pen 2500, is identified according to the pen ID control data. According to the above, the user defined data of the user who has signed in is identified, and the user defined data change form 562 of Fig. 31B is added to the handwritten input storage unit 25 to be displayed on the operation screen 101. In an example of Figs. 31A and 31B, the user defined data change form 562 is created in accordance with the user defined data 718 of FIG. 14. The user defined data change form 562 includes a name field 562a, a password field 562b, a folder user name field 562c, a folder password field 562d, a folder file name field 562e, and a registration or cancellation field 562f.

It should be noted that, if the user has not signed in beforehand, the display apparatus 2 cannot identify the user's AccountId, resulting in an error, and an error message is displayed in the system reservation area of the operation screen 101.

The user handwrites a password in the password field 562b of the user defined data change form 562 of Fig. 31B. The user handwrites a folder user name in the folder user name field 562c. The user handwrites a folder password in the folder password field 562d. The user handwrites a folder file name in the folder file name field 562e. The user handwrites a check mark or "×" in the registration or cancellation field 562f. According to the above, the change of the user defined data is performed, and the user defined data change form 562 is erased.

As described above, it is possible for the user to cause the user defined data change form 562 to be displayed, by handwriting the stroke data used for displaying the user defined data change form 562, and it is possible to change the user defined data freely. The handwritten input display control unit 23 receives handwritten input without distinguishing between handwritten input to the user defined data change form 562 and handwritten input other than the user defined data change form 562.

It should be noted that an AccountUsername included in the user defined data is automatically displayed in the name field 562a. The user defined data change form 562 can be used not only for the change but also for the registration.

Changes to user defined data using the user defined data change form 562 of Figs. 31A and 31B are controlled as part of normal handwritten input, such as characters, so that the user defined data change form 562 is displayed on the same operation screen as the operation screen on which the characters and the like are handwritten. There is no difference between the handwriting operation inside of the user defined data change form 562 and the handwriting operation outside of the user defined data change form 562. The user can complete the input to the user defined data change form 562 simply by handwriting into the delimited areas of user defined data change form 562.

### <Operation Procedure>

Operations of the display apparatus 2 will be described with reference to the above-described configurations and Figs. 32 to 39. Figs. 32 to 39 are sequence diagrams illustrating processes in which the display apparatus 2 displays character string candidates and operation command candidates. The processes illustrated in Fig. 32 start when the display apparatus 2 starts (when the application starts). It should be noted that, in Figs. 32 to 39, the functions illustrated in Figs. 6A and 6B are indicated by reference numerals for the sake of space convenience.

It is assumed that, before the entry of handwritten data is initiated, the user has selected a color by executing pen color selection buttons 81-86 or operation command definition data items 709, 710, 711, 720, 721, and 722 (PenId has been identified). Therefore,
a. A pen button ID, a ColorId, and a font are identified according to the pen color selection button definition data.
b. The PenId, the ColorId, and the FontName are registered in the pen ID control data.
   S1: First, the handwritten input display control unit 23 transmits the start of the handwritten object to the handwritten input storage unit 25. The handwritten input storage unit 25 allocates a handwritten object area (a memory area for storing handwritten objects). The handwritten object area may be allocated after a user touches the handwritten input unit 21 with a pen.
   S2: Next, the user touches the handwritten input unit 21 with a pen. The handwritten input unit 21 detects the pen-down and transmits it to the handwritten input display control unit 23.
   S3: The handwritten input display control unit 23 transmits a stroke start to the handwritten input storage unit 25, and the handwritten input storage unit 25 allocates a stroke area.
   S4: When the user moves the pen in contact with the handwritten input unit 21, the handwritten input unit 21 transmits pen coordinates to the handwritten input display control unit 23.
   S5: The handwritten input display control unit 23 specifies the PenId received from the pen 2500 at the same time as a coordinate input, and acquires the current pen ID control data stored in the pen ID control data storage unit 36. Because the PenId is transmitted when entering coordinates, the stroke and the PenId are associated with each other. The pen ID control data storage unit 36 transmits the pen ID control data to the handwritten input display control unit 23. It should be noted that the angle information is still zero as an initial value. There is no AccountId because the user has not signed in.
   S6: The handwritten input display control unit 23 transmits the pen coordinate complement display data (data interpolating discrete pen coordinates) to the display unit 22. The display unit 22 interpolates the pen coordinates with the pen coordinate complement display data and specifies the line type and thickness from the color definition data based on the ColorId of the pen ID control data to display the stroke.
   S7: The handwritten input display control unit 23 transmits pen coordinates, the reception time thereof, ColorId, and the angle information to the handwritten input storage unit 25. The handwritten input storage unit 25 adds the pen coordinates to the stroke. While the user is moving the pen, the handwritten input unit 21 repeats transmissions of the pen coordinates to the handwritten input display control unit 23 periodically. Processing of steps S4 to S7 is repeated until the pen-up.
   S8: When the user releases the pen from the handwritten input unit 21, the handwritten input unit 21 transmits the pen-up to the handwritten input display control unit 23.
   S9: The handwritten input display control unit 23 transmits the end of the stroke to the handwritten input storage unit 25, and the handwritten input storage unit 25 determines the pen coordinates of the stroke. After the determination of the pen coordinates of the stroke, the pen coordinates cannot be added to the stroke.
   S10: Next, the handwritten input display control unit 23 transmits, to the handwritten input storage unit 25, an acquisition request for an overlap status between the handwritten object neighboring rectangular area and the stroke rectangular area based on the handwritten object neighboring rectangular area, the handwritten input storage unit 25 calculates the overlap status, and transmits the overlap status to the handwritten input display control unit 23.
      Subsequent steps S11 to S17 are performed when the handwritten object neighboring rectangular area and the stroke rectangular area are not overlapped with each other.
   S11: When the handwritten object neighboring rectangular area and the stroke rectangular area are not overlapped with each other, one handwritten object is determined. Therefore, the handwritten input display control unit 23 transmits a retained data clear to the handwriting recognition control unit 26.
   S12 to S14: The handwriting recognition control unit 26 transmits the retained data clear to the character string conversion control unit 28, the predictive conversion control unit 30, and the operation command recognition control unit 32, respectively. The handwriting recognition control unit 26, the character string conversion control unit 28, the predictive conversion control unit 30, and the operation command recognition control unit 32 clear the data pertaining to the character string candidates and the operation command candidates that have been retained. It should be noted that, at the time of clearing, the last handwritten stroke is not added to the handwritten object.
   S15: The handwritten input display control unit 23 transmits the completion of the handwritten object to the handwritten input storage unit 25. The handwritten input storage unit 25 determines the handwritten object. The determination of a handwritten object means that one handwritten object has been completed (no more strokes are added).
   S16: The handwritten input display control unit 23 transmits a start of a handwritten object to the handwritten input storage unit 25. In preparation for the handwriting start (pen down) of the next handwritten object, the handwritten input storage unit 25 allocates a new handwritten object area.
   S17: Next, the handwritten input display control unit 23 transmits a stroke addition with respect to the stroke completed in step S9 to the handwritten input storage unit 25. When steps S11 to S17 are executed, the additional stroke is the first stroke of the handwritten object, and the handwritten input storage unit 25 adds the stroke data to the handwritten object being started. If steps S11-S17 have not been performed, the additional strokes are added to the handwritten objects that has been being handwritten.
   S18: Subsequently, the handwritten input display control unit 23 transmits the stroke addition to the handwriting recognition control unit 26. The handwriting recognition control unit 26 adds the stroke data to a stroke data retaining area (an area in which stroke data is temporarily stored) in which character string candidates are stored.
   S19: The handwriting recognition control unit 26 performs gesture handwriting recognition on the stroke data retaining area. The gesture handwriting recognition refers to recognition of angle information from a straight line. It should be noted that, because the gesture handwriting recognition is performed inside the operation guide 500, the handwriting recognition control unit 26 detects a straight line inside the operation guide 500. The position information of the operation guide 500 is transmitted to the handwriting recognition control unit 26 in step S67, which will be described later.
   S20: When a straight line in the operating guide 500 is detected, a counterclockwise angle α, which is formed between the line 522, which is drawn from a starting point of the straight line downwards to the 6 o'clock direction, and the straight line 521, which is entered by the user, is determined in units of 45 degrees. Further, the handwriting recognition control unit 26 stores the determined angle information in the pen ID control data storage unit 36 by associating the determined angle information with the PenId included in the stroke data of the straight line 521. It should be noted that step S20 is performed when a straight line is detected in the operation guide 500.
   S20-2: The handwriting recognition control unit 26 clears a selectable candidate display rectangle.
   S21: Next, the handwriting recognition control unit 26 specifies the PenId received from the handwritten input unit 21 and acquires the angle information of the current pen ID control data from the pen ID control data storage unit 36.
   S22: The handwriting recognition control unit 26 rotates, in a clockwise direction with the acquired angle information, the stroke data in the stroke data retaining area.
   S23: The handwriting recognition control unit 26 transmits the stroke data after rotation to the handwritten signature authentication control unit 38. As described above, the stroke data is always transmitted to the handwritten signature authentication control unit 38 under the condition in which it is unclear whether or not the stroke data is a handwritten signature.
   S24: The handwritten signature authentication control unit 38 receives the stroke data and receives the registered handwritten signature data from the handwritten signature data storage unit 39. Further, the handwritten signature authentication control unit 38 compares the stroke data with the handwritten signature data (matching) and retains the handwritten signature authentication result so as to obtain the authentication result of the handwritten signature in step S61 in the later stage. When authentication is successful, AccountId is registered in the pen ID control data.
   S25: Next, the handwriting recognition control unit 26 performs handwriting recognition on the stroke data, and performs processing of the form when the registration or cancellation field of the form is "check mark" or "×", and, otherwise, performs processing of the normal handwriting recognition.
   S26: When the registration or cancellation field of the handwritten signature data registration form is a "check mark," the handwriting recognition control unit 26 transmits the handwritten signature data (the stroke data) input by the user for the handwritten signature registration form to the handwritten signature authentication control unit 38. The handwritten signature registration form is generated in the handwritten input storage unit 25 by the handwritten input display control unit 23 in step S86, which will be described later.
   S27: The handwritten signature authentication control unit 38 registers the received handwritten signature data (stroke data) in the handwritten signature data storage unit 39. According to the above, a number is given to SignatureId. The SignatureId is returned to the handwriting recognition control unit 26. When the SignatureID and the name entered in the name entry field 561a of the handwritten signature registration form 561 are not included in the user defined data, user defined data is newly added, a number is given to AccountId, and the SignatureID is stored in the user defined data. If the name entered in the name field 561a is included in the user defined data, the SignatureId is saved in the user defined data. This process associates AccountId with SignatureId. It should be noted that, when user defined data is newly added, other values are not set, but it is possible for the user to perform registration and change through the user defined data change form.
   S28: The handwriting recognition control unit 26 deletes the handwritten signature registration form 561 from the handwritten input storage unit 25 upon registration of the handwritten signature data.
   S29: When a registration or cancellation field of the user defined data change form is a "check mark," the handwriting recognition control unit 26 transmits the change value input to the user defined data change form 562 generated by the handwritten input display control unit 23 in the handwritten input storage unit 25 in step S86, which will be described later, to the operation command definition unit 33.
   S30: Upon execution of the user defined data change, the handwriting recognition control unit 26 deletes the user defined data change form 562 from the handwritten input storage unit 25.
   S31: When the registration or cancellation field of the form added in step S86, which will be described later, is "×", the handwriting recognition control unit 26 deletes the form added in step S86 from the handwritten input storage unit 25.
   S33: When it is not the form processing, the handwriting recognition control unit 26 transmits the handwriting recognition character string candidates, which is the execution result, to the handwriting recognition dictionary unit 27. The handwriting recognition dictionary unit 27 transmits language-wise character string candidates, which are linguistically assumed to be correct, to the handwriting recognition control unit 26.
   S34: The handwriting recognition control unit 26 transmits the handwriting recognition character string candidate and the received language-wise character string candidates to the character string conversion control unit 28.
   S35: The character string conversion control unit 28 transmits the handwriting recognition character string candidates and the language-wise character string candidates to the character string conversion dictionary unit 29. The character string conversion dictionary unit 29 transmits the converted character string candidates to the character string conversion control unit 28.
   S36: The character string conversion control unit 28 transmits the received converted character string candidates to the predictive conversion control unit 30.
   S37: The predictive conversion control unit 30 transmits the received converted character string candidates to the predictive conversion dictionary unit 31. The predictive conversion dictionary unit 31 transmits the predictive character string candidates to the predictive conversion control unit 30.
   S38: The predictive conversion control unit 30 transmits the received predictive character string candidates to the operation command recognition control unit 32.
   S39: The operation command recognition control unit 32 transmits the received predictive character string candidates to the operation command definition unit 33. The operation command definition unit 33 transmits the operation command candidates to the operation command recognition control unit 32. Accordingly, it is possible for the operation command recognition control unit 32 to acquire the operation command candidates corresponding to the operation command definition data having a character string (String) matching the predictive string candidates.
      Thereafter, the display apparatus 2 performs processing in the similar manner until the transmission of the operation command candidates described in steps S40 to S47.
   S40: The character string conversion control unit 28 transmits the received converted character string candidates to the operation command recognition control unit 32.
   S41: The operation command recognition control unit 32 transmits the received converted character string candidates to the operation command definition unit 33. The operation command definition unit 33 transmits the operation command candidates to the operation command recognition control unit 32. Accordingly, it is possible for the operation command recognition control unit 32 to acquire the operation command candidates corresponding to the operation command definition data having a character string (String) matching the converted character string candidates.
   S42: The handwriting recognition control unit 26 transmits the handwriting recognition character string candidates and the language-wise character string candidates to the predictive conversion control unit 30.
   S43: The predictive conversion control unit 30 transmits the handwriting recognition character string candidates and the received language-wise character string candidates to the predictive conversion dictionary unit 31. The predictive conversion dictionary unit 31 transmits the predictive character string candidates to the predictive conversion control unit 30.
   S44: The predictive conversion control unit 30 transmits the received predictive character string candidates to the operation command recognition control unit 32.
   S45: The operation command recognition control unit 32 transmits the received predictive character string candidates to the operation command definition unit 33. The operation command definition unit 33 transmits the operation command candidates to the operation command recognition control unit 32. Accordingly, it is possible for the operation command recognition control unit 32 to acquire the operation command candidates corresponding to the operation command definition data having a character string (String) matching the predictive string candidates.
   S46: The handwriting recognition control unit 26 transmits the handwriting recognition character string candidates and the received language-wise character string candidates to the operation command recognition control unit 32.
   S47: The operation command recognition control unit 32 transmits the handwriting recognition character string candidates and the received language-wise character string candidates to the operation command definition unit 33. The operation command defining unit 33 transmits the operation command candidates to the operation command recognition control unit 32. Accordingly, it is possible for the operation command recognition control unit 32 to acquire the operation command candidates corresponding to the operation command definition data having a character string (String) matching the language-wise character string candidates.
   S48: Next, the handwriting recognition control unit 26 transmits the stroke addition to the operation command recognition control unit 32.
   S49: The operation command recognition control unit 32 transmits a request for position information of the determined object to the handwritten input storage unit 25. The handwritten input storage unit 25 transmits the position information of the determined object to the operation command recognition control unit 32.
   S50: In order to determine a selected object, the operation command recognition control unit 32 determines whether or not the position information of the stroke, which is received from the handwriting recognition control unit 26 in the stroke addition of step S48, is in a predetermined relationship with the position information of the determined object, which is received from the handwritten input storage unit 25, based on the extending-over line determination condition 406 and the enclosing line determination condition 407. The operation command recognition control unit 32 stores, as a selected object, a determined object that can be determined to be selected. Further, in this case, because the selected object is identified, the operation command candidates are acquired from the operation command definition unit 33.
      Further, the handwriting recognition control unit 26, the character string conversion control unit 28, the predictive conversion control unit 30, and the operation command recognition control unit 32 retain: the handwriting recognition character string candidates; the language-wise character string candidates; the converted character string candidates; the predictive character string candidates; the operation command candidates; and the data related to the selected object, so that the data can be acquired in steps S55 to S58 of the subsequent stage, respectively.
   S18-2: Right after transmitting the stroke addition to the handwriting recognition control unit 26 in step S18, the handwritten input display control unit 23 transmits the start of the selectable candidate display timer to the candidate display timer control unit 24. The candidate display timer control unit 24 starts the timer.
      The subsequent steps S51-S53 are performed when a pen-down occurs before a certain period of time elapses (before the timer expires).
   S51: When the user contacts the handwritten input unit 21 with a pen before the timer expires, the handwritten input unit 21 transmits a pen-down (the same event as in step S2) to the handwritten input display control unit 23.
   S52: The handwritten input display control unit 23 transmits a stroke start (the same as in step S3) to the handwritten input storage unit 25. The subsequent sequence is the same as in step S3 and thereafter.
   S53: Further, the handwritten input display control unit 23 transmits the selectable candidate display timer stop to the candidate display timer control unit 24. The candidate display timer control unit 24 stops the timer. This is because a pen-down was detected, and the timer is not necessary.
      Steps S54-S103 are performed when there is no pen-down (before the timer times out) before a certain period of time has elapsed. Accordingly, the operation guide 500 illustrated in Fig. 24 is displayed.
   S54: The candidate display timer control unit 24 transmits a timeout to the handwritten input display control unit 23 when the user does not contact the handwritten input unit 21 with a pen while the selectable candidate display timer is running.
   S55: The handwritten input display control unit 23 transmits an acquisition of the handwriting recognition character string/language-wise character string candidates to the handwriting recognition control unit 26. The handwriting recognition control unit 26 transmits the currently retained handwriting recognition character string/language-wise character string candidates to the handwritten input display control unit 23.
   S56: The handwritten input display control unit 23 transmits an acquisition of the converted character string candidates to the character string conversion control unit 28. The character string conversion control unit 28 transmits the currently retained converted character string candidates to the handwritten input display control unit 23.
   S57: The handwritten input display control unit 23 transmits an acquisition of the predictive character string candidates to the predictive conversion control unit 30. The predictive conversion control unit 30 transmits the currently retained predictive character string candidates to the handwritten input display control unit 23.
   S58: The handwritten input display control unit 23 transmits an acquisition of the operation command candidates to the operation command recognition control unit 32. The operation command recognition control unit 32 transmits the currently retained operation command candidates and the selected object to the handwritten input display control unit 23.
   S59: Further, the handwritten input display control unit 23 transmits an acquisition of an estimated writing character direction to the handwritten input storage unit 25. The handwritten input storage unit 25 determines the estimated writing character direction from the stroke addition time, the horizontal distance, and the vertical distance of handwritten object rectangular area, and transmits the estimated writing direction to the handwritten input display control unit 23.
   S60: Next, the handwritten input display control unit 23 specifies PenId received from the handwritten input unit 21 and acquires ColorId, FontName (or FontSet), AccountId, and angle information of the current pen ID control data from the pen ID control data storage unit 36 (does not acquire those not included in the pen ID control data).
   S61: The handwritten input display control unit 23 acquires the authentication result of the handwritten signature from the handwritten signature authentication control unit 38. According to the above, SignatureID of the user is acquired, so that when the operation command described below is executed, AccountId is associated with PenId and is registered in the pen ID control data. If the user signs in, the color definition data, which is associated with the user defined data identified by the AccountId, is identified so that handwritten data, in which the color data of the user defined data is highlighted in black and white, or text data converted from the handwritten data, can be displayed.
   S62: The handwritten input display control unit 23 produces the selectable candidate display data as shown in Fig. 24 from: the handwriting recognition character string candidates (" 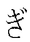 " in Fig. 24); the language-wise character string candidates (e.g., " 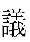 " not displayed in Fig. 24); the converted character string candidates (" 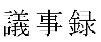 " and " 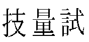 " in Fig. 24); the predictive character string candidates (" 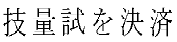 "and " 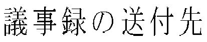 " in Fig. 24); the operation command candidates (" 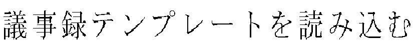 " and " 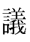 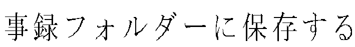 " in Fig. 24); each selection probability; and the estimation writing character direction. Further, the handwritten input display control unit 23 rotates counterclockwise the selectable candidate display data (the operation guide 500) based on the angle information acquired in step S60, and transmits the rotated selectable candidate display data (the operation guide 500) to the display unit 22 to be displayed.
      It is noted that it is preferable that the selectable candidate 530 is displayed in a font style specified by the FontName or FontSet of the pen ID control data acquired in step S60. Because font styles may differ depending on the character size, the handwritten input display control unit 23 displays the selectable candidate 530 using font styles corresponding to large, middle, and small character sizes.
   S63: Further, the handwritten input display control unit 23 rotates counterclockwise the rectangular area display data (a rectangular frame) (a handwritten object rectangular area display 503 in Fig. 24) of the handwritten object and the selected object with the angle information acquired in step S60 and transmits the rotated data to the display unit 22 to be displayed.
   S64: The handwritten input display control unit 23 transmits the start of the selectable candidate display deletion timer to the candidate display timer control unit 24 in order to erase the selectable candidate display data after a certain time from the display. The candidate display timer control unit 24 starts the timer.
      Steps S65 to S70 are performed when, while the selectable candidate deletion timer is running, the user erases the selectable candidate display that is displayed on the display unit 22, or when a change occurs in the handwritten object (that is, when a stroke of the handwritten object is added, deleted, moved, deformed or divided), or when a candidate is not selected before the timeout.
      Further, steps S65-S67 are performed when the candidate display is deleted or a change in the handwritten object occurs.
   S65: The handwriting input unit 21 transmits the selectable candidate display deletion or the occurrence of the change of the handwritten object to the handwritten input display control unit 23.
   S66: The handwritten input display control unit 23 transmits a selectable candidate delete timer stop. The candidate display timer control unit 24 stops the timer. This is because the timer is not required because the handwritten object is operated within a certain period of time.
   S67: The handwritten input display control unit 23 stores the position information of the operation guide 500 in the handwriting recognition control unit 26 so that the position information can be used in gesture determination of the gesture handwriting recognition of step S19. The positional information may be, for example, the coordinates of the upper left corner and the lower right corner or their equivalent coordinates. According to the above, the handwriting recognition control unit 26 can determine whether the straight line used for inputting the angle information is within the operation guide 500.
   S69: The handwritten input display control unit 23 transmits the deletion of the selectable candidate display data to the display unit 22 to erase the display.
   S70: The handwritten input display control unit 23 transmits the deletion of the rectangular area display data of the handwritten object and the selected object to the display unit 22 to erase the display. Therefore, if the display of the operation command candidate is deleted under conditions other than the selection of the operation command candidate, the display of the handwritten object is maintained.
   S68: On the other hand, when no selectable candidate display deletion occurs or no handwritten object change occurs while the selectable candidate deletion timer is running (when the user did not perform the pen operation), the candidate display timer control unit 24 transmits the timeout to the handwritten input display control unit 23.
      Similarly, after the timeout of the selectable candidate display deletion timer, the handwritten input display control unit 23 executes step S69 and step S70. This is because the handwritten input display control unit 23 may erase the selectable candidate display data, the handwritten object, and the rectangular area display data of the selected object within a certain period of time.
      When the user selects a selectable candidate while the selectable candidate erase timer is running, steps S71-S103 are executed.
   S71: When the user selects the selectable candidate while the selectable candidate erase timer is running, the handwritten input unit 21 transmits the candidate selection of the character string candidates or the operation command to the handwritten input display control unit 23.
   S71-2: The handwritten input display control unit 23 transmits a stop of the selectable candidate display delete timer to the candidate display timer control unit 24. The candidate display timer control unit 24 stops the timer.
   S72: Next, the handwritten input display control unit 23 transmits the retained data clear to the handwriting recognition control unit 26.
   S73: The handwriting recognition control unit 26 transmits the retained data clear to the character string conversion control unit 28.
   S74: The handwriting recognition control unit 26 transmits the retained data clear to the predictive conversion control unit 30.
   S75: The handwriting recognition control unit 26 transmits the retained data clear to the operation command recognition control unit 32. The handwriting recognition control unit 26, the character string conversion control unit 28, the predictive conversion control unit 30, and the operation command recognition control unit 32 clear the data pertaining to the character string candidates and the operation command candidates that have been retained.
   S76: Next, the handwritten input display control unit 23 transmits the deletion of the selectable candidate display data to the display unit 22 to erase the display.
   S77: The handwritten input display control unit 23 transmits the deletion of the rectangular area display data of the handwritten object and the selected object to the display unit 22 to erase the display.
   S78: The handwritten input display control unit 23 erases the display by transmitting the delete of the handwritten object display data and the delete of the pen coordinate complement display data, which is transmitted in step S6, to the display unit 22. This is because a character string candidate or an operation command candidate has been selected and the handwritten objects, etc., are not needed any more.
   S79: The handwritten input display control unit 23 transmits the handwritten object deletion to the handwritten input storage unit 25.
      When a character string candidate is selected, steps S80-S82 are executed.
   S80: When a character string candidate is selected, the handwritten input display control unit 23 transmits the addition of the character string object to the handwritten input storage unit 25.
   S81: The handwritten input storage unit 25 determines the estimated character size based on the estimated writing direction/character size determination condition 404 and the size of the handwritten object. The handwritten input display control unit 23 acquires the estimated character size of the handwritten object from the handwritten input storage unit 25. The pen ID control data has been acquired in step S60. Further, the handwritten input display control unit 23 specifies FontSet (or FontName when the font set is not selected) and a character size of the pen ID control data and transmits a font acquisition to the handwritten input storage unit 25. Accordingly, the handwritten input display control unit 23 acquires a font included in the font set recorded in the pen ID control data from the handwritten input storage unit 25.
   S82: Next, the handwritten input display control unit 23 transmits the character string object display data, which is displayed at the same position as the handwritten object, to the display unit 22 using the defined font received from the handwritten input storage unit 25, to display the character string object display data. The handwritten input display control unit 23 identifies the line type and the thickness from the color definition data based on the Color Id of the pen ID control data, and displays the text (character string object) that is rotated with the angle information.
      When an operation command candidate is selected, steps S83 through S101 are executed. Steps S83-S85 are executed when a selected object is present.
   S83: When an operation command candidate for the selected object is selected (when the selected object exists), the handwritten input display control unit 23 transmits the deletion of the selected object display data to the display unit 22 to erase the display. Accordingly, the handwritten input display control unit 23 deletes the original selected object.
   S84: Next, the handwritten input display control unit 23 transmits the operation command execution for the selected object to the handwritten input storage unit 25. The handwritten input storage unit 25 transmits display data (display data after editing or modification) of a newly selected object to the handwritten input display control unit 23.
   S85: Next, the handwritten input display control unit 23 transmits the selected object display data to the display unit 22 so that the selected object after execution of the operation command is displayed again.
   S86: When " 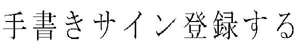 "(to register a handwritten signature) of the operation command definition data 713 or " 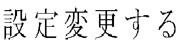 " (to change the setting) of the operation command definition data 716 is specified, the handwritten input display control unit 23 adds the handwritten signature registration form 561 or the user defined data change form to the handwritten input storage unit 25.
   S87: When the operation command candidate " 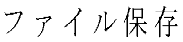 "(file saving) or " 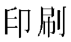 " (printing) is selected, the handwritten input display control unit 23 transmits a file transmission request to the file transmission and reception control unit 37.
   S88: The file transmission and reception control unit 37 transmits an acquisition request for the handwritten input storage data to be transmitted to the handwritten input storage unit 25.
   S89: The handwritten input storage unit 25 determines whether the transmission destination is a color supporting apparatus according to the MIB or the like.
      - In the case of the color supporting apparatus, the handwritten input storage unit 25 transmits the handwritten input storage data converted to color to the file transmission and reception control unit 37. In other words, based on the ColorId of the handwritten input storage data, it is determined whether the data is originated from the handwriting, and, in case of the handwritten input originated data, color information associated with the ColorId is acquired from the color definition data and the handwriting originated data is converted to this color information. Because color information is contained in the non-handwriting-originated data from the beginning, the color information is transmitted. It is not limited to ColorId that is used for determining whether the data is handwritten input originated (handwritten data drawn by the display apparatus 2) by the handwritten input storage unit 25. Further, a value, which indicates a device that indicates whether the data is handwriting originated data drawn by the display apparatus 2.
      - In the case where the transmission destination is a black-and-white supporting apparatus, the handwritten input storage unit 25 may simply transmit a sequence of coordinate points or text by ignoring the color information associated with the ColorId of the handwritten input storage data. the handwritten input storage unit 25 may acquire the color information associated with the ColorId from the color definition data and convert it to this color information. It should be noted that the handwritten input storage unit 25 may acquire the color information associated with the ColorId from the color definition data and convert it to a black-and-white highlighting display (line type and thickness) to be transmitted. Because the color information is stored in the data that is not the handwriting originated data, the handwritten input storage unit 25 transmits the stored color information.
      - When the transmission destination is a black-and-white highlighting supporting apparatus, the handwritten input storage unit 25 transmits only the handwritten input storage data or the handwritten input storage data and the color definition data to the file transmission and reception control unit 37. When the handwritten input storage unit 25 transmits only the handwritten input storage data, the line type and the thickness are determined according to the color definition data retained by the black-and-white highlighting supporting apparatus of the transmission destination. When the handwritten input storage unit 25 transmits both the handwritten input storage data and the color definition data, the line type and the thickness are determined according to the color definition data retained by the black-and-white highlighting supporting apparatus of the transmission source. It should be noted that the transmission source of the black-and-white highlighting supporting apparatus may convert it to the black-and-white highlighting display, and the handwritten input storage unit 25 may transmit the converted data.
      - Further, when the file transmission and reception control unit 37 writes to a file, for example, a PDF file or the like, the color information associated with the ColorId is acquired from the color definition data, and is set to the PDF file according to the format of the PDF file. The same applies to the font, font size, etc. Further, the handwritten input storage unit 25 stores the whole or a part of the handwritten input storage data (for example, ColorId, FontName, or the like) in the meta-data of the PDF file. Because the reader of the PDF file ignores the meta-data, there is no effect on the display, and if the display apparatus 2 reads the PDF file, it is possible to regenerate the handwritten input storage data from the meta-data. In a case where data is not handwriting originated, the handwritten input storage unit 25 sets the color information, font, and character size contained in the handwritten input storage data to the PDF file according to the format of the PDF file.
   S90: The file transmission and reception control unit 37 transmits the handwritten input data received from the handwritten input storage unit 25 to a destination or writes it to a file.
   S91: When the operation command candidate of " 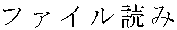 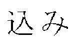 "(File reading) is selected, the handwritten input display control unit 23 transmits an acquisition request for the file list information to the file transmission and reception control unit 37.
   S92: The file transmission and reception control unit 37 receives the file list information from a storage medium such as a USB memory, a network storage, a web server, or an external apparatus.
   S93: The file transmission and reception control unit 37 transmits the file list information to the handwritten input display control unit 23.
   S94: The handwritten input display control unit 23 transmits the file list display data to the display unit 22. Accordingly, the display unit 22 displays a file list on a display as shown in Fig. 12.
   S95: When the user selects a file and the handwritten input unit 21 receives the selection, the handwritten input unit 21 transmits the file selection to the handwritten input display control unit 23.
   S96: The handwritten input display control unit 23 transmits a file reception request for the selected file to the file transmission and reception control unit 37.
   S97: The file transmission and reception control unit 37 acquires a file from an external apparatus.
   S98: The file transmission and reception control unit 37 stores the file in the handwritten input storage unit 25.
   S99: The handwritten input storage unit 25 analyzes the file received from the file transmission and reception control unit 37 and converts the handwritten input originated data into the handwritten input storage data (black-and-white highlighting/color conversion enabled data). In other words, the presence or absence of meta-data is determined, and if meta-data is present, it is determined whether it is possible to convert the meta-data to handwritten input storage data (whether there is ColorId, etc.), and the data is stored as handwritten input storage data. Further, the handwritten input storage unit 25 reads the ColorId with respect to the handwritten input originated data, and converts the data into a black-and-white highlighting display corresponding to the ColorId by referring to the color definition data. The handwritten input storage unit 25 transmits the display data of the handwriting object to the handwritten input display control unit 23. In a case where data is not handwritten input originated data, the handwritten input storage unit 25 reads the color information, font, and character size according to the file format and stores the data as the handwritten input storage data.
   S100: The handwritten input display control unit 23 displays the display data of the handwritten input data on the display unit 22. According to the above, the display unit 22 displays the handwritten input originated data as black-and-white highlighted handwritten data, and displays the data, which is not the handwriting originated data, in black and white using the conventional brightness conversion.
      It should be noted that, when the operation command 512 for signing-in is executed, the handwritten input display control unit 23 acquires the PenId received by the display apparatus 2 when the operation command 512 is executed. The handwritten input display control unit 23 identifies the user defined data including the SignatureId acquired in step S61 and acquires the AccountId from the user defined data. Further, the handwritten input display control unit 23 registers the AccountId in the pen ID control data by associating the AccountID with the PenId. As a result, the pen 2500 and the user are associated with each other, and the display apparatus 2 can perform processing using the user defined data.
      When a user performs handwriting or reads a file after signing in, the handwritten input display control unit 23 acquires the AccountId associated with the PenId received by the display apparatus 2 from the pen ID control data at the time of execution of the operation command. The handwritten input display control unit 23 identifies the user defined data according to the AccountId and sets the color defined data or the like to "%-%" in the operation command to execute the operation command.
   S101: When other operation command is selected, the handwritten input display control unit 23 executes the operation command character string (command) of the operation command definition data corresponding to the operation command selected by the user. In this embodiment, an operation command is executed to set a work-specific font set or a business-specific font set to the display apparatus 2. Details will be described below.
   S102: The work-specific font set or the business-specific font set selected by the user is stored in the pen ID control data storage unit 36 by associating the work-specific font set or the business-specific font set with PenId received from the pen 2500 when the operation command is executed. Further, when the user inputs angle information manually, the handwritten input display control unit 23 stores the received angle information in the pen ID control data storage unit 36 by associating the angle information with PenId received from the pen 2500 when the rotation operation button 511 is pressed.
   S103: The handwritten input display control unit 23 transmits the start of the handwritten object to the handwritten input storage unit 25 for the next handwritten object. The handwritten input storage unit 25 allocates a handwritten object area. Thereafter, the process of steps S2 to S103 is repeated.

### <Setting of work-specific font set>

In the operation guide 500 displayed in step S62 of Fig. 36, an operation command is displayed for the user to select a font set. Here, a case will be described in which " 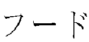 "("food") is handwritten.

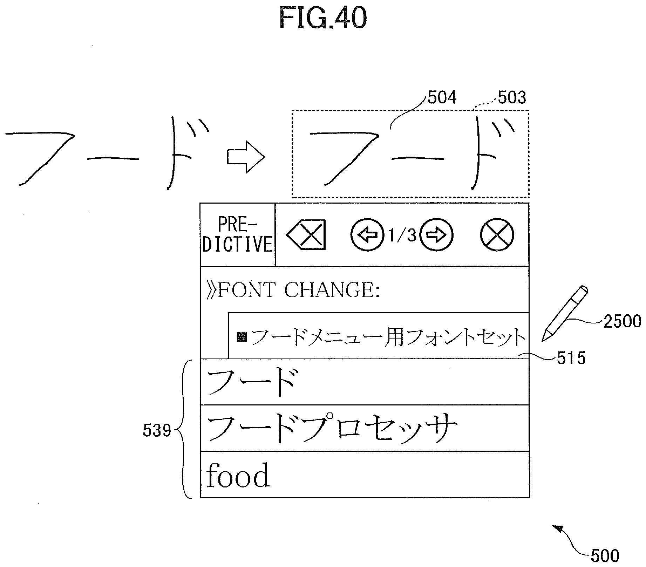

Fig. 40 is an example of an operation guide 500 that is displayed when a user handwrites " 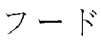 " ("food"). Because the" 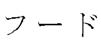 "("food") corresponds to String of the operation command definition data 723, the operation command recognition control unit 32 acquires the operation command definition data 723 and transmits it to the handwritten input display control unit 23. The handwritten input display control unit 23 displays the operation command 515 " 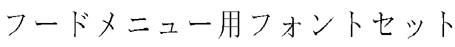 "("font set for the food menu") in the operation guide 500 (step S62). Further, character string candidates 539 such as " 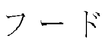 "("food"), " 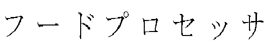 "("food processor"), and "food" converted from " 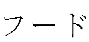 "("food") are displayed. When the user selects the operation command 515" 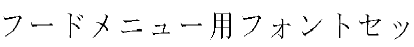 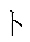 "("font set for the food menu"), the handwritten input unit 21 receives it, and the handwritten input display control unit 23 stores FoodSet="FoodMenu" in the pen ID control data storage unit 36 (step S102). It is noted that the operation guide 500 is erased (S76 to S78) by selecting the operation command.

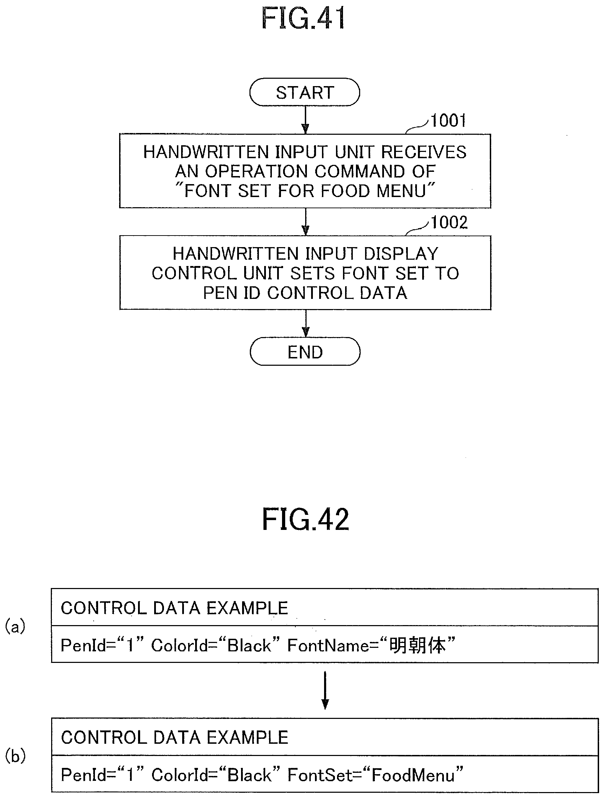

Fig. 41 is an example of a flowchart illustrating a procedure for storing pen ID control data by executing an operation command.

First, the handwritten input unit 21 receives a selection of the operation command 515, " 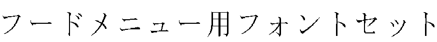 "("font set for food menu") (S1001). In this way, a font set setting can be received based on the handwritten data.

Next, the handwritten input display control unit 23 executes "ChangeFoodSet FoodMenu" of the operation command definition data 723 defining the operation command 515. Therefore, the handwritten input display control unit 23 sets PenId of the pen 2500 used by the user, and a font set of "FoodMenu", in the pen ID control data (S1002).

Fig. 42 is an example of a transition diagram of the pen ID control data. Fig. 42(a) is the pen ID control data at the start of the process described with reference to Figs. 32 to 39, and Fig. 42(b) is the pen ID control data when a user selects an operation command " 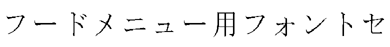
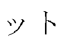 "("font set for food menu"). In Fig. 42(a), the color and the font, which have been set by the pen color selection button 81, are set. In Fig. 42(b), the color remains the same, but the font set "FoodMenu" is set. It is noted that Angle and AccountId are omitted.

### <Handwritten input using work-specific font set>

Next, a display method of a character string object when the work-specific font set is set to the pen ID control data will be described.

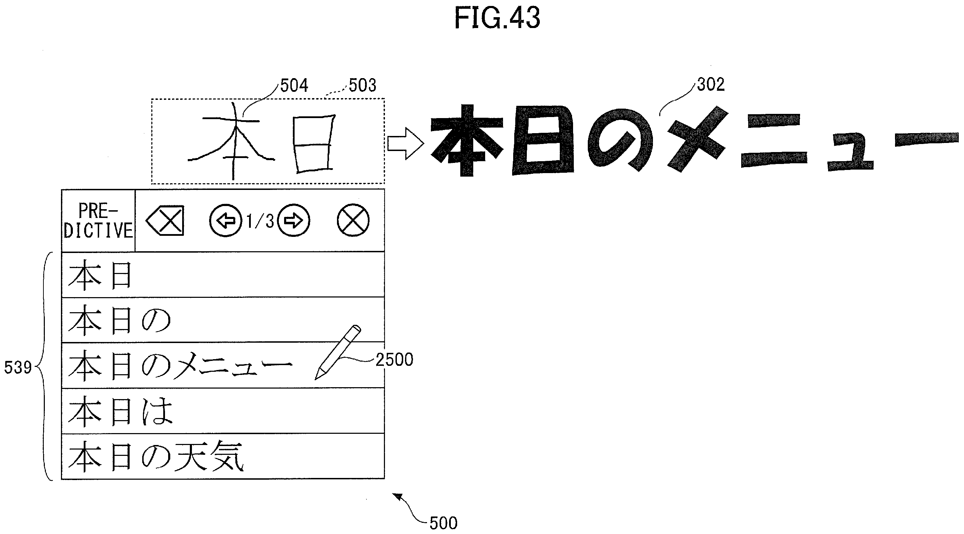

Fig. 43 shows an operation guide 500 when handwritten input is performed in a state in which a font set "FoodMenu" is set in the pen ID control data. In Fig. 43, because " 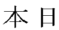 " ("today") is handwritten, character string candidates 539 such as " 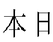 " ("today"), " 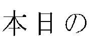 " ("today's"), " 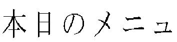 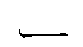 " ("today's menu"), " 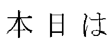 " ("today is"), " 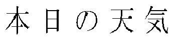 " ("today's weather"), which are converted from " 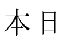 " ("today"), are displayed. It is noted that an operation command is not displayed because there is no operation command definition data having " 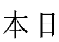 "as a String.

When the user selects a character string candidate 539 of " 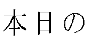 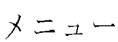 "("today's menu"), the handwritten input unit 21 receives the selection and the handwritten input display control unit 23 displays the character string object 302 of " 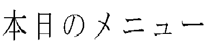 "("today's menu")(step S82). It is noted that the operation guide 500 is erased according to selection of the character string candidate 539 (S76-S78). When displaying the character string object 302 " 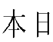 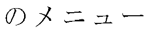 "("today's menu"), the handwritten input display control unit 23 refers to the pen ID control data to determine the color, the font, and the character size, and displays the character string object 302. Details will be described below.

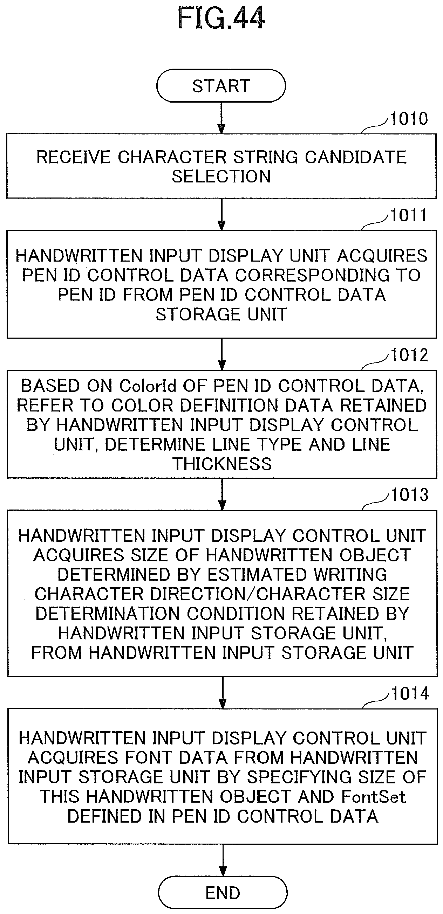

Fig. 44 is an example of a flowchart illustrating a procedure in which the handwritten input display control unit 23 displays a character string object. It should be noted that because Fig. 44 illustrates font selection processing while Figs. 32 to 39 illustrate internal processing in detail, the processing orders may not be the same.

First, the handwritten input unit 21 receives the selection of the character string candidate 539 (S1010). Because the coordinates of the operation guide 500 are known, the selected character string candidate 539 is identified by the coordinates touched by the tip of the pen 2500.

Next, the handwritten input display control unit 23 acquires the pen ID control data corresponding to the PenId of the pen 2500 used by the user from the pen ID control data storage unit 36 (S1011). The PenId is received by the display apparatus 2 when pens 1-4 are in contact with the display 220.

Next, the handwritten input display control unit 23 refers to the color definition data retained by the handwritten input display control unit 23 based on the ColorId of the pen ID control data, and determines the line type and the thickness (S1012).

Next, the handwritten input display control unit 23 acquires the size of the handwriting object 504 determined by the estimated writing character direction/character size determination condition retained by the handwritten input storage unit 25 from the handwritten input storage unit 25 (S1013).

Next, the handwritten input display control unit 23 specifies the size of the handwritten object 504 and the FontSet defined in the pen ID control data to acquire the font data from the handwritten input storage unit 25. The handwritten input storage unit 25 identifies a work-specific font set 408 by FontSet and identifies a font by the character size to generate a font of the character string object (S1014).

According to the above, the color, the font, and the character size of the character string object can be determined.

### <Setting of business-specific font set>

Setting of the business-specific font set will be described. The operation guide 500 shown in step S62 of Fig. 36 displays an operation command for the user to select a work-set. Here, a case will be described in which " 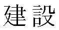 "("construction") is handwritten.

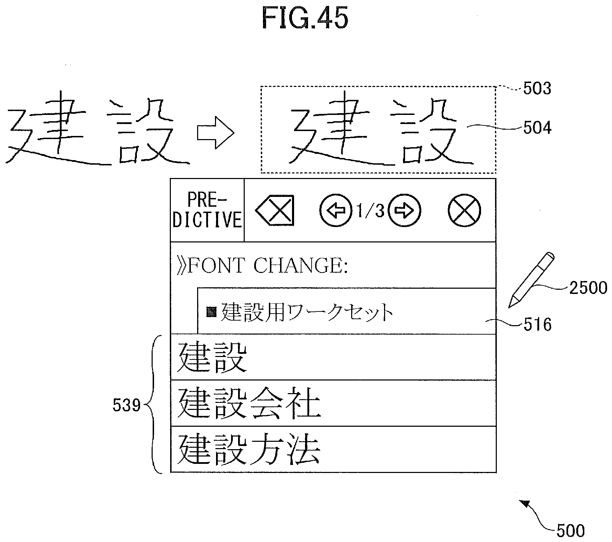

Fig. 45 is an example of an operation guide 500 that is displayed when " 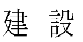 " ("Construction") is handwritten. Because the" 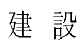 "("construction") corresponds to String of the operation command definition data 727, the operation command recognition control unit 32 acquires the operation command definition data 727 and transmits it to the handwritten input display control unit 23. Accordingly, the handwritten input display control unit 23 displays the operation command 516, " 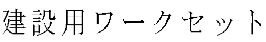 "("construction work-set") in the operation guide 500 (step S62). In addition, character string candidates 539 such as " 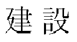 "("construction"), " 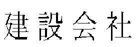 "("construction company") and " 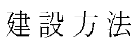 "("construction method") converted from " 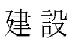 "("construction") are displayed. When the user selects the operation command 516 of " 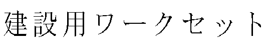 "("construction work-set"), the handwritten input unit 21 accepts the selection, and the handwritten input display control unit 23 executes Command="ChangeWorkset Construction" and sets FontSet="Constructionl" to "Construction4" to the pen ID control data items corresponding to the pens 1 to 4 (step S102). It is noted that the operation guide is erased by selecting the operation command (S76 to S78).

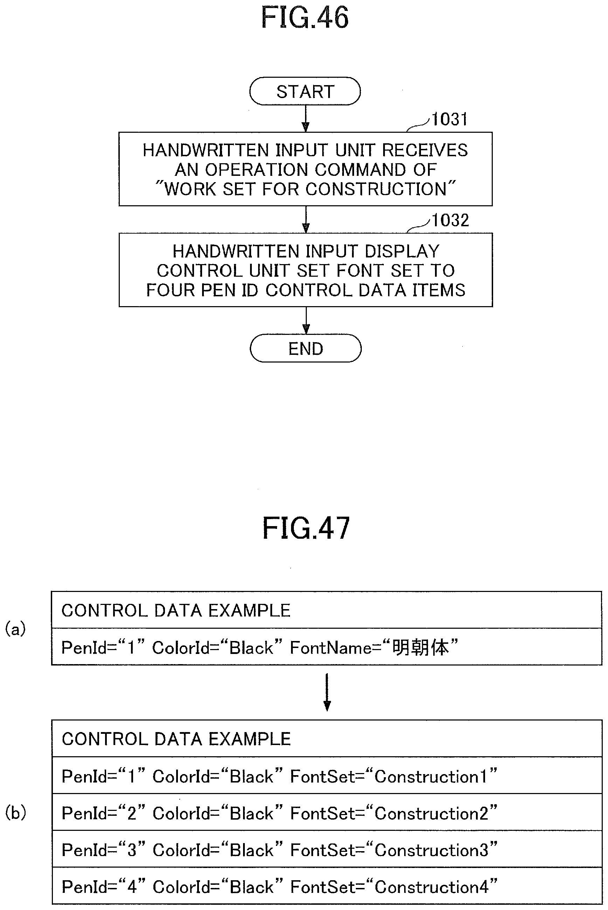

Fig. 46 is an example of a flowchart illustrating a procedure for storing pen ID control data by executing an operation command.

First, the handwritten input unit 21 receives the selection of the operation command 516 of " 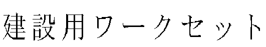 "("construction work-set") (S1031). Since the coordinates of the operation guide 500 are known, the selected operation command 516 is identified by the coordinates contacted by the tip of the pen 1.

Next, because the handwritten input display control unit 23 executes Command="ChangeWorkset Construction", a business-specific work-set 420 is invoked, and the handwritten input display control unit 23 sets the font sets "Construction1," "Construction2," "Construction3," and "Construction4," respectively, in the four pen ID control data items (S1032).

Fig. 47 is an example of a transition diagram of the pen ID control data. Fig. 47(a) illustrates pen ID control data at the start of Figs. 32-39, and Fig. 47(b) illustrates pen ID control data when the user selects an operation command 516 of " 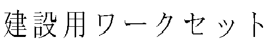 " ("construction work-set"). In Fig. 47(a), the color and the font, which have been set by the pen color selection button 81, are set. In Fig. 47(b), the same color is set to the pens 1 to 4, and the font sets of "Construction1" to "Construction4" are set to the pens 1 to 4, respectively.

### <Handwritten input using business-specific font set>

Next, a display method of a character string object when the business-specific font set is set to the pen ID control data will be described.

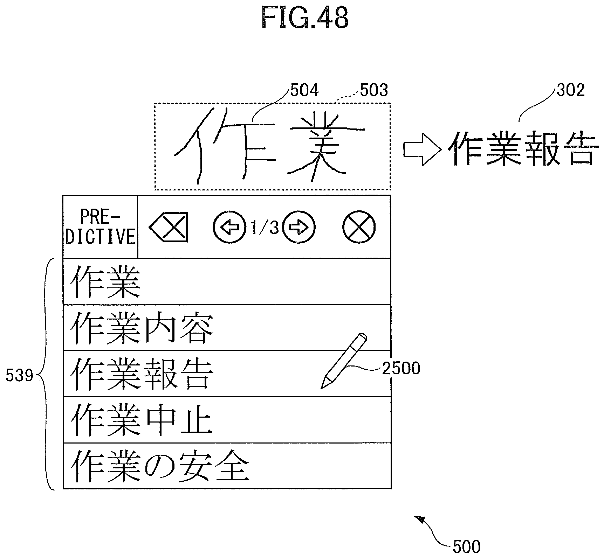

Fig. 48 illustrates an operation guide 500 when handwritten input is performed in a state in which a font set "Construction1" is set in the pen ID control data. In Fig. 48, because " 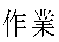 " ("work") is handwritten, character string candidates 539 such as " 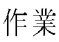 " ("work"), " 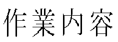 " ("work contents"), " 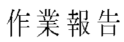 " ("work report"), " 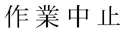 " ("work stop"), and " 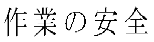 " ("work safety"), which are converted from " 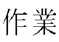 " ("work"), are displayed. It is noted that an operation command is not displayed because there is no operation command definition data having " 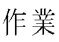 " ("work") as a String.

When the user selects the character string candidate 539 of " 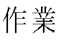 "("work report"), the handwritten input unit 21 receives the selection and the handwritten input display control unit 23 displays the character string object 302 of " 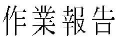 ("work report") (step S82). It is noted that the operation guide 500 is erased according to selection of the character string candidate 539 (S76-S78). When displaying the character string object 302 " 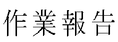 "("work report"), the handwritten input display control unit 23 refers to the pen ID control data to determine the color, the font, and the character size, and displays the character string object 302. Details will be described below.

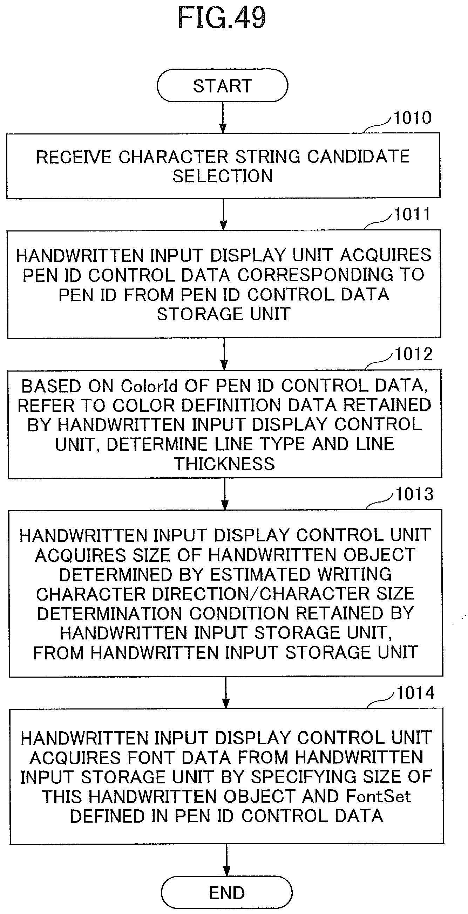

Fig. 49 is an example of a flowchart illustrating a procedure in which the handwritten input display control unit 23 displays a character string object. The process of Fig. 49 may be the same as that of Fig. 44, except that the defined control data referenced by the handwritten input display control unit 23 is different.

According to the above, the color, the font, and the character size of the character string object can be determined according to the business-specific font set selected by the user, and the character string object can be displayed.

### <Use example of business-specific font set>

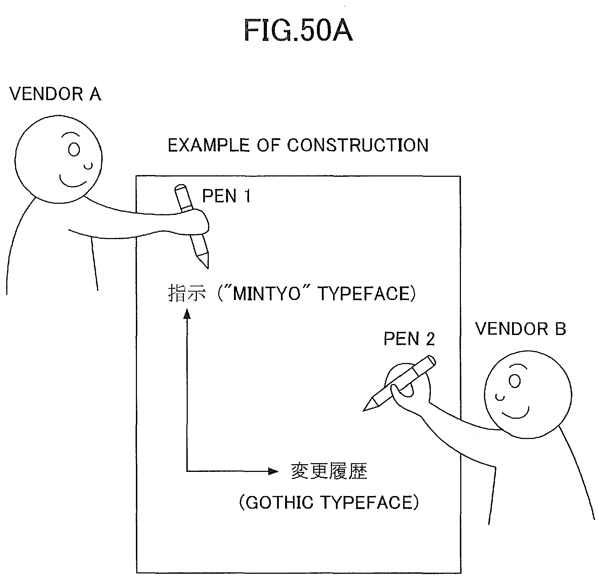

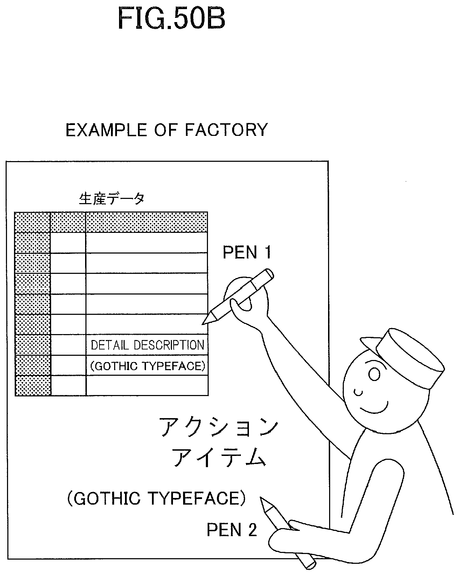

An example of using a business-specific font set will be described with reference to Figs. 50A and 50B. Figs. 50A and 50B illustrate examples of displaying a character string object using a business-specific font set. Fig. 50A illustrates an example of using a work-set for construction, and Fig. 50B illustrate an example of using a work-set for factory.

In Fig. 50A, a vendor A uses a pen 1 for handwriting and a vendor B uses a pen 2 for handwriting. The pen ID control data for the pen 1 has a font set named Mincho typeface (character size is constant), while the pen ID control data for the pen 2 has a font set named Gothic typeface (character size is constant). Accordingly, when the vendor A handwrites a handwritten object 504" 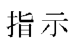 "("instruction"), for example, the display apparatus 2 displays it using Mincho typeface, and when the vendor B handwrites a handwritten object 504" 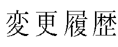 "("change history"), for example, the display apparatus 2 displays it using Gothic typeface. As described above, the font and the character size can be switched by the user using the pen.

In Fig. 50B, a single user uses a pen 1 and a pen 2. The pen ID control data for the pen 1 has a font with a character size of 25 mm and with Gothic typeface, and the pen ID control data for the pen 2 has a character size of 75 mm and with Gothic typeface. Therefore, when the user performs handwriting with the pen 1, a character string object is displayed with a character size of 25 mm and with Gothic typeface, and when the user performs handwriting with the pen 2, a character string object is displayed with a character size of 75 mm and with Gothic typeface. In this way, a user can switch the font and the character size by using pens.

### <Setting font set by pressing the work-specific font set selection button>

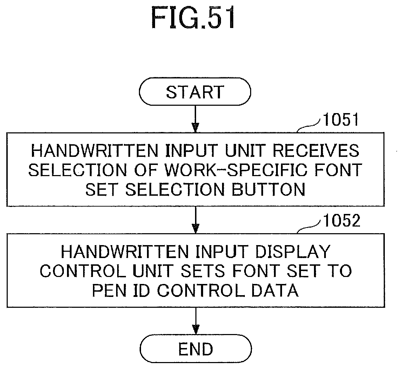

Fig. 51 is an example of a flowchart illustrating a procedure for storing pen ID control data by pressing a work-specific font set selection button.

First, the handwritten input unit 21 receives a press of any one of the work-specific font set selection buttons 331 to 334 (S1051). Because the coordinates of the work-specific font set selection buttons 331-334 are known, the work-specific font set selection buttons 331-334 are identified by the coordinates touched by the tips of the pens 2500. Further, PenId of the pen 2500 is received in response to the press.

Next, the handwritten input display control unit 23 identifies PenButtonId2 by the pressed work-specific font set selection buttons 331 to 334 and determines the FontSet of the work-specific font set selection button definition data. The handwritten input display control unit 23 associates the determined FontSet with PenId and sets the associated data in the pen ID control data (S1052).

As described above, the user not only can execute a command by handwriting a character but also can switch font sets by pressing the work-specific font set selection buttons 331-334.

### <Other font selection example>

The following is an example of individually selecting several fonts (not font sets) by a user.

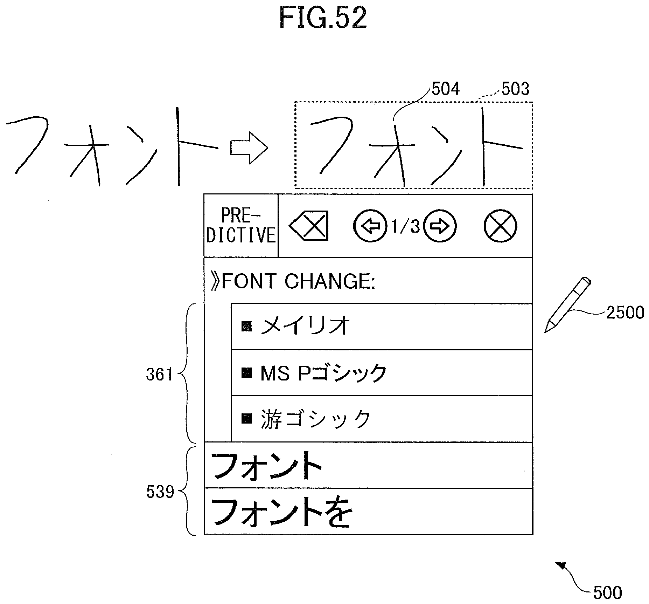

(1) Fig. 52 shows an example of an operation guide 500 displaying a list of fonts 361 as an operation command from a handwritten object 504 of " 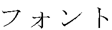 " ("font"). In Fig. 52, a list of fonts 361 including " 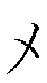 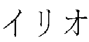 " ("Merrio"), "M S P 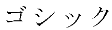 " ("MS P Gothic"), and " 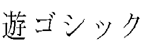 " ("Yu Gothic") is displayed. In order for the display apparatus 2 to display in the above-described manner, it is sufficient that the " 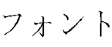 "("font") is set in String of the operation command definition data of the fonts of" 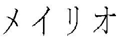 "("Merrio"), "M S P 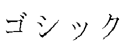 "("MS P Gothic"), and " 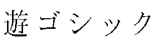 "("Yu Gothic"). Because these are operation commands, when the user performs selection, the selected font is associated with the pen ID of the pen 2500 used for the selection, and is set to the pen ID control data.

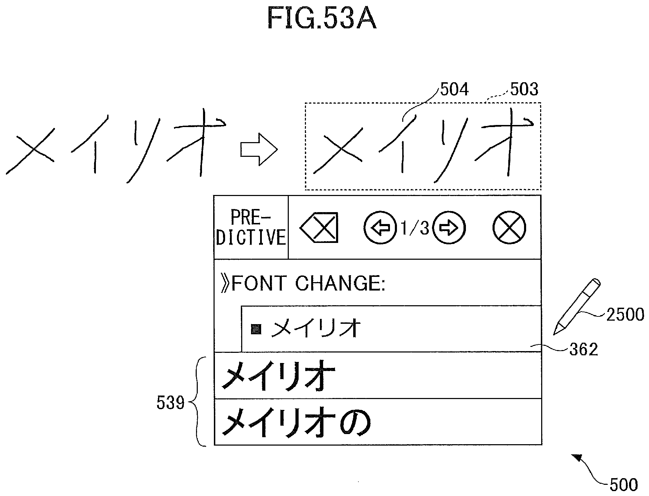

(2) Fig. 53A shows an example of an operation guide displaying a list of fonts as an operation command according to a handwritten object 504 of " 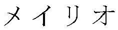 " ("Meilio"). In Fig. 53A, a list of fonts 362 including only " 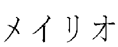 " ("Meilio") is displayed. In order for the display apparatus 2 to display in this manner, it is sufficient that the " 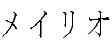 "("Meilio") is set in String of the operation command definition data of the font of" 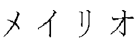 "("Merrio"). Because this is an operation command, when the user performs selection, the selected font is associated with the pen ID of the pen 2500 used for the selection, and is set to the pen ID control data.

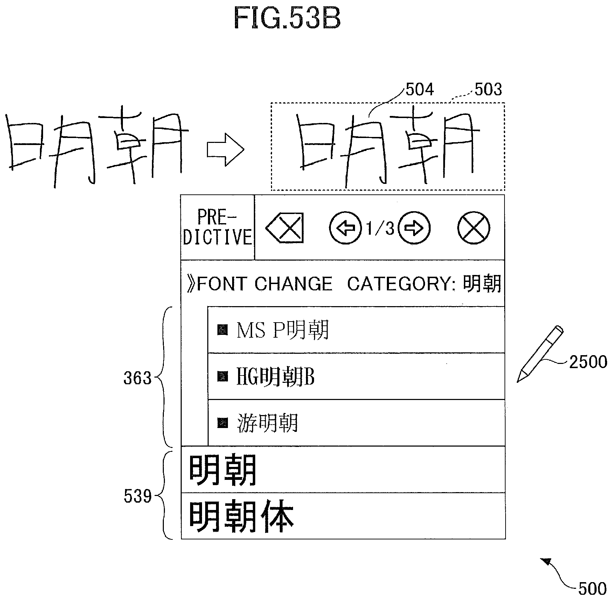

   Fig. 53B shows an example of an operation guide 500 displaying a list of fonts 363 as an operation command according to a handwritten object 504, " 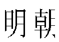 " ("Mincho"). In Fig. 53B, a list of fonts 363 including "M S P 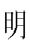 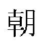 " ("MS P-Mincho"), "HG 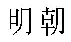 B" ("HG Mincho-B"), and " 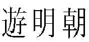 " ("Yu Mincho") is displayed. In order for the display apparatus 2 to display in this manner, it is sufficient that the " 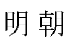 "("Mincho") is set in String of the operation command definition data of the fonts of" M S P 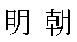 "("MS P-Mincho"), "HG 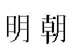 B"("HG Mincho-B"), and " 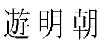 "("Yu Mincho"). Because these are operation commands, when the user selects a font, the selected font is associated with the pen ID of the pen 2500 used for the selection, and is set to the pen ID control data.

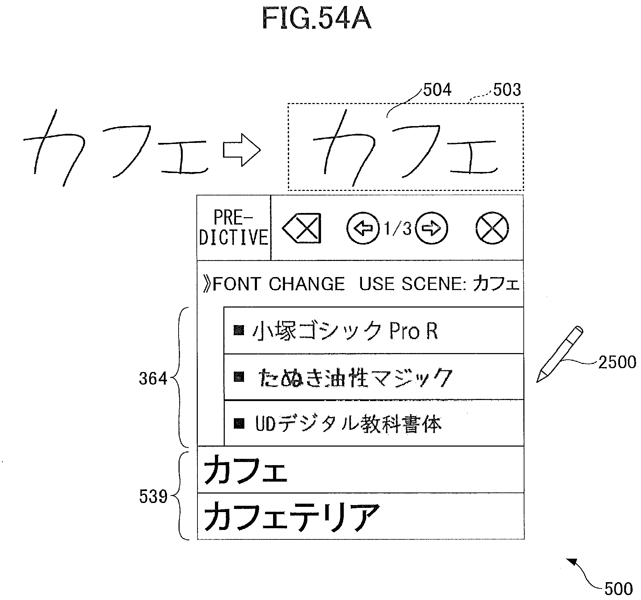

(3) Fig. 54A shows an example of an operation guide 500 displaying a list of fonts 364 as an operation command according to a handwritten object 504, " 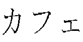 " ("cafe"). In Fig. 54A, a list of fonts 364 is displayed, such as " 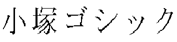 ProR" ("Kotsuka Gothic ProR"), " 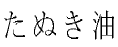 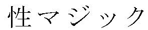 " ("Tanuki Oil-based Magic") and "UD 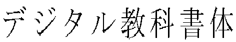 " ("UD Digital Textbook typeface"). In order for the display apparatus 2 to display in this manner, it is sufficient that the " 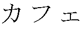 "("cafe") is set in String of the operation command definition data of the fonts of" 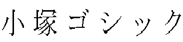 ProR" ("Kotsuka Gothic ProR"), " 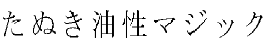 "("Tanuki Oil-based Magic") and "UD 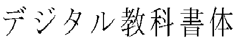 "("UD Digital Textbook typeface"). Because these are operation commands, when the user selects a font, the selected font is associated with the pen ID of the pen 2500 used for the selection, and is set to the pen ID control data.

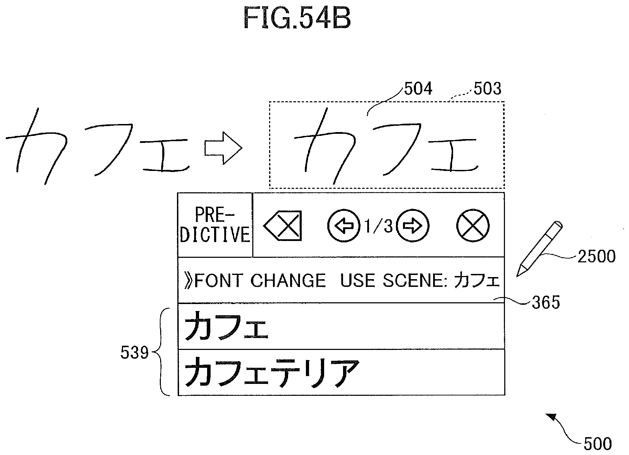

   Fig. 54B shows an example of an operation guide 500 displaying a list of usage scenes 365 as an operation command according to a handwritten object 504, " 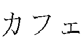 " ("cafe"). In Fig. 53B, a list of usage scenes 365 for " 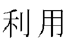 " ("usage scene: cafe"). In order to display in the above-described manner, " 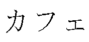 "("cafe") is set to String of the operation command definition data of " 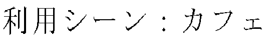 "("usage scene: cafe"), and a font corresponding to " 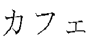 "("cafe") is defined in the defined control data. Because these are operation commands, when the user selects a font, the selected font is associated with the pen ID of the pen 2500 used for the selection, and is set to the pen ID control data. In this way, it is not necessary for a user to select a font name directly.

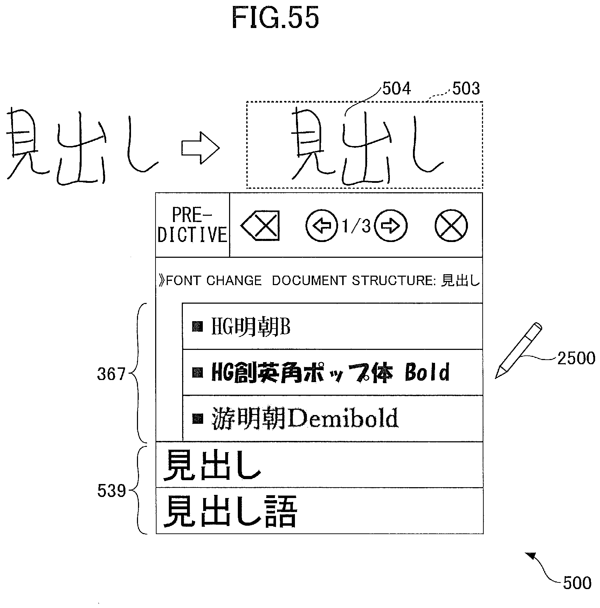

(4) Fig. 55 shows an example of an operation guide 500 displaying a list of fonts 367 as an operation command according to a handwritten object 504, " 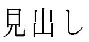 " ("heading"). In Fig. 55, a list of fonts 367 including "H G 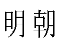 B " ("HG Mincho B"), "H G 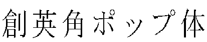 Bold" ("HG So-ei squared pop typeface Bold"), and " 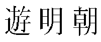 Demibold" ("Yu Mincho Demibold") is displayed. In order for the display apparatus 2 to display in this manner, it is sufficient that the " 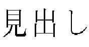 "("heading") is set in String of the operation command definition data of the fonts of" H G 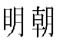 B "("HG Mincho B"), "H G 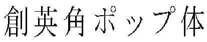 Bold"("HG So-ei squared pop typeface Bold"), and " 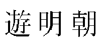 Demibold"("Yu Mincho Demibold"). Because this is an operation command, when the user performs selection, the selected font is associated with the pen ID of the pen 2500 used for the selection, and is set to the pen ID control data.

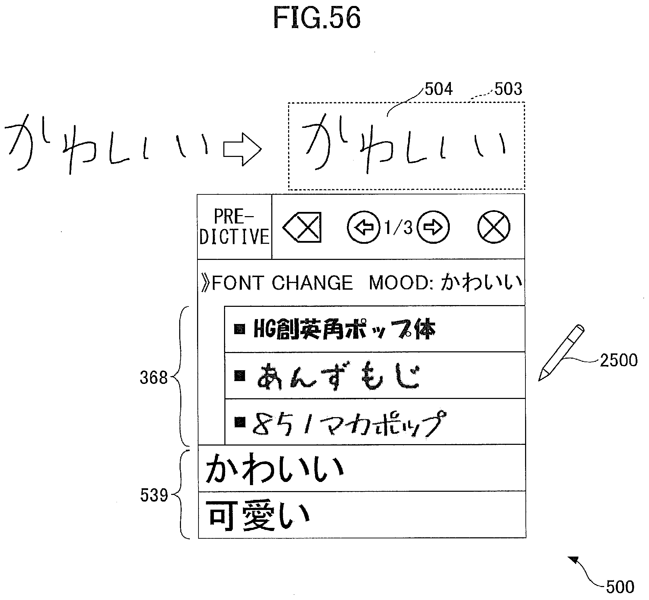

(5) Fig. 56 shows an example of an operation guide 500 displaying a list of fonts 368 as an operation command according to a handwritten object 504 " 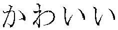 " ("cute"). In Fig. 56, a list of fonts 368 including "H G 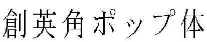 " ("HG So-ei squared pop typeface"), " 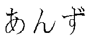 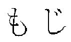 " ("Anzu character") and " 8 5 1 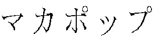 " ("851 Maka pop") is displayed. In order for the display apparatus 2 to display in this manner, it is sufficient that the " 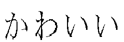 "(" cute") is set in String of the operation command definition data of the fonts of " H G 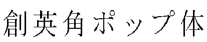 "("HG So-ei squared pop typeface"), " 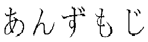 " ("Anzu character") and " 8 5 1 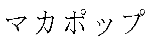 " ("851 Maka pop"). Because these are operation commands, when the user selects a font, the selected font is associated with the pen ID of the pen 2500 used for the selection, and is set to the pen ID control data.

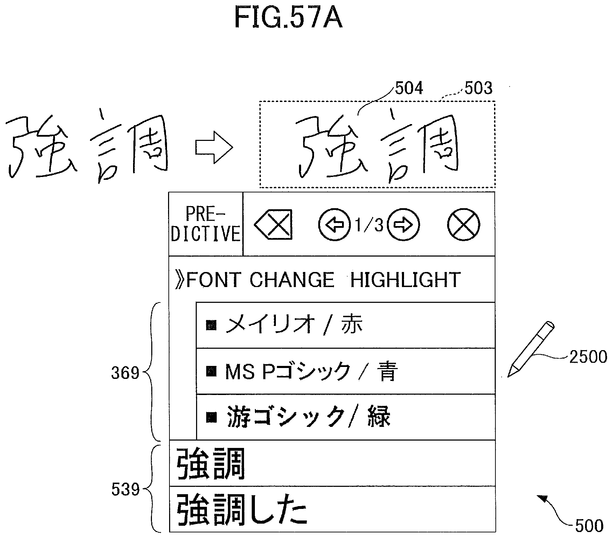

(6) Fig. 57A shows an example of an operation guide 500 displaying a list of fonts 369 as an operation command according to a handwritten object 504, " 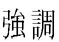 " ("emphasis"). In Fig. 57A, font and color sets of " 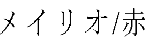 " ("Merrio/red"), "M S P 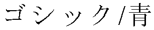 " ("MS P Gothic/blue"), and " 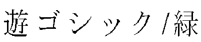 " ("Yu Gothic/green") are displayed. In order for the display apparatus 2 to display in the above-described manner, " 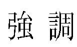 "("emphasis") is set to String of the operation command definition data of " 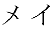 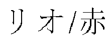 "("Merrio/red"), "M S P 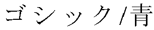 ("MS P Gothic/blue"), and " 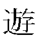 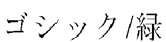 " ("Yu Gothic/green"), and fonts and colors are set to Command. Because these are operation commands, when the user performs selection, the selected font is associated with the pen ID of the pen 2500 used for the selection, and is set to the pen ID control data.

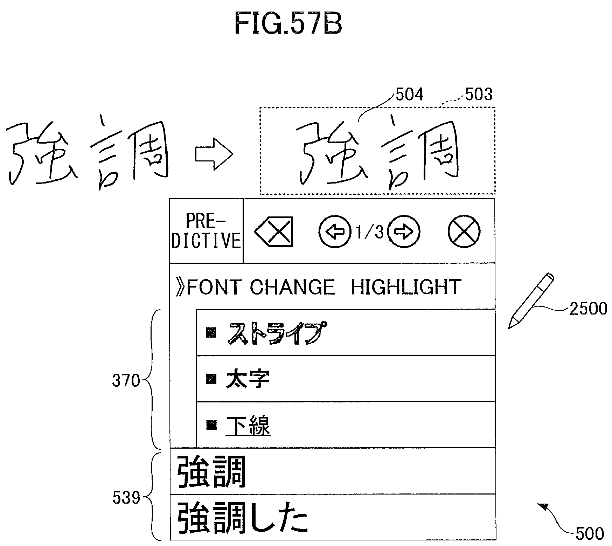

   Fig. 57B shows an example of an operation guide 500 displaying a list of fonts 370 as an operation command according to a handwritten object 504, " 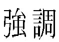 " ("emphasis"). In Fig. 57B, a list of fonts 370 including " 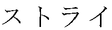 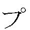 " ("stripe"), " 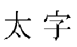 " ("thick character"), and " 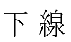 ("underline") is displayed. In order for the display apparatus 2 to display in this manner, it is sufficient that the " 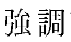 "("emphasis") is set in String of the operation command definition data of " 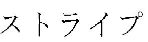 " ("stripe"), " 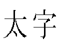 "("thick character"), and " 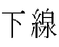 "("underline"). Because these are operation commands, when the user performs selection, the selected font is associated with the pen ID of the pen 2500 used for the selection, and is set to the pen ID control data.

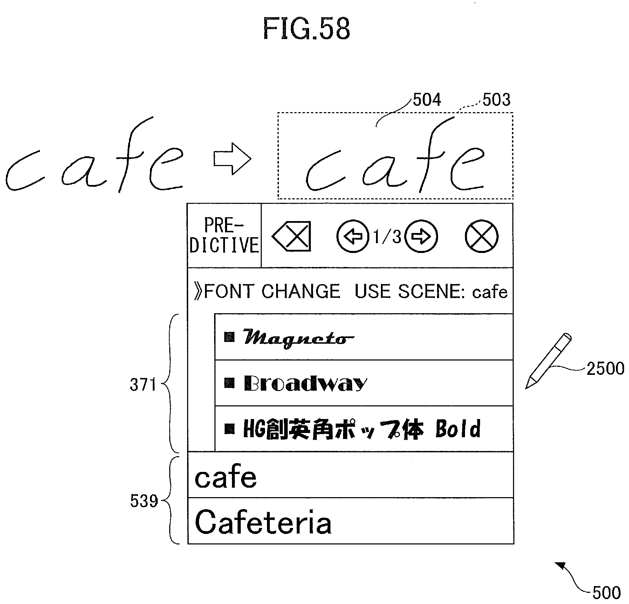

(7) Fig. 58 shows an example of an operation guide 500 displaying a list of fonts 371 as an operation command according to a handwritten object 504, "cafe". In Fig. 58, a list of fonts 371 is displayed, such as "Magneto," "Broadway," and "HG 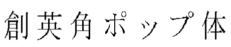 Bold" ("HG So-ei squared pop typeface Bold"). In order for the display apparatus 2 to display in this manner, it is sufficient that the "cafe" is set in String of the operation command definition data of "Magneto," "Broadway," and "HG 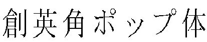 Bold"("HG So-ei squared pop typeface Bold"). Because these are operation commands, when the user performs selection, the selected font is associated with the pen ID of the pen 2500 used for the selection, and is set to the pen ID control data.

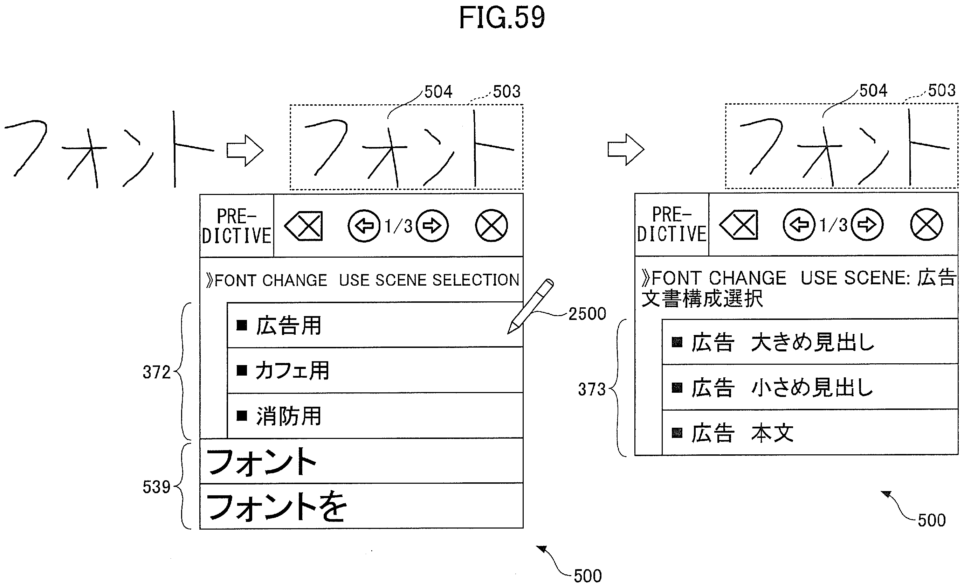

(8) Fig. 59 shows an example of an operation guide 500 displaying a list of fonts 372 as an operation command from a handwritten object 504 of " 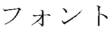 " ("font"). In Fig. 59, the operation commands " 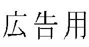 " ("for advertising"), " 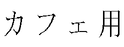 " ("for cafe"), and " 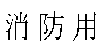 " ("for fire fighting") are displayed. In order for the display apparatus 2 to display in this manner, the " 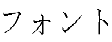 "("font") is set in String of the operation command definition data of " 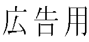 "("for advertising"), " 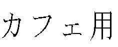 "("for cafe"), and " 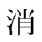 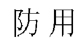 " ("for fire fighting"). When the user further selects " 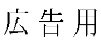 "("for advertising"), a list of fonts 373 is displayed, such as " 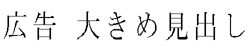 "("advertising: large-size heading), " 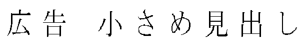 "("advertising: small-size heading"), and " 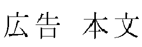 "("advertising: main text"). In order to display in the above-described manner, the operation command of " 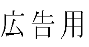 "("for advertising") is associated with the operation commands of " 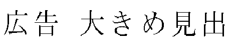 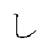 "("advertising: large-size heading), " 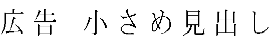 "("advertising: small-size heading"), and " 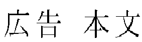 "("advertising: main text"). In addition, fonts corresponding to " 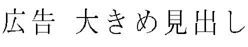 "("advertising: large-size heading), " 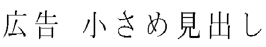 "("advertising: small-size heading"), and " 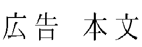 "("advertising: main text") are defined in defined control data. Because this is an operation command, when the user performs selection, the selected font is associated with the pen ID of the pen 2500 used for the selection, and is set to the pen ID control data.

### <Major effects>

As described above, the display apparatus 2 according to the present embodiment can switch to a font set suitable for the image of the user's work and display the characters by selecting the user's work. Further, a user can select a font from a font set that is suited to the user's work by adjusting the size of the character handwritten by the user. The user does not need to select the font directly, and does not need to consider an appropriate font for the contents to be handwritten. As described above, it is possible for a display apparatus 2 according to an embodiment of the present invention to improve operability when selecting a font.

In addition, the user can select his/her own business type in order to set font sets suitable for the business type to multiple pens 1 to 4 together. For example, each user can enter a character using a determined font, or a single user can enter a character by changing pens to change fonts.

### [Embodiment 2]

In an embodiment of the present invention, a display apparatus 2 for converting handwritten data into English will be described. It should be noted that the configuration of the display apparatus 2 is the same as that of the first embodiment except that the conversion dictionary and various definition data items correspond to the English language. Therefore, the difference from the first embodiment when the handwritten data is converted into English (hereinafter, referred to as the English conversion) will be described.

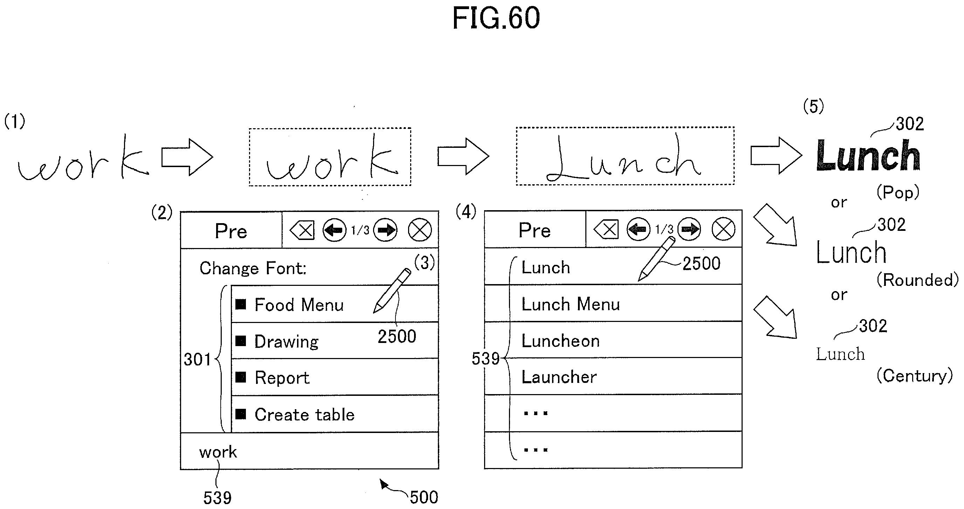

Fig. 60 is a drawing illustrating an operation or a process of switching fonts by a display apparatus 2 according to an embodiment of the present invention in a case of English conversion. It should be noted that, in the description of FIG. 60, the difference from FIG. 1 will be mainly explained.
(1) A user handwrites a predefined keyword. In Fig. 60, "work" is handwritten.
(2) The display apparatus determines that "work" in Japanese is an operation command to be described below, and displays choices 301 of work ("food menu," "drawing," "report," and "table creation," which are operation commands), for which fonts are prepared, and character string candidates 539.
(3) The user selects a work, in which handwritten data is used, from the choices 301. In Fig. 60, "food menu" is selected. According to the above operation, a font set "Food Menu" is set to pen ID control data (described later) associated with a pen 2500 retained by the user. The font set contains multiple fonts, and a font contains a font style (multiple font styles are included in the font set).
(4) An operation guide 500 is deleted temporarily due to selection of the work, and a character string candidate 539 is displayed when the user enters handwritten data. In Fig. 60, "Lunch" is handwritten, so the character string candidates 539 are displayed, including "Lunch", "Lunch menu", "Luncheon", and "Launcher".
(5) When the user selects "Lunch", the display apparatus 2 displays the text data "Lunch" (character string object 302 to be described later) with one of the fonts of the font set prepared according to the work selected in (3). The display apparatus 2, for example, switches fonts of the character string object 302 (text data) of "Lunch" depending on the character size of the handwritten "Lunch". The following is only an example, but the display apparatus 2 switches fonts as follows.
   Small-size: Century
   Middle-size: Rounded
   Large-size: Pop

In this way, it is possible for the display apparatus 2 to perform displaying by automatically switching fonts from the font set depending on the size of the characters that are handwritten by the user.

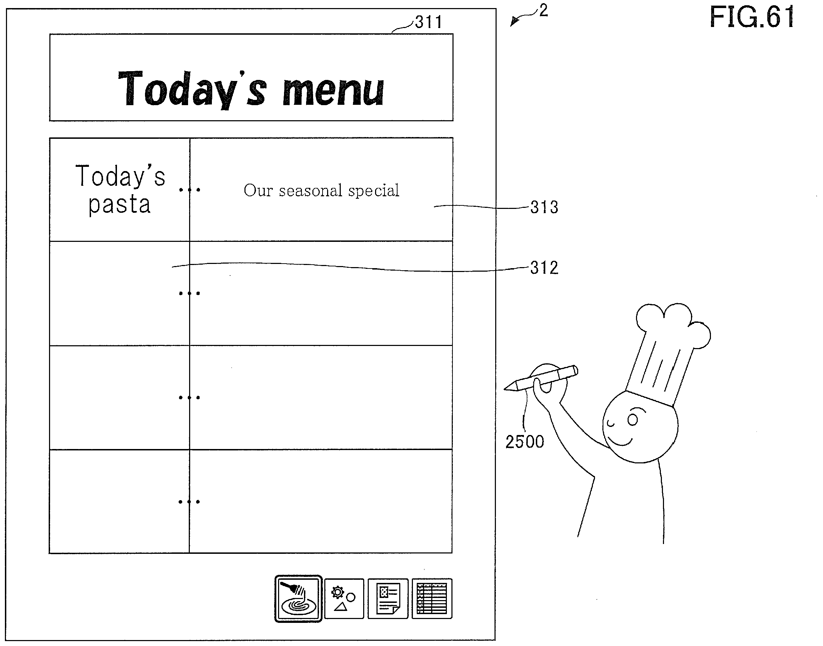

Fig. 61 illustrates an example of characters displayed with a font set that is set according to the work (job) when the display apparatus 2 is used as a handwritten signboard. It should be noted that, in the description of Fig. 61, the difference from Fig. 2 will be mainly explained. The user writes a large-size character in the heading field 311, a middle-size character in the menu field 312, and a small-size character in the description field 313 in a state in which a font set of "Food Menu" is set to the pen ID control data that is associated with the pen 2500. Therefore, the characters in the heading field 311 are displayed with Pop, the characters in the menu field 312 are displayed with Rounded, and the characters in the description field 313 are displayed with Century.

With respect to Figs. 3 to 6, the embodiment 2 is the same as the embodiment 1.

### <Defined control data>

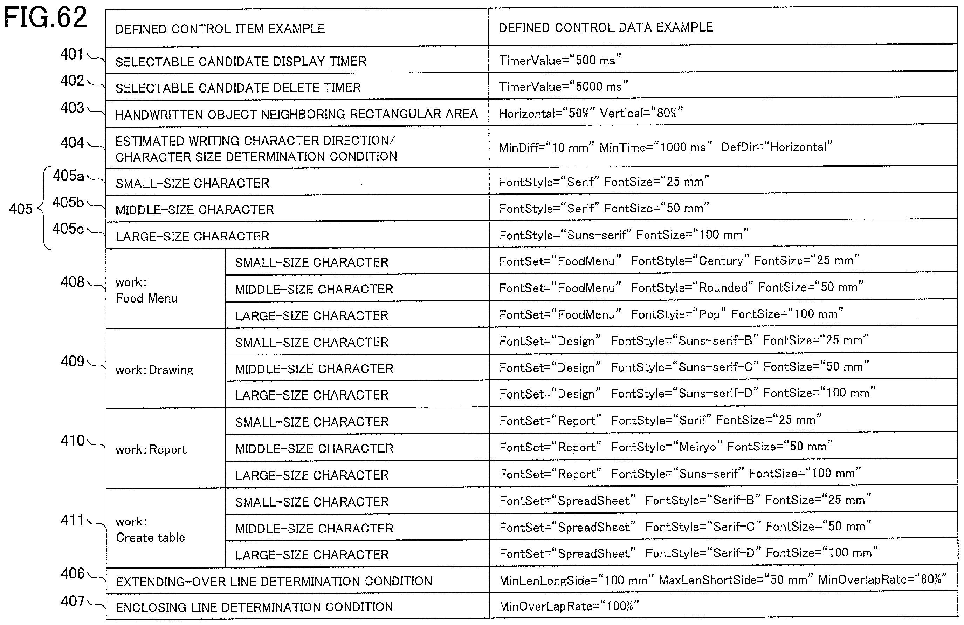

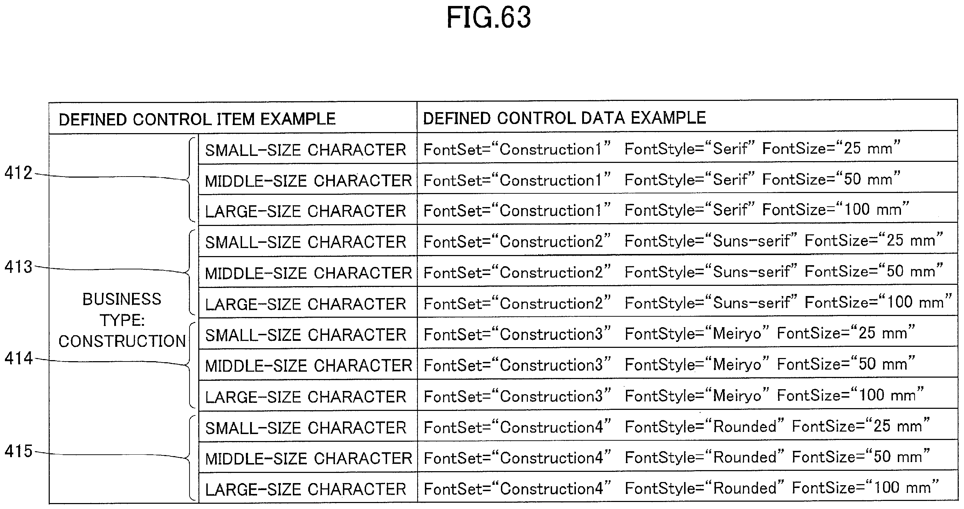

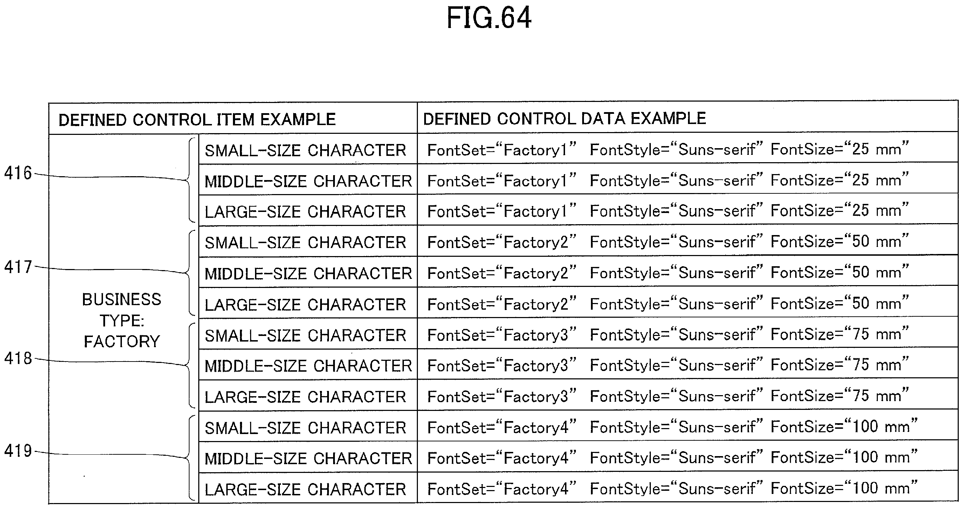

Fig. 62 shows an example of defined control data in the English conversion. It should be noted that, in the description of Fig. 62, the difference from Fig. 7A will be mainly explained. The contents of each defined control data are similar to Fig. 7A, but font names for alphabet are associated with "FontStyle". Therefore, if the user performs handwriting in English, a character string can be displayed in a font that is commonly used in English. Similarly, in Figs. 63 and 64, the "FontStyle" in Fig. 7B is associated with the font names for alphabet.

It is noted that the defined control data according to the use scene may be the same as that in Fig. 7C, in case of English conversion.

### <Example of dictionary data>

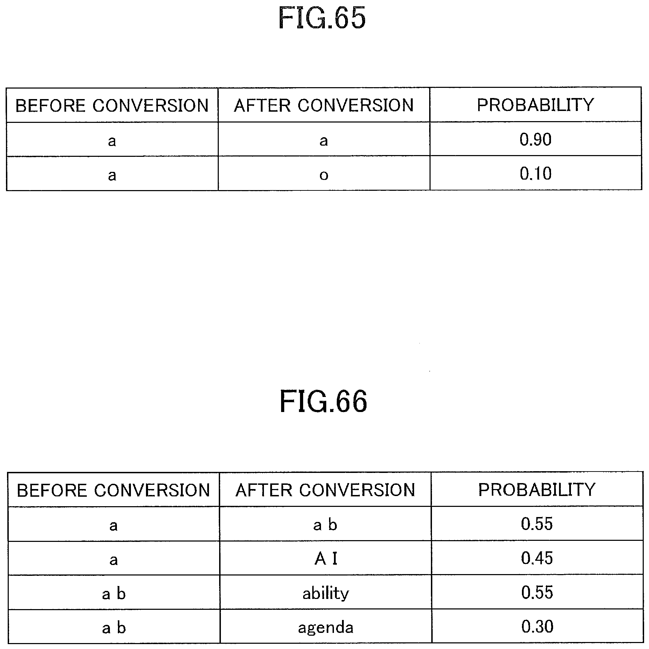

Dictionary data in the case of English conversion will be described with reference to Figs. 65 to 67. The description of Figs. 65-67 mainly illustrates the differences from Figs. 8-10. Fig. 65 is an example of dictionary data of a handwriting recognition dictionary unit 27 in English conversion. The dictionary data of the handwriting recognition dictionary unit 27 of Fig. 65 indicates that the handwritten "a (in a state of the stroke data)" is converted to "a" with a probability of 0.90 and converted to "o" with a probability of 0.10.

Fig. 66 is an example of dictionary data of a character string conversion dictionary unit 29 in English conversion. In the dictionary data of the character string conversion dictionary unit 29 of Fig. 66, the character string "a" is converted to "ab" with a probability of 0.55, and the character string "a" is converted to "AI" with a probability of 0.45. The same applies to other character strings of "before conversion".

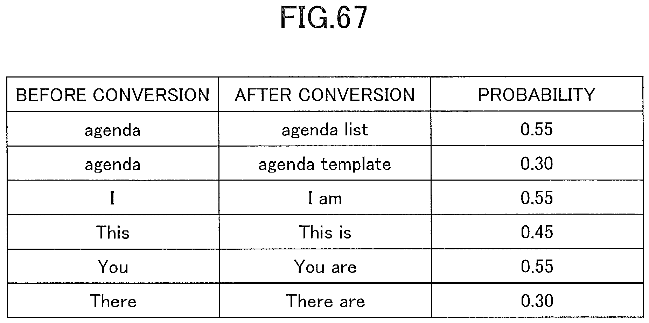

Fig. 67 is an example of dictionary data of a predictive conversion dictionary unit 31 in English conversion. In the dictionary data of the predictive conversion dictionary unit 31 of Fig. 67, the character string "agenda" is converted to "agenda list" with a probability of 0.55 and to "agenda template" with a probability of 0.30.

It should be noted that the dictionary data is language independent, and any character string may be registered as "before conversion" and "after conversion".

### <Example of operation command definition data>

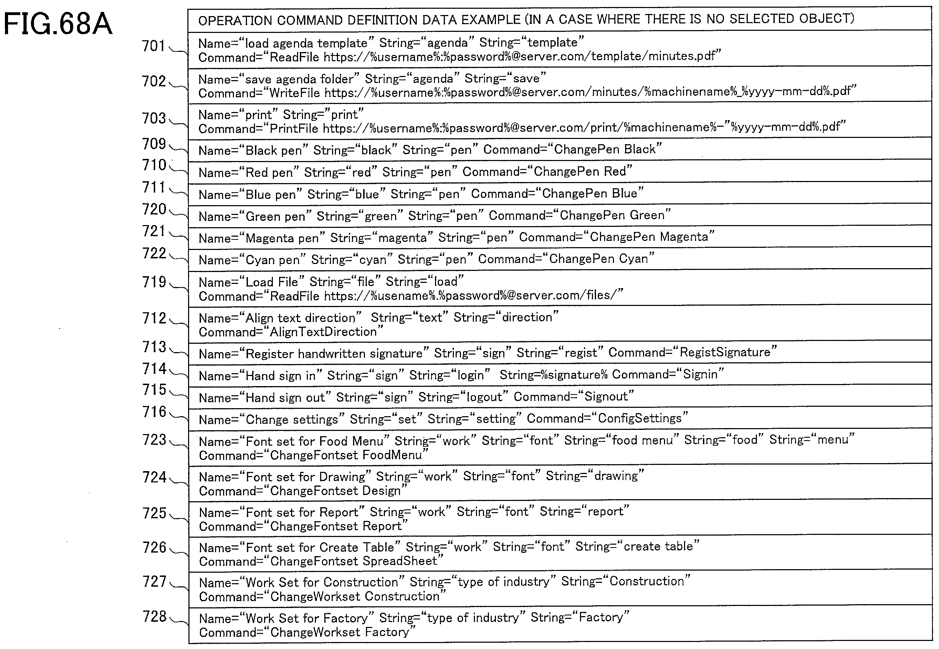

Fig. 68A is an example of operation command definition data when there is no selected object in case of English conversion. The description of Fig. 68A mainly explains the difference from Fig. 11A. The contents of each operation command are similar to Fig. 11A, but the English expressions are associated with the Name and string. Accordingly, users can handwrite operation commands in English and select operation commands in English.

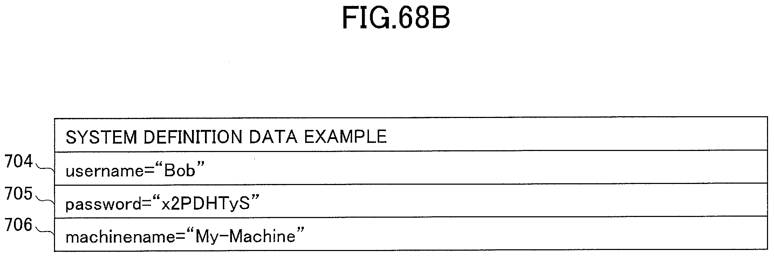

Fig. 68B illustrates an example of system definition data. The description of Fig. 68B mainly explains the difference from Fig. 11B. In Fig. 68B, "Bob" is associated with username.

With respect to the subsequent Figs. 12 to 18, it is assumed that the embodiment 2 is the same as the embodiment 1. More precisely, with respect to Figs. 13 and 14, Name for alphabet is set, but the figure is omitted because it is not a characteristic feature.

### <Data highlighted in black and white and data displayed by a color display method>

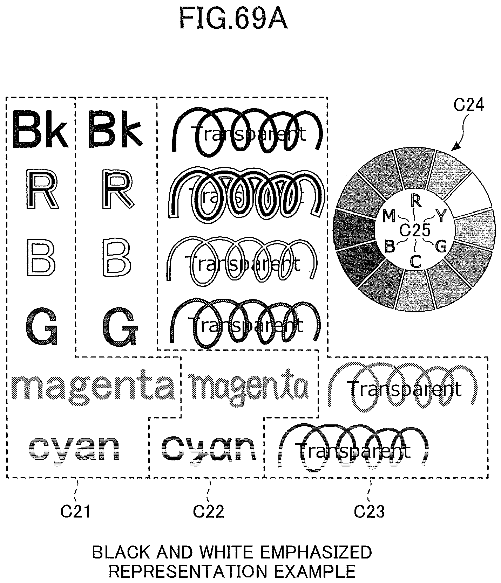

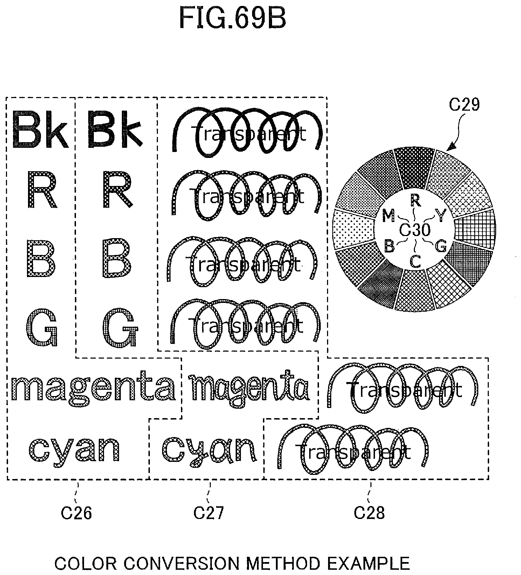

Figs. 69A and 69B illustrate data highlighted in black and white and data displayed in a color display method using the color definition data of Fig. 18. It should be noted that, in the description of Figs. 69A and 69B, the difference from Figs. 19A and 19B will be mainly explained.

The symbol C21 indicates texts of "Bk", "R", "B", "G", "magenta", and "cyan", which are handwritten input originated data items to be described later. The symbol C22 indicates strokes (handwritings) of "Bk", "R", "B", "G", "magenta", and "cyan". The symbol C23 indicates spring-shaped strokes (handwritings). The symbol C24 is a donut-shaped color chart (image) and the symbol C25 is RGBCMY (text that is not handwritten input originated data) inside the color chart. Under the symbol C23, there are texts of the handwritten input originated data items, "Transparent" in black.

It is noted the handwritten input originated data refers to data entered through handwriting on a touch panel. The handwritten input originated data includes the data that remains as handwritten data after it is entered, and includes the data that is converted to text data. In addition, when data is obtained from an external apparatus, information indicating that the data is handwritten input originated data is not lost. The handwritten input originated data may include text data converted by character recognition, as well as data converted based on user operations such as stamps displayed as fixed characters or marks such as "completed" or "confidential", shapes such as circles and stars, straight lines, etc. In other words, the handwritten input-originated data is stroke data that is handwritten in a display apparatus or text data that is converted from the stroke data by handwriting recognition.

Fig. 69A is the same as Fig. 19A except that black, red, blue, green, magenta, and cyan in Japanese are changed to "Bk," "R," "B," "G," "magenta," and "cyan". The same applies to Fig. 69B.

As can be seen from the comparison between Fig. 69A and Fig. 69B, the red of text "R" inside the color chart of the symbol C30 of Fig. 69B is not handwritten input originated data. Therefore, the text "R" is displayed in gray scale in Fig. 69A. On the other hand, because the text "R" of the symbol C26 is handwritten input originated data, the text is highlighted in black and white in Fig. 69A.

Further, because magenta and cyan are transmissive colors, "Transparent" is visible in Fig. 69B. Also illustrated in Fig. 69A, magenta and cyan are transparent because of the use of a transparent pattern of white. As described above, the black-and-white highlighting supporting apparatus can indicate the color used for emphasis using black-and-white highlighting display, while the color device can convert the data into color and displays it.

### <Pen color selection button definition data>

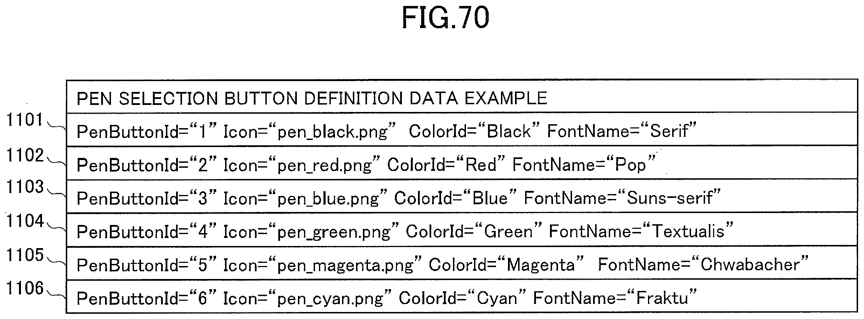

Fig. 70 is an example of pen color selection button definition data for English conversion. It should be noted that, in the description of Fig. 70, the difference from Fig. 20 will be mainly explained. In the pen color selection button definition data shown in Fig. 70, "FontName" is associated with a font name for alphabet. Therefore, a character string or the like can be displayed using the font corresponding to the pen color selection button selected by the user.

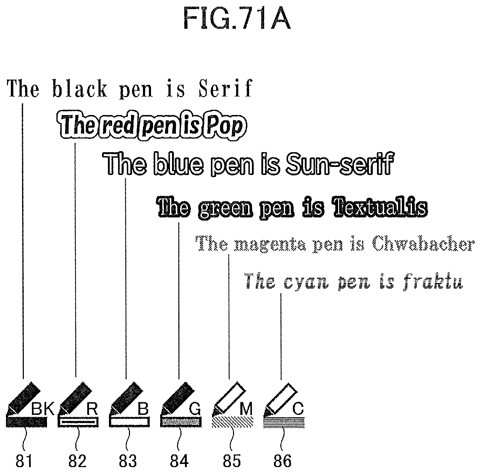

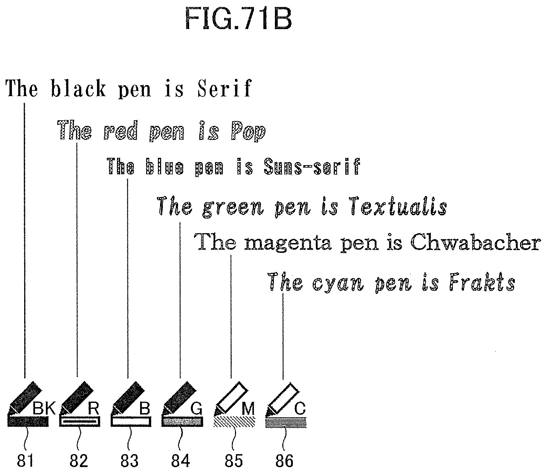

Figs. 71A and 71B are examples of pen color selection buttons 81-86 displayed on a display in English conversion. With respect to the pen color selection buttons 81-86, the embodiment 2 is similar to the embodiment 1. When the user presses the pen color selection buttons 81-86 with a pen 2500, ColorId and FontName are added to the pen ID control data, and, thereafter, the handwritten objects or character string objects entered with the pen 2500 are displayed using the ColorId and the FontName. Therefore, a character string or the like is displayed using the font shown in Fig. 70.

With respect to Figs. 22 and 23, a case of English conversion may be the same as the embodiment 1.

### <Display example of selectable candidates>

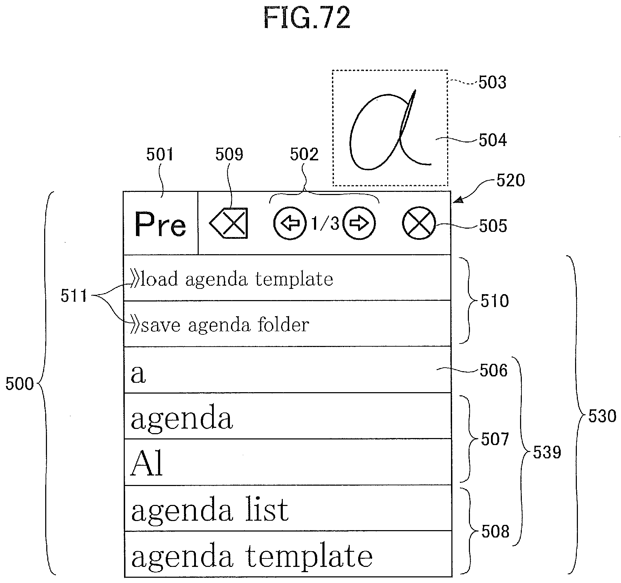

Fig. 72 is an example of an operation guide 500 and selectable candidates displayed by the operation guide 500, in case of English conversion. The description of Fig. 72 mainly explains the difference from Fig. 24. In Fig. 72, the user handwrites "a" as a handwritten object 504. Based on the "a", operation command candidates 510, a handwriting recognition character string candidate 506, converted character string candidates 507, and character string/predictive conversion candidates 508 are displayed. Accordingly, it may be similar to Fig. 24 except that the Japanese language of Fig. 24 is changed to English.

The operation command candidates 510 are, for example, candidates of the operation commands 701 and 702 including "agenda" in the string in the operation command definition data of Fig. 68A.

As described above, the user can also display the operating guide 500 in the case of English conversion.

With respect to Figs. 25 to 31, in case of English conversion, figures are different from the embodiment 1 because of English handwriting, but the figures are omitted because of non-characteristic features. Further, with respect to figures illustrating a flow of handwriting conversion, the figures may be the same as Figs. 32 to 39.

### <Setting of work-specific font set>

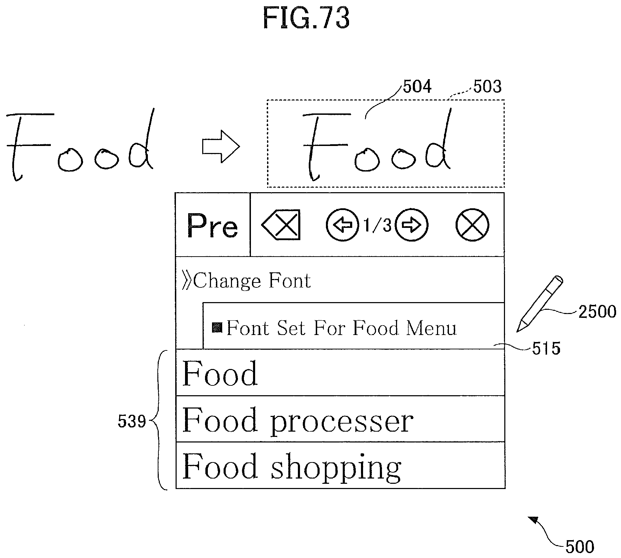

Fig. 73 is an example of an operation guide 500 displayed when a user handwrites "Food" in English conversion. The description of Fig. 73 mainly explains the difference from Fig. 40. Because "Food" corresponds to String of the operation command definition data 723, the handwritten input display control unit 23 displays the operation command 515 of "Font Set For Food Menu" in the operation guide 500 (Step S62). In addition, character string candidates 539 such as "Food," "Food processor," and "Food shopping" converted from "Food" are displayed. When the user selects the operation command 515 of "Font Set For Food Menu," the handwritten input unit 21 receives the selection and the handwritten input display control unit 23 stores "FoodSet" = "FoodMenu" in the pen ID control data storage unit 36 (step S102). It is noted that the operation guide 500 is erased by selecting the operation command (S76 to S78).

The flow chart of the process in which the display apparatus 2 stores the font set "FoodMenu" in the pen ID control data storage unit 36 may be the same as that of Fig. 41.

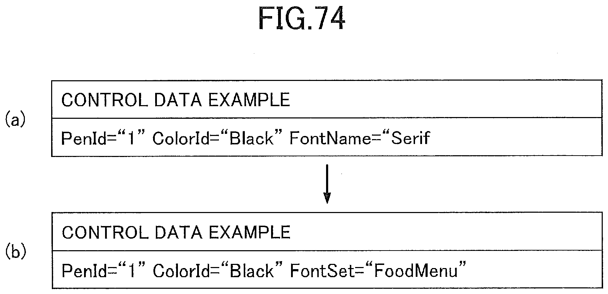

Fig. 74 is an example of a transition diagram of pen ID control data in English conversion. The description of Fig. 74 mainly explains the difference from Fig. 42. In Fig. 74(a), "Serif" is set to FontName. In Fig. 74(b) after the selection of the operation command 515 of "Font Set For Food Menu" by the user, the color remains the same, but "FoodMenu" is set as a font set.

### <Handwritten input using work-specific font set>

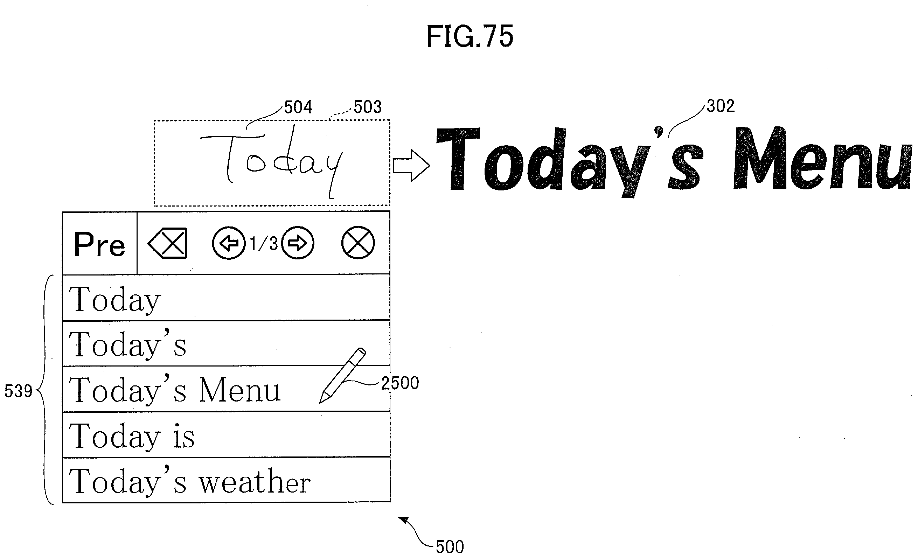

Fig. 75 shows an operation guide 500 when handwritten input is performed in a state in which a font set "FoodMenu" is set in the pen ID control data, in English conversion. The description of FIG. 75 mainly explains the difference from Fig. 43. Because "Today" is handwritten in Fig. 75, character string candidates 539 such as "Today," "Today's," "Today's Menu," and "Today's weather" converted from "Today" are displayed. It is noted that an operation command is not displayed because there is no operation command definition data having "Today" as a String.

When the user selects the character string candidate 539 of "Today's Menu," the handwritten input unit 21 receives the selection and the handwritten input display control unit 23 displays the character string object 302 of "Today's Menu" (step S82). When displaying the character string object 302 "Today's Menu", the handwritten input display control unit 23 refers to the pen ID control data to determine the color, the font, and the character size, and displays the character string object 302.

The flow of processing in which the display apparatus 2 displays "Today's Menu" may be the same as that in Fig. 44.

### <Setting of business-specific font set>

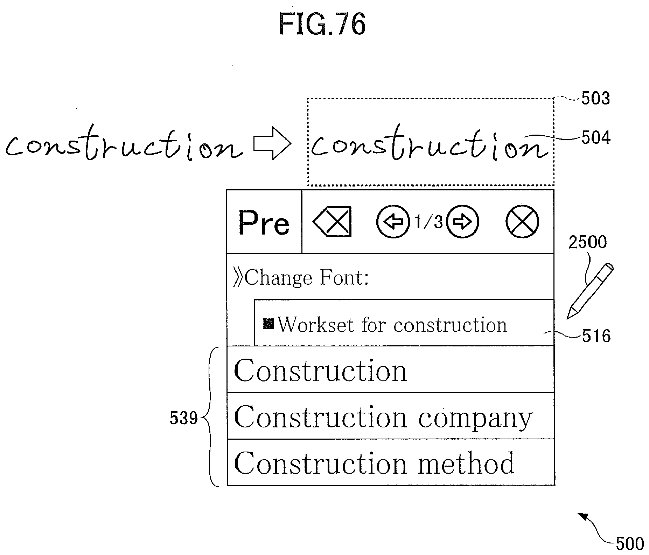

Fig. 76 is an example of an operation guide 500 displayed when a user handwrites "construction" in English conversion. The description of FIG. 76 mainly explains the difference from Fig. 45. Because "construction" corresponds to String of the operation command definition data 727, the handwritten input display control unit 23 displays the operation command 516 of "workset for construction" in the operation guide 500 (Step S62). In addition, character string candidates 539 such as "construction," "construction company," and "construction method" converted from "structure" are displayed. When the user selects the operation command 516 "workset for construction," the handwritten input unit 21 receives the selection and the handwritten input display control unit 23 executes Command="Change Workset Construction." The handwritten input display control unit 23 sets FontSet="Constructionl" to "Construction4" to the pen ID control data corresponding to pens 1 to 4, respectively (step S102).

The flowchart of a process in which the display apparatus 2 stores font sets "Construction1" to "Construction4" in the pen ID control data storage unit 36 may be the same as that in Fig. 41.

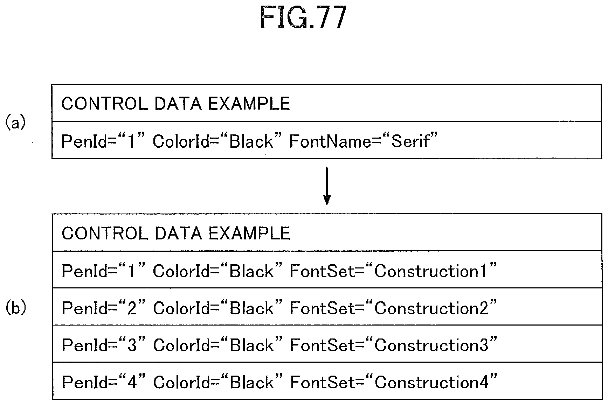

Fig. 77 is an example of a transition diagram of pen ID control data in English conversion. The description of FIG. 77 mainly explains the difference from Fig. 47. Fig. 77(a) is the pen ID control data at the start of the sequence diagram described by referring to Figs. 32-39, and Fig. 77(b) is the pen ID control data when the user selects the operation command 516 "workset for construction." In Fig. 77(a), the color and the font, which have been set by the pen color selection button 81, are set. In Fig. 77(b), the same color is set to the pens 1 to 4, and the font sets of "Construction1" to "Construction4" are set to the pens 1 to 4, respectively.

### <Handwritten input using business-specific font set>

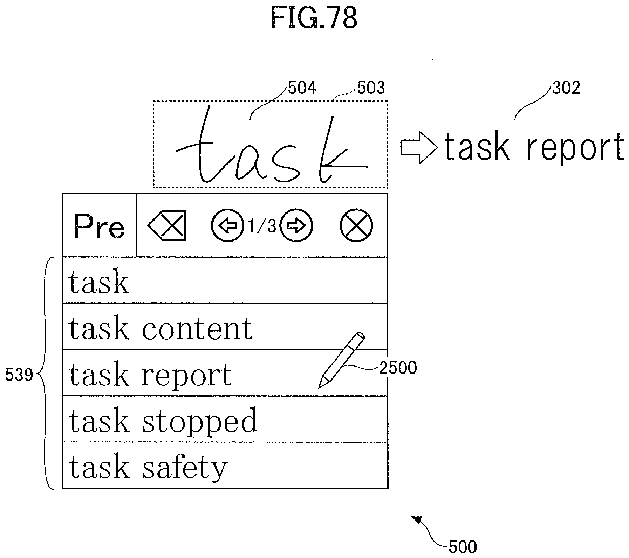

Fig. 78 illustrates an operation guide 500 when handwritten input is performed in a state in which a font set "Construction1" is set in the pen ID control data. The description of Fig. 78 mainly explains the difference from Fig. 48. In Fig. 78, because "task" is handwritten, character string candidates 539 such as "task," "task content," "task report," "task stopped," and "task safety" converted from "task" are displayed. It is noted that an operation command is not displayed because there is no operation command definition data having "task" as a String.

When the user selects the character string candidate 539 of "task report," the handwritten input unit 21 receives the selection and the handwritten input display control unit 23 displays the character string object 302 of "task report" (step S82). When displaying the character string object 302"task report", the handwritten input display control unit 23 refers to the pen ID control data to determine the color, the font, and the character size, and displays the character string object 302. Details will be described below.

The process flow in which the display apparatus 2 displays "task report" may be the same as that in Fig. 44

### <Use example of business-specific font set>

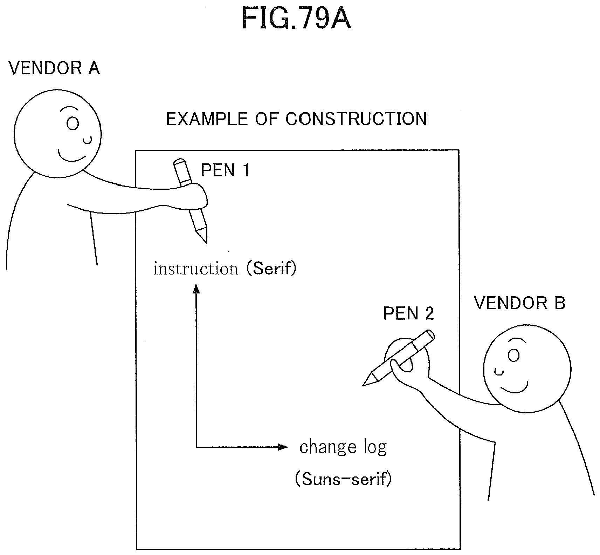

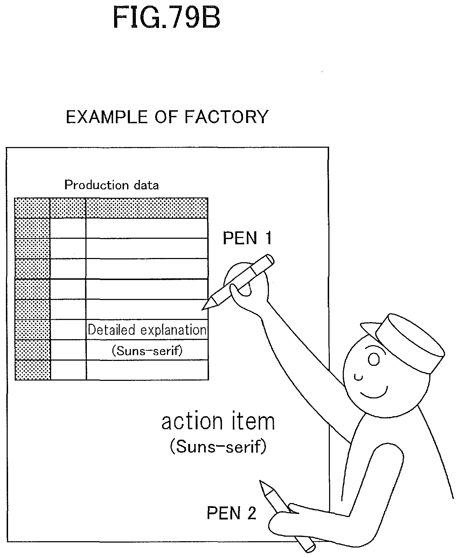

Figs. 79A and 79B are diagrams illustrating an example of using a business-specific font set in the English conversion. The description of Figs. 79A and 79B mainly explain the difference from Figs. 50A and 50B.

In Fig. 79A, a vendor A uses a pen 1 for handwriting and a vendor B uses a pen 2 for handwriting. The pen ID control data for the pen 1 has a font set named Serif (constant character size), while the pen ID control data for the pen 2 has a font set named Sans-serif (constant character size). Accordingly, if, for example, the vendor A handwrites a handwritten object 504, such as "instruction", then the display apparatus 2 performs displaying in Serif, and if the vendor B handwrites a handwritten object 504, such as "change log", then the display apparatus 2 performs displaying in Sans-serif. As described above, the font and the character size can be switched by the user using the pen.

In Fig. 79B, a single user uses a pen 1 and a pen 2. A font of Sans-serif with a character size=25 mm is set to the pen ID control data for the pen 1, and a font of Sans-serif with a character size=75 mm is set to the pen ID control data for pen 2. Therefore, when a user performs handwriting using the pen 1, a character string object is displayed with a character size of 25 mm in Sans-serif, and when a character string object is handwritten with the pen 2, the character string object is displayed with a character size of 75 mm in Sans-serif. In this way, the user can switch the font and the character size by switching the pens.

The process flow of font switching according to the pen may be the same as that of Fig. 51.

### <Other font selection example>

The following is an example of selection of several fonts (not font sets) by a user in the English conversion.

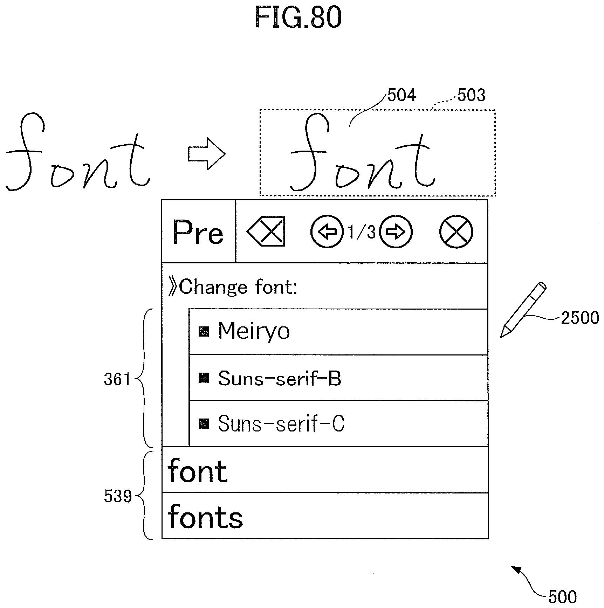

(1) Fig. 80 shows an example of an operation guide 500 in which a list of fonts 361 is displayed as an operation command based on a handwritten object 504 "font" in the English conversion. The description of Fig. 80 mainly explains the difference from Fig. 52. In Fig. 80, a list of fonts 361, "Meiryo", "Sans-serif-B", and "Sans-serif-C", is displayed. In order for the display apparatus 2 to perform displaying in this manner, it is sufficient that "font" is set in String of the operation command definition data items of the fonts "Meiryo," " Sans-serif-B," and " Sans-serif-C."

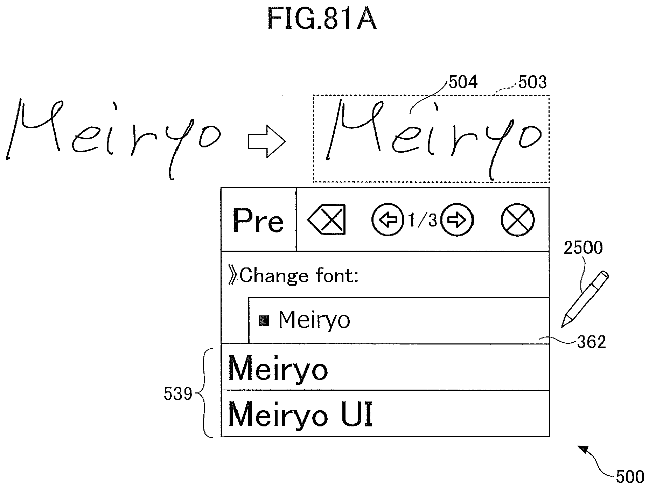

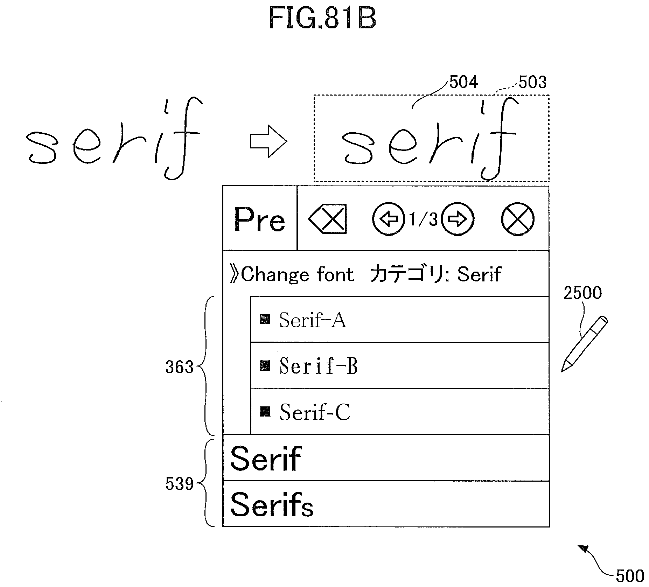

(2) Fig. 81A shows an example of an operation guide in which a list of fonts as an operation command is displayed based on a handwritten object 504, "Meiryo". The description of Figs. 81A and 81B mainly explain the difference from Figs. 53A and 53B. In Fig. 81A, a list of fonts 362 including a single font, "Meiryo", is displayed. In order to for the display apparatus 2 to perform displaying in this manner, it is sufficient that "Meiryo" is set in String of the operation command definition data of the font "Meiryo".
   Fig. 81B shows an example of an operation guide 500 in which a list of fonts 363 is displayed as an operation command based on a handwritten object 504 "Serif" in the English conversion. In Fig. 81B, a list of fonts 363 such as "Serif-A", "Serif-B", and "Serif-C" is displayed. In order for the display apparatus 2 to perform displaying in this manner, it is sufficient that "Serif" is set in String of the operation command definition data items of the fonts "Serif-A," "Serif-B", and "Serif-C."

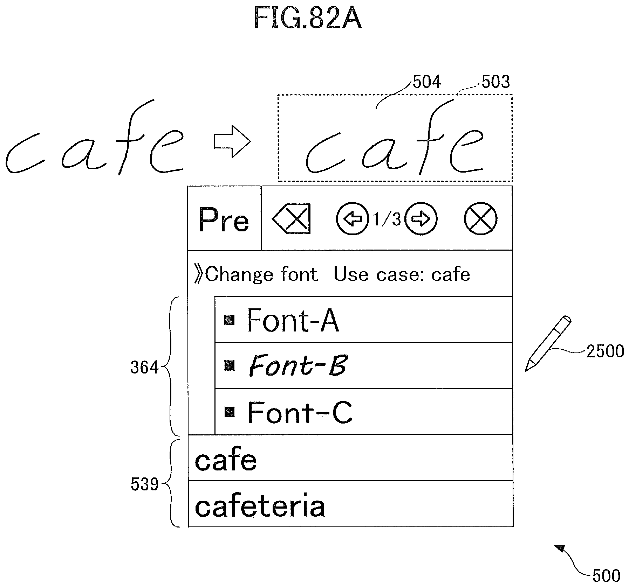

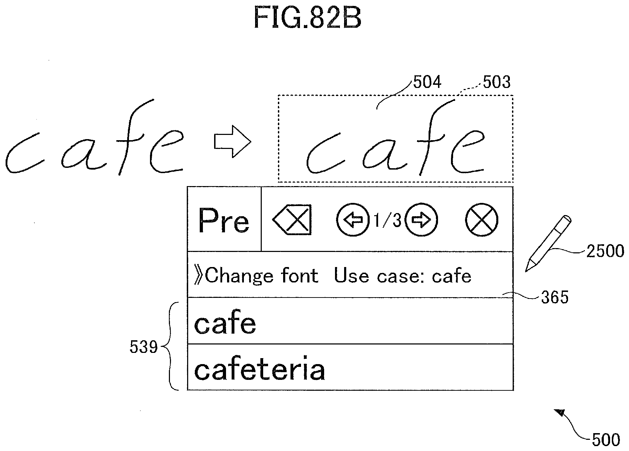

(3) Fig. 82A shows an example of an operation guide 500 in which a list of fonts 364 is displayed as an operation command based on a handwritten object 504 "cafe" in the English conversion. The description of Figs. 82A and 82B mainly explain the difference from Figs. 54A and 54B. In Fig. 82A, a list of fonts 364 is displayed, such as "Font-A," "Font-B," and "Font-C." In order for the display apparatus 2 to perform displaying in this manner, it is sufficient that "cafe" is set in String of the operation command definition data items of the fonts "Font-A," "Font-B," and "Font-C."
   Fig. 82B shows an example of an operation guide 500 displaying a list of usage scenes 365 as an operation command based on a handwritten object 504 "cafe". Fig. 82B shows a list of usage scenes 365 "Use case: cafe". In order for the display apparatus 2 to perform displaying in this manner, "cafe" is set in String of the operation command definition data of "Use case:cafe", and the font corresponding to "cafe" is defined in the defined control data. As described above, it is not necessary for a user to select a font name directly.

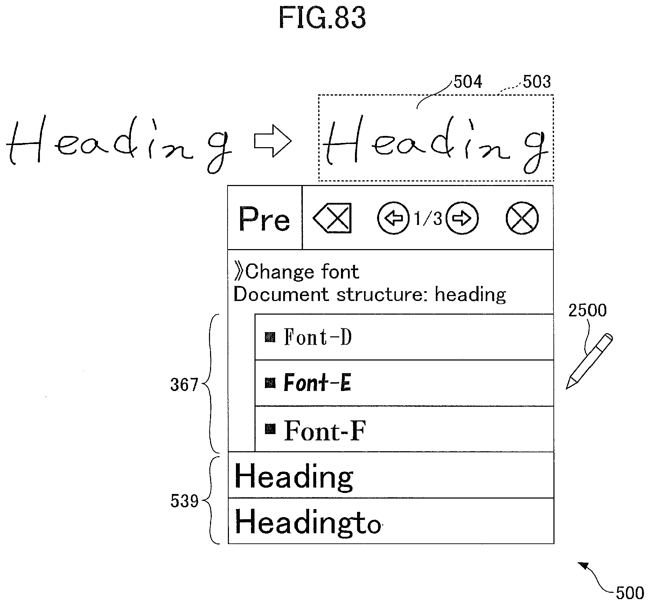

(4) Fig. 83 shows an example of an operation guide 500 in which a list of fonts 367 is displayed as an operation command based on a handwritten object 504 "Heading" in the English conversion. The description of Fig. 83 mainly explains the difference from Fig. 55. In Fig. 83, a list of fonts 367 is displayed, such as "Font-D," "Font- E," and "Font-F." In order for the display apparatus 2 to perform displaying in this manner, it is sufficient that "heading" is set in String of the operation command definition data items of the fonts "Font-D," "Font- E," and "Font-F."

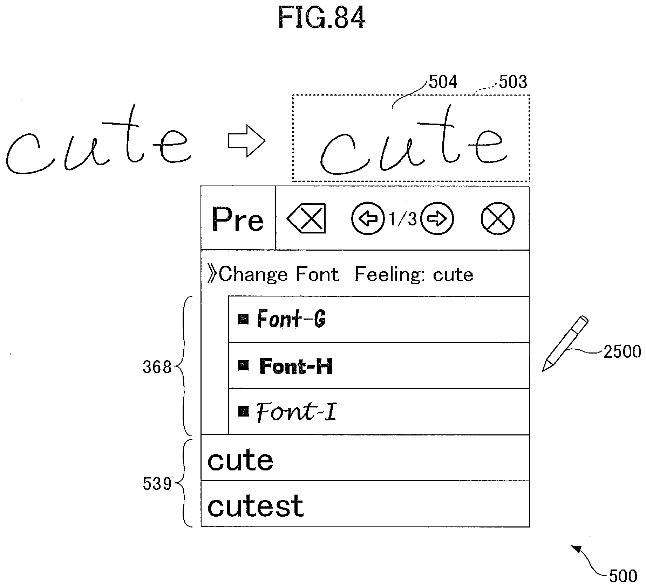

(5) Fig. 84 shows an example of an operation guide 500 in which a list of fonts 368 is displayed as an operation command based on a handwritten object 504 "cute" in the English conversion. The description of Fig. 84 mainly explains the difference from Fig. 56. In Fig. 84, a list of fonts 368 is displayed, such as "Font-G," "Font- H," and "Font-I." In order for the display apparatus 2 to perform displaying in this manner, it is sufficient that "cute" is set in String of the operation command definition data items of the fonts "Font-G," "Font-H," and "Font-I."

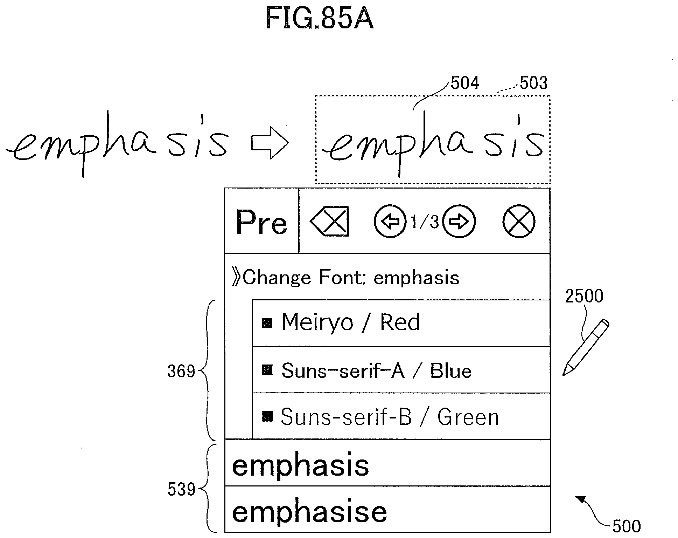

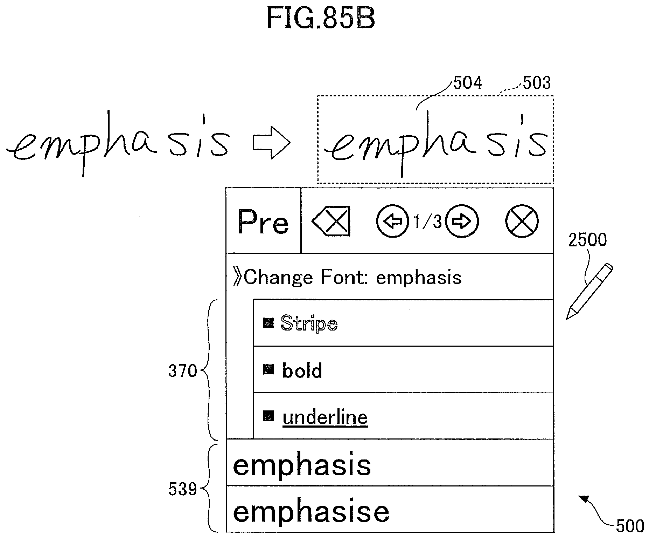

(6) Fig. 85A shows an example of an operation guide 500 in which a list of fonts 369 is displayed as an operation command based on a handwritten object 504 "emphasis" in the English conversion. The description of Figs. 85A and 85B mainly explain the difference from Figs. 57A and 57B. In Fig. 85A, the fonts and colors are displayed, such as "Meiryo/Red", "Sans-serif-A/Blue", and "Sans-serif-B/Green". In order for the display apparatus 2 to perform displaying in this manner: "emphasis" is set in String of the operation command definition data items of "Meiryo/Red," "Sans-serif-A/Blue," and "Sans-serif-B/Green"; and fonts and colors are set in Command.
   Fig. 85B shows an example of an operation guide 500 in which a list of fonts 370 is displayed as an operation command based on a handwritten object 504 "emphasis" in the English conversion. Fig. 85B shows a list of fonts 370 named "stripe", "bold", and "underline". In order for the display apparatus 2 to perform displaying in this manner, it is sufficient that "emphasize" is set to String in the operation command definition data items of "stripe," "bold," an "underline."

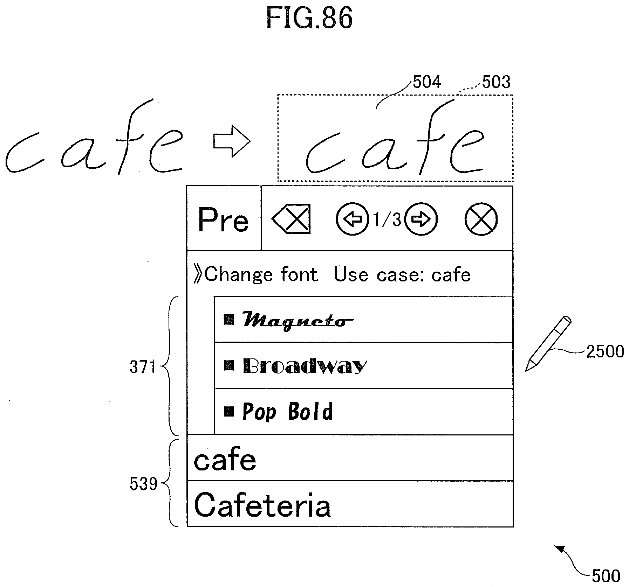

(7) Fig. 86 shows an example of an operation guide 500 in which a list of fonts 371 is displayed as an operation command based on a handwritten object 504 "cafe" in the English conversion. The description of Fig. 86 mainly explains the difference from Fig. 58. In Fig. 86, a list of fonts 371 is displayed, such as "Magneto", "Broadway", and "Pop Bold". In order for the display apparatus 2 to perform displaying in this manner, it is sufficient that "cafe" is set in String of the operation command definition data items of "Magneto," "Broadway," and "Pop Bold."

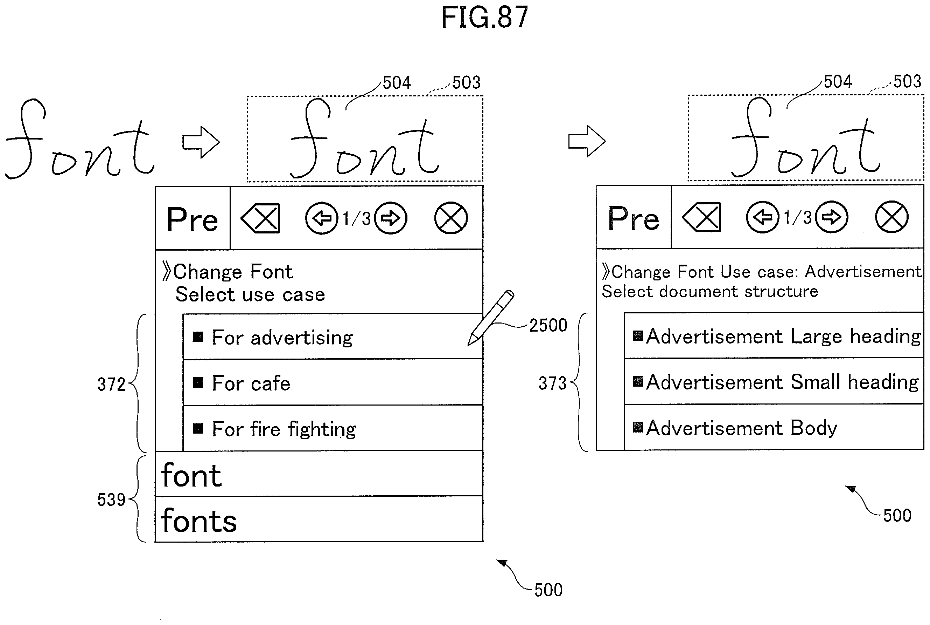

(8) Fig. 87 shows an example of an operation guide 500 in which a list of fonts 372 is displayed as an operation command based on a handwritten object 504 "font" in the English conversion. The description of Fig. 87 mainly explains the difference from Fig. 59. In Fig. 87, the operation commands "For advertising," "For cafe," and "For fire fighting" are displayed. In order for the display apparatus 2 to perform displaying in this manner, "font" is set to String in the operation command definition data items of "For advertising," "For cafe," and "For fire fighting."

In addition, if the user selects "For advertisement", a list of fonts 373 will appear, such as "Advertisement Large Heading", "Advertisement Small Heading", and "Advertisement Body". In order for the display apparatus 2 to perform displaying in this manner, the operation command "For advertising" is associated with the operation commands "Advertisement Large heading," "Advertisement Small heading," and "Advertisement body." In addition, fonts for "Advertisement Large Heading", "Advertisement Small Heading", and "Advertisement Body" are defined in the defined control data.

### <Major effects>

As described above, when the user performs handwriting in English or the like, the font can be changed in the same manner as in the embodiment 1. It is noted that, although the present embodiment has been described as an example in English, the same can be applied to languages other than English (Chinese, Hindi, Spanish, Arabic, Portuguese, Russian, etc.).

### [Embodiment 3]

In the first embodiment, the display apparatus 2 is described as having a large touch panel, but the display apparatus is not limited to those having a touch panel. In an embodiment of the present invention, a projector-type display apparatus will be described.

### <Example 1 of another display apparatus configuration>

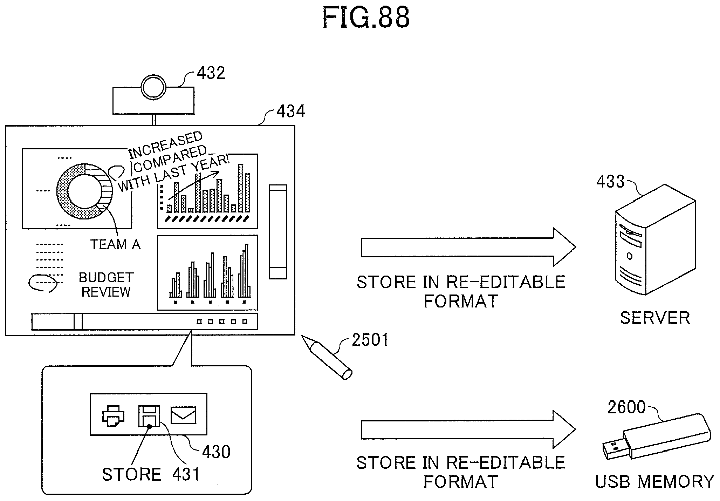

Fig. 88 is a drawing illustrating another configuration example of a display apparatus. In Fig. 88, a projector 432 is located above a typical white board 434. The projector 432 corresponds to a display apparatus. The typical white board 434 is not a flat panel display integrated with a touch panel, but rather a white board that a user writes directly with a marker. It should be noted that the white board may be a blackboard, and only a flat surface large enough to project images.

The projector 432 has an optical system with an ultra-short focal point so that images of less distortion can be projected from about 10 cm onto the white board 434. The images may be transmitted from a wirelessly or wiredly connected PC, or may be stored by the projector 432.

The user handwrites on a white board 434 using a dedicated electronic pen 2501. The electronic pen 2501 has a light emitting unit at a tip portion, for example, where the light emitting unit is turned on when the user presses against the white board 434 for handwriting. The light wavelength is near-infrared or infrared, so it is invisible to the user. The projector 432 includes a camera that captures the light emitting unit and analyzes the captured image to determine the direction of the electron pen 2501. Further, the electronic pen 2501 emits a sound wave together with a light emission, and the projector 432 calculates a distance according to the time of arrival of the sound wave. Projector 432 can determine the position of the electronic pen 2501 from the direction and the distance. A stroke is drawn (projected) at the position of the electronic pen 2501.

Projector 432 projects menu 430, so when a user presses a button with the electronic pen 2501, the projector 432 identifies the pressed button from the position of the electronic pen 2501 and the ON signal of a switch. For example, when a save button 431 is pressed, the stroke handwritten by the user (a set of coordinates) is stored by the projector 432. The projector 432 stores handwritten information in a predetermined server 433 or a USB memory 2600 or the like. The handwritten information is stored for each page. The coordinates are saved instead of image data, allowing the user to perform re-editing. It should be noted that the menu 430 may not be displayed because operation commands can be invoked by handwriting in an embodiment of the present invention.

### <Example 2 of another display apparatus >

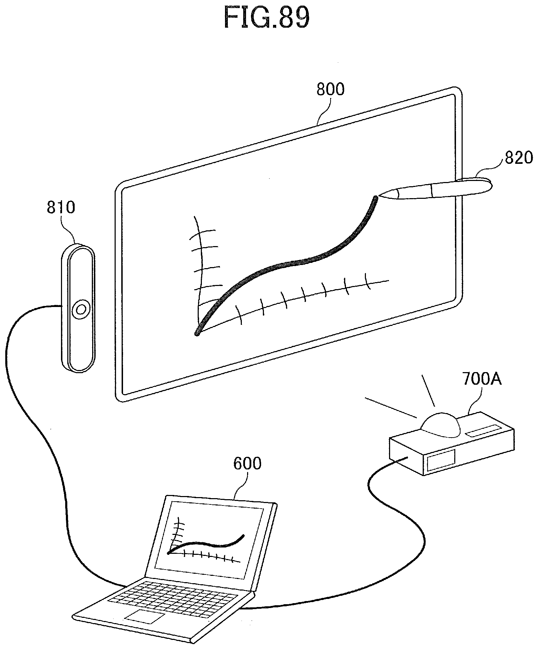

Fig. 89 is a drawing illustrating yet another configuration example of a display apparatus 2. In an example of Fig. 89, the display apparatus 2 includes a terminal apparatus 600, an image projection apparatus 700A, and a pen operation detection apparatus 810.

Terminal apparatus 600 is connected with wire to the image projection apparatus 700A and the pen operation detection apparatus 810. The image projection apparatus 700A causes the image data input by the terminal apparatus 600 to be projected onto a screen 800.

The pen operation detection apparatus 810 is in communication with an electronic pen 820 and detects operations of the electronic pen 820 in the vicinity of the screen 800. Specifically, the electronic pen 820 detects coordinate information indicating a point indicated by the electronic pen 820 on the screen 800, and transmits the detected coordinate information to the terminal apparatus 600.

The terminal apparatus 600 generates the image data of the stroke image input by the electronic pen 820 based on the coordinate information received from the pen operation detection apparatus 810 and causes the image projection apparatus 700A to draw the stroke image on the screen 800.

Further, the terminal apparatus 600 generates superimposed image data representing a superimposed image composed of a background image projected by the image projection apparatus 700A and the stroke image input by the electronic pen 820.

### <Example 3 of another display apparatus >

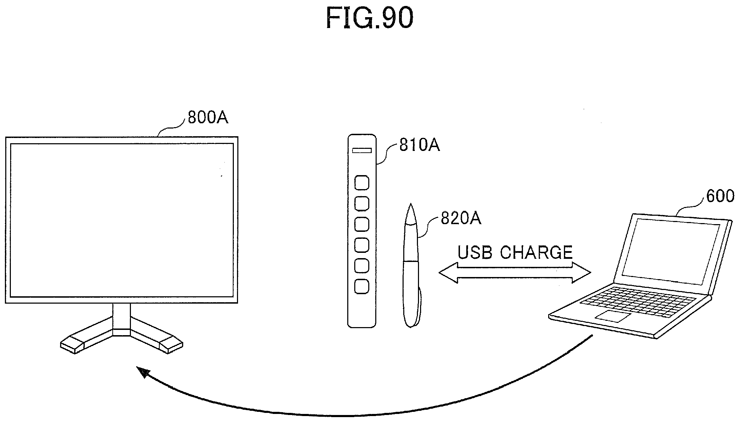

FIG. 90 is a drawing illustrating a configuration example of a display apparatus. In an example of Fig. 90, the display apparatus 2 includes a terminal apparatus 600, a display 800A, and a pen operation detection apparatus 810.

The pen operation detection apparatus 810 is disposed near the display 800A and detects coordinate information indicating a point indicated by the electronic pen 820A on the display 800A and transmits the coordinate information to the terminal apparatus 600. It should be noted that, in an example of Fig. 90, the electronic pen 820A may be charged by the terminal apparatus 600 via a USB connector.

The terminal apparatus 600 generates image data of a stroke image input by the electronic pen 820A based on the coordinate information received from the pen motion detection apparatus 810 and displays the image data on the display 800A.

### <Example 4 of another display apparatus >

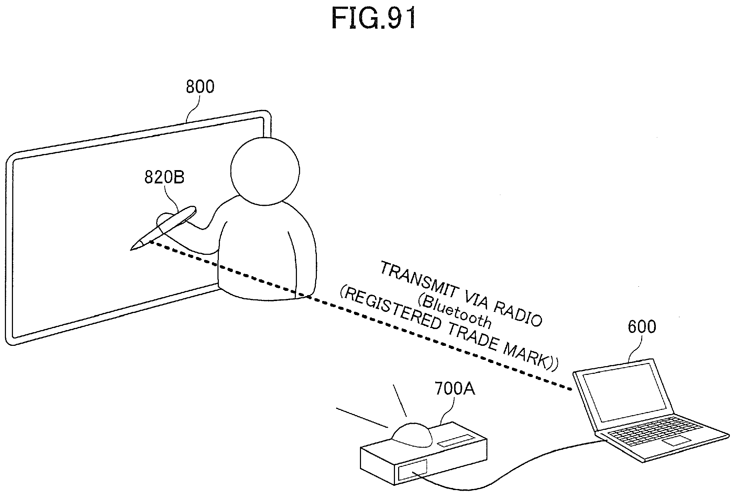

Fig. 91 is a drawing illustrating a configuration example of a display apparatus. In an example of Fig. 91, the display apparatus 2 includes a terminal apparatus 600 and an image projection apparatus 700A.

The terminal apparatus 600 performs wireless communication (such as Bluetooth) with the electronic pen 820B and receives coordinate information of a point indicated by the electronic pen 820B on the screen 800. Further, the terminal apparatus 600 generates image data of a stroke image input by the electronic pen 820B based on the received coordinate information and causes the image projection apparatus 700A to project the stroke image.

Further, the terminal apparatus 600 generates superimposed image data representing a superimposed image composed of a background image projected by the image projection apparatus 700A and the stroke image input by the electronic pen 820.

As described above, each of the above-described embodiments can be applied in various system configurations.

### <Other application examples>

As described above, while preferred embodiments of the present invention have been described with reference to examples, various modifications and substitutions may be made thereto without departing from the spirit and scope of the invention.

For example, display methods of the embodiments are suitably applicable to an information processing apparatus having a touch panel. Apparatuses having the same function as the display apparatuses are also referred to as electronic blackboards, electronic whiteboards, electronic information boards, and interactive boards. The information processing apparatus having a touch panel mounted therein may be, for example, an output apparatus such as a PJ (Projector), a digital signage, an HUD (Head Up Display) apparatus, an industrial machine, an imaging apparatus, a sound collector, a medical apparatus, a network home appliance, a personal computer, a cellular phone, a smartphone, a tablet terminal, a game machine, a PDA (Personal Digital Assistant), a digital camera, a wearable PC, or a desktop PC.

Further, according to an embodiment of the present invention, a part of the processing performed by the display apparatus 2 may be performed by a server. For example, the display apparatus transmits stroke information to the server and acquires and displays information to be displayed with the operation guide 500.

Further, coordinates of the pen are detected by a method of detecting the coordinates of the pen tip by the touch panel in an embodiment of the present invention, but the coordinates of the pen tip may be detected by ultrasonic waves. Further, the pen emits ultrasonic waves together with the light emission, and the display apparatus 2 calculates the distance according to the time of arrival of the ultrasonic waves. The display apparatus 2 can determine the position of the pen according to the direction and the distance. The projector draws (projects) the pen's trajectory as a stroke.

Further, in an embodiment of the present invention, when a selected object is present, candidates for the editing-related operation commands and the modification-related operation commands are displayed, but they may be displayed simultaneously with other operation command candidates.

Further, the display apparatus 2 may not have the user's handwritten signature data. It may be retained by an information processing apparatus on the cloud or within the company.

Further, a configuration example such as Figs. 6A and 6B is divided according to a main function in order to facilitate understanding of processing by the display apparatus 2. The present invention is not limited by the dividing way of the processing units or the names of the processing units. The processing of the display apparatus 2 can be divided into more processing units depending on the processing contents. Further, one processing unit may be further divided to include more processes.

Further, the functions of the embodiments described above may also be implemented by one or more processing circuits. Here, it is assumed that "processing circuitry" includes processors programmed to perform each function by software, such as processors implemented in electronic circuits, devices designed to perform each function as described above, such as ASICs (Application Specific Integrated Circuit), DSPs (digital signal processors), FPGAs (field programmable gate arrays), and conventional circuit modules.

Further, in an embodiment of the present invention, a threshold value may be indicated as an example as a comparison target. However, a threshold value is not limited to the indicated threshold value. Accordingly, in an embodiment of the present invention, with respect to all threshold values, "less than a threshold value" and "equal to or less than a threshold value" have an equivalent meaning, and "greater than a threshold value" and "equal to or greater than a threshold value" have an equivalent meaning. For example, in a case where a threshold value is 11, "less than the threshold value" has a meaning equivalent to "equal to or less than a threshold value" in a case where the threshold value is 10. In addition, in a case where a threshold value is 10, "greater than the threshold value" has a meaning equivalent to "equal to or greater than a threshold" in a case where the threshold value is 11.

The handwritten input unit 21 is an example of a reception unit. The handwriting recognition control unit 26 is an example of a conversion unit. The display unit 22 is an example of a display unit. The handwritten input display control unit 23 is an example of a display control unit.

Numerous additional modifications and variations are possible in light of the above teachings. It is therefore to be understood that, within the scope of the appended claims, the disclosure of this patent specification may be practiced otherwise than as specifically described herein. As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of application-specific integrated circuits or by interconnecting an appropriate network of conventional component circuits, as will be readily apparent to those skilled in the relevant art.

Each of the functions of the described embodiments may be implemented by one or more processing circuits. A processing circuit includes a programmed processor. A processing circuit also includes devices such as an application specific integrated circuit (ASIC) and conventional circuit components arranged to perform the recited functions. The processing circuitry is implemented as at least a portion of a microprocessor. The processing circuitry may be implemented using one or more circuits, one or more microprocessors, microcontrollers, application specific integrated circuits, dedicated hardware, digital signal processors, microcomputers, central processing units, field programmable gate arrays, programmable logic devices, state machines, super computers, or any combination thereof. Also, the processing circuitry may include one or more software modules executable within one or more processing circuits. The processing circuitry may further include memory configured to store instructions and/or code that causes the processing circuitry to execute functions. If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor in a computer system or other system. The machine code may be converted from the source code, etc. If embodied in hardware, each block may represent a circuit or a number of interconnected circuits to implement the specified logical function(s).

The present application is based on and claims the benefit of priority of Japanese Priority Application No. 2019-209913 filed on November 20, 2019, and Japanese Priority Application No. 2020-188229 filed on November 11, 2020, the entire contents of which are hereby incorporated by reference.

## Claims

1. A display apparatus, comprising:
a reception unit configured to receive an input of handwritten data;
a conversion unit configured to convert the handwritten data received by the reception unit into one or more character strings; and
a disply unit configured to display, in a case where the one or more character strings converted by the conversion unit include a specific character string, one or more font sets corresponding to the specific character string, wherein
one of the font sets includes a plurality of font styles, and,
the display apparatus further comprising a display control unit configured to display a character using a font style included in a font set of the font sets displayed by the display unit, the font set being selected according to an operation of a user via the reception unit.

2. The display apparatus according to claim 1, wherein
the display control unit determines a character size of the handwritten data received by the reception unit, and determines, from the plurality of font styles included in the one of the font sets, the font style used for displaying the character according to the character size.

3. The display apparatus according to claim 2, wherein
the display control unit determines the font style used for displaying the character from the plurality of the font styles included in the one of the font sets according to the character size, and displays the character using the determined font style and the character size.

4. The display apparatus according to any one of claims 1 to 3, further comprising a plurality of input unit configured to be used for performing handwritten input to a touch panel, wherein
the reception unit receives font set settings, from the font sets displayed by the display unit, for the input units together according to an operation of a user, and
the display control unit displays the character using one of the plurality of the font styles associated with the input unit used for handwriting.

5. The display apparatus according to claim 4, wherein
the display control unit determines the input unit used for the handwriting and a character size of the handwritten data, and determines, from the plurality of the font styles associated with the input unit, the font style used for displaying the character according to the character size.

6. The display apparatus according to claim 4 or 5, wherein
the plurality of font styles associated with one of the pens are same, and different character sizes are associated with the one of the pens, and
the font style is different for each of the pens.

7. The display apparatus according to claim 4 or 5, wherein
the plurality of the font styles and a character size associated with one of the pens are same, and
the character size is different for each of the pens.

8. The display apparatus according to any one of claims 1 to 7, wherein
the display control unit displays an icon associated with the font set, and
the reception unit receives a selection of the font set associated with the icon for which a selection is received.

9. A display method of a display apparatus in which a single font set includes a plurality of font styles, the display method comprising:
receiving, by a reception unit, an input of handwritten data;
converting, by a conversion unit, the handwritten data received by the reception unit into one or more character strings;
causing a display unit to display, in a case where the character strings converted by the conversion unit include a specific character string, one or more font sets corresponding to the specific character string; and
displaying, by a display control unit, a character using a font style included in a font set of the font sets displayed by the display unit, the font set being selected according to an operation of a user via the reception unit.

10. A program causing a display apparatus in which a single font set includes a plurality of font styles to perform:
receiving, by a reception unit, an input of handwritten data;
converting, by a conversion unit, the handwritten data received by the reception unit into one or more character strings;
causing a display unit to display, in a case where the character strings converted by the conversion unit include a specific character string, one or more font sets corresponding to the specific character string; and
displaying, by a display control unit, a character using a font style included in a font set of the font sets displayed by the display unit, the font set being selected according to an operation of a user via the reception unit.
